# EUROPEAN PATENT APPLICATION

(11) **EP 4 194 424 A1**
(43) Date of publication of application: **14.06.2023**
(21) Application number: 21306748.1
(22) Date of filing: 10.12.2021
(51) Int. Cl.: C04B 35/10, C04B 28/00, C04B 28/34, C04B 35/101, C04B 35/103, C04B 35/66, C04B 35/63

(54) **CASTABLE REFRACTORY COMPOSITIONS**

(71) Applicant: ImerTech SAS, 75015 Paris (FR)
(72) Inventor: MALKMUS, Patrick, 56075 Koblenz (DE); DUGUET, Sebastian, 92150 Suresnes (DE)
(74) Representative: Haseltine Lake Kempner LLP

(57) **Abstract**

A castable refractory composition comprises: a cement-free refractory particulate composition; and a sol binder; wherein the castable refractory composition comprises a metaphosphate-providing component and/or an orthophosphate-providing component.

## Description

### TECHNICAL FIELD

The present disclosure concerns castable refractory compositions, methods of making castable refractory compositions, refractory particulate compositions for use in making castable refractory compositions, sol binders for use in making castable refractory compositions, dry sol binder compositions, methods of making sol binders, method of making refractory articles, refractory articles, and uses of metaphosphate-providing components and/or orthophosphate-providing components in castable refractory compositions.

### BACKGROUND

Refractory materials are materials having properties that make them suitable for use as heat-resistant barriers at high temperatures. Refractory materials are widely used in ferrous and non-ferrous metallurgy as linings for metallurgical tanks, ladles, furnaces, crucibles, blast furnaces, hearths, vessels, vessel spouts, tundishes, reaction chambers, troughs and other equipment to protect against chemical and mechanical deformation caused by liquid metal and/or slag. Such linings can be formed using fired refractory bricks or using unshaped refractory materials known as "castables". Unlike linings assembled from individual pre-baked bricks, unshaped or castable refractory materials have the ability to form seamless linings and are often referred to as monolithic materials. Monolithic linings are typically cast in-situ from castable refractory compositions. Castable refractory materials are particularly useful as linings for cupola bottom plates and siphon refractory blocks, blast furnaces, mains, secondary and swinging troughs, and more generally tanks or troughs of tanks, casting ladles, casting troughs, reaction chambers and troughs that contain, direct the flow, or are suitable for the auxiliary industrial treatment of, liquid metals and slags or any other high temperature liquids, solids or gases.

Castable refractory compositions typically comprise a refractory particulate composition and a binder. The particles of the refractory particulate composition in the castable refractory composition may be bound together using a cement (i.e., the castable refractory composition may be a cementitious or cement-based castable refractory composition comprising cementitious material such as calcium aluminate cement (CAC) and/or calcium silicate cement (CSC)). Alternatively, castable refractory compositions may be cement-free, whereby the refractory particulate is bound together using a cement-free binder such as a sol binder. Reducing or eliminating the cement content of castable refractory compositions can improve the high-temperature properties of the castable refractory compositions. However, monolithic linings formed from cement-free castable refractory compositions can, under some circumstances, exhibit reduced resistance to metal infiltration when the linings are exposed to molten metal at elevated temperatures. Such monolithic linings may also exhibit reduced strength, such as reduced cold crushing strength, at elevated temperatures. For example, monolithic linings can exhibit a reduction in strength at temperatures around 800°C to 950°C due to the disintegration of hydrate phases (which otherwise contribute to strength below 1000°C) before temperatures are reached at which sintering of the lining material occurs. Improved cement-free castable refractory compositions would therefore be desirable.

### SUMMARY

According to a first aspect, there is provided a castable refractory composition comprising: a cement-free refractory particulate composition; and a sol binder; wherein the castable refractory composition comprises a metaphosphate-providing component and/or an orthophosphate-providing component.

The metaphosphate-providing component may be a metaphosphate salt such as aluminium metaphosphate.

The orthophosphate-providing component may be an orthophosphate salt such as aluminium orthophosphate.

The sol binder may comprise colloidal silica, optionally wherein the colloidal silica has a specific surface area no greater than about 200 m²/g, for example, no greater than about 150 m²/g.

The sol binder, prior to drying, may comprise: from about 20 wt. % to about 50 wt. %, for example, from about 30 w. % to about 50 wt. %, or from about 35 wt. % to about 45 wt. %, silica; and from about 50 wt. % to about 80 wt. %, for example, from about 50 wt. % to about 70 wt. %, or from about 55 wt. % to about 65 wt. %, water.

The sol binder may have an apparent viscosity, prior to drying of the sol binder, at 25°C and at a shear rate of 50 s⁻¹, prior to drying, of no greater than about 35 mPa·s, for example, no greater than about 30 mPa·s, or no greater than about 25 mPa·s, or no greater than about 20 mPa·s, no greater than about 15 mPa·s, or no greater than about 10 mPa·s.

The metaphosphate-providing component may be present in the castable refractory composition in an amount from about 1 wt. % to about 10 wt. %, for example, from about 3 wt. % to about 9 wt. %, based on the total weight of the castable refractory composition prior to drying.

The orthophosphate-providing component may be present in the castable refractory composition in an amount from about 1 wt. % to about 10 wt. %, for example, from about 3 wt. % to about 9 wt. %, based on the total weight of the castable refractory composition prior to drying.

The cement-free refractory particulate composition may comprise the metaphosphate-providing component and/or the orthophosphate-providing component. The cement-free refractory particulate composition may comprise refractory aggregate material such as bauxite and/or alumina, for example calcined, sintered and/or fused alumina. The cement-free refractory particulate composition may comprise no more than about 0.5 wt. %, for example, no more than about 0.1 wt. %, or no more than about 0.01 wt. %, silicon carbide. For example, the cement-free refractory particulate composition may be substantially free of silicon carbide. The cement-free refractory particulate composition may comprise no more than about 0.5 wt. %, for example, no more than about 0.1 wt. %, or no more than about 0.01 wt. %, zirconium silicate. For example, the cement-free refractory particulate composition may be substantially free of zirconium silicate. The cement-free refractory particulate composition may be substantially free of silicon carbide and zirconium silicate. The cement-free refractory particulate composition may comprise: from about 50 wt. % to about 70 wt. % of bauxite; and from about 20 wt. % to about 40 wt. % of alumina, for example, calcined, sintered and/or fused alumina. The cement-free refractory particulate composition may comprise: from about 10 wt. % to about 30 wt. % of bauxite having a particle size from about 3 mm to about 6 mm; from about 15 wt. % to about 35 wt. % of bauxite having a particle size from about 1 mm to about 3 mm; from about 5 wt. % to about 25 wt. % of bauxite having a particle size no greater than about 1 mm (e.g., from about 0 mm to about 1 mm); from about 5 wt. % to about 25 wt. % of fused alumina, for example, brown fused alumina, for example, having a particle size no greater than about 0.5 mm (e.g., from about 0 mm to about 0.5 mm); and from about 10 wt. % to about 30 wt. % of calcined alumina, for example, having a d₅₀ from about 4 µm to about 6 µm. The cement-free refractory particulate composition may comprise microsilica, for example, from about 0.1 wt. % to about 2 wt. % microsilica. The cement-free refractory particulate composition may comprise a deflocculant, for example, from about 0.01 wt. % to about 1 wt. % of a deflocculant. The cement-free refractory particulate composition may comprise a colloidal silica activator, for example, from about 0.01 wt. % to about 1 wt. % of the colloidal silica activator, optionally wherein the colloidal silica activator is magnesium oxide. The cement-free refractory particulate composition may comprise from about 2 wt. % to about 20 wt. %, for example, from about 2 wt. % to about 10 wt. %, or from about 4 wt. % to about 8 wt. %, of the metaphosphate-providing component and/or the orthophosphate-providing component.

It may be that, prior to drying of the castable refractory composition, the castable refractory composition comprises: from about 70 wt. % to about 93 wt. % of the cement-free refractory particulate composition; and from about 5 wt. % to about 15 wt. % of the sol binder; optionally wherein the castable refractory composition comprises from about 1 wt. % to about 10 wt. %, for example, from about 3 wt. % to about 9 wt. % of the metaphosphate-providing component and/or orthophosphate-providing component.

According to a second aspect, there is provided a method of making a castable refractory composition, the method comprising combining: a cement-free refractory particulate composition; and a sol binder; wherein the method comprises including a metaphosphate-providing component and/or an orthophosphate-providing component in the castable refractory composition.

The metaphosphate-providing component may be a metaphosphate salt such as aluminium metaphosphate.

The orthophosphate-providing component may be an orthophosphate salt such as aluminium orthophosphate.

The sol binder may comprise colloidal silica, optionally wherein the colloidal silica has a specific surface area no greater than about 200 m²/g, for example, no greater than about 150 m²/g. The sol binder may comprise, prior to drying: from about 20 wt. % to about 50 wt. %, for example, from about 30 w. % to about 50 wt. %, or from about 35 wt. % to about 45 wt. %, silica; and from about 50 wt. % to about 80 wt. %, for example, from about 50 wt. % to about 70 wt. %, or from about 55 wt. % to about 65 wt. %, water. The sol binder may have an apparent viscosity at 25°C and at a shear rate of 50 s⁻¹, prior to drying of the sol binder, of no greater than about 35 mPa·s, for example, no greater than about 30 mPa·s, or no greater than about 25 mPa·s, or no greater than about 20 mPa·s, or no greater than about 15 mPa·s, or no greater than about 10 mPa·s.

The metaphosphate-providing component and/or the orthophosphate-providing component may be present in the castable refractory composition in an amount from about 1 wt. % to about 10 wt. %, for example, from about 3 wt. % to about 9 wt. %, based on the total weight of the castable refractory composition prior to drying.

The cement-free refractory particulate composition may comprise the metaphosphate-providing component and/or the orthophosphate-providing component. The cement-free refractory particulate composition may comprise refractory aggregate material such as bauxite and/or alumina, for example calcined, sintered and/or fused alumina. The cement-free refractory particulate composition may comprise no more than about 0.5 wt. %, for example, no more than about 0.1 wt. %, or no more than about 0.01 wt. %, silicon carbide. For example, the cement-free refractory particulate composition may be substantially free of silicon carbide. The cement-free refractory particulate composition may comprise no more than about 0.5 wt. %, for example, no more than about 0.1 wt. %, or no more than about 0.01 wt. %, zirconium silicate. For example, the cement-free refractory particulate composition may be substantially free of zirconium silicate. The cement-free refractory particulate composition may be substantially free of silicon carbide and zirconium silicate. The cement-free refractory particulate composition may comprise: from about 50 wt. % to about 70 wt. % of bauxite; and from about 20 wt. % to about 40 wt. % of alumina, for example, calcined, sintered and/or fused alumina. The cement-free refractory particulate composition may comprise: from about 10 wt. % to about 30 wt. % of bauxite having a particle size from about 3 mm to about 6 mm; from about 15 wt. % to about 35 wt. % of bauxite having a particle size from about 1 mm to about 3 mm; from about 5 wt. % to about 25 wt. % of bauxite having a particle size no greater than about 1 mm (e.g., from about 0 mm to about 1 mm); from about 5 wt. % to about 25 wt. % of fused alumina, for example, brown fused alumina, for example, having a particle size no greater than about 0.5 mm (e.g., from about 0 mm to about 0.5 mm); and from about 10 wt. % to about 30 wt. % of calcined alumina, for example, having a d₅₀ from about 4 µm to about 6 µm. The cement-free refractory particulate composition may comprise microsilica, for example, from about 0.1 wt. % to about 2 wt. % microsilica. The cement-free refractory particulate composition may comprise a deflocculant, for example, from about 0.01 wt. % to about 1 wt. % of a deflocculant. The cement-free refractory particulate composition may comprise a colloidal silica activator, for example, from about 0.01 wt. % to about 1 wt. % of the colloidal silica activator, optionally wherein the colloidal silica activator is magnesium oxide. The cement-free refractory particulate composition may comprise from about 1 wt. % to about 20 wt. %, for example, from about 2 wt. % to about 10 wt. %, or from about 4 wt. % to about 8 wt. %, of the metaphosphate-providing component and/or the orthophosphate-providing component.

The method may comprise mixing: from about 70 wt. % to about 93 wt. % of the cement-free refractory particulate composition; and from about 5 wt. % to about 15 wt. % of the sol binder; optionally wherein the castable refractory composition comprises from about 1 wt. % to about 10 wt. %, for example, from about 3 wt. % to about 9 wt. %, of the metaphosphate-providing component and/or the orthophosphate-providing component.

In a third aspect, there is provided a sol binder for use in making the castable refractory composition according to the first aspect, the sol binder comprising a metaphosphate-providing component and/or an orthophosphate-providing component.

The metaphosphate-providing component may be a metaphosphate salt such as aluminium metaphosphate.

The orthophosphate-providing component may be an orthophosphate salt such as aluminium orthophosphate.

The sol binder may comprise colloidal silica, optionally wherein the colloidal silica has a specific surface area no greater than about 200 m²/g, for example, no greater than about 150 m²/g. The sol binder, prior to drying, may comprise: from about 20 wt. % to about 50 wt. %, for example, from about 30 w. % to about 50 wt. %, or from about 35 wt. % to about 45 wt. %, silica; and from about 50 wt. % to about 80 wt. %, for example, from about 50 wt. % to about 70 wt. %, or from about 55 wt. % to about 65 wt. %, water. The sol binder may have an apparent viscosity at 25°C and at a shear rate of 50 s⁻¹, prior to drying, of no greater than about 35 mPa·s, for example, no greater than about 30 mPa·s, or no greater than about 25 mPa·s, or no greater than about 20 mPa·s, or no greater than about 15 mPa·s, or no greater than about 10 mPa·s.

In a fourth aspect, there is provided a dry sol binder composition for use in making the sol binder according to the third aspect, the dry sol binder composition comprising: a cement-free binder; and the metaphosphate-providing component and/or the orthophosphate-providing component.

The metaphosphate-providing component may be a metaphosphate salt such as aluminium metaphosphate.

The orthophosphate-providing component may be an orthophosphate component such as aluminium orthophosphate.

The cement-free binder may be colloidal silica, for example, colloidal silica having a specific surface area no greater than about 200 m²/g, for example, no greater than about 150 m²/g.

In a fifth aspect, there is provided a method of making a sol binder, the method comprising mixing the dry sol binder composition according to the fourth aspect with water to form a sol.

In a sixth aspect, there is provided a cement-free refractory particulate composition for use in making the castable refractory composition according to the first aspect, the cement-free refractory particulate composition comprising: refractory aggregate material such as bauxite and/or alumina, for example calcined, sintered and/or fused alumina; and a metaphosphate-providing component and/or an orthophosphate-providing component.

The metaphosphate-providing component may be a metaphosphate salt such as aluminium metaphosphate.

The orthophosphate-providing component may be an orthophosphate salt such as aluminium orthophosphate.

The cement-free refractory particulate composition may be substantially free of silicon carbide. The cement-free refractory particulate composition may be substantially free of zirconium silicate. The cement-free refractory particulate composition may comprise: from about 50 wt. % to about 70 wt. % of bauxite; and from about 20 wt. % to about 40 wt. % of alumina, for example, calcined, sintered and/or fused alumina. The cement-free refractory particulate composition may comprise: from about 10 wt. % to about 30 wt. % of bauxite having a particle size from about 3 mm to about 6 mm; from about 15 wt. % to about 35 wt. % of bauxite having a particle size from about 1 mm to about 3 mm; from about 5 wt. % to about 25 wt. % of bauxite having a particle size no greater than about 1 mm (e.g., from about 0 mm to about 1 mm); from about 5 wt. % to about 25 wt. % of fused alumina, for example, brown fused alumina, for example, having a particle size no greater than about 0.5 mm (e.g., from about 0 mm to about 0.5 mm); and from about 10 wt. % to about 30 wt. % of calcined alumina, for example, having a d₅₀ from about 4 µm to about 6 µm. The cement-free refractory particulate composition may comprise microsilica, for example, from about 0.1 wt. % to about 2 wt. % microsilica. The cement-free refractory particulate composition may comprise a deflocculant, for example, from about 0.01 wt. % to about 1 wt. % of a deflocculant. The cement-free refractory particulate composition may comprise a colloidal silica activator, for example, from about 0.01 wt. % to about 1 wt. % of the colloidal silica activator, optionally wherein the colloidal silica activator is magnesium oxide. The cement-free refractory particulate composition may comprise from about 1 wt. % to about 20 wt. %, for example, from about 2 wt. % to about 10 wt. %, or from about 4 wt. % to about 8 wt. %, of the metaphosphate-providing component and/or the orthophosphate-providing component.

In a seventh aspect, there is provided a method of making a refractory article, the method comprising: forming an article from the castable refractory composition according to the first aspect or made by the method according to the second aspect; drying the article; and, optionally, firing the article.

It may be that forming the article from the castable refractory composition comprises using one or more techniques selected from casting, vibration casting, wet gunning, dry gunning, self-flowing, ramming, rodding, or patching.

The refractory article may be a monolithic refractory lining.

In an eighth aspect, there is provided a refractory article, such as a monolithic refractory lining, obtained or obtainable by the method of the seventh aspect.

It may be that the refractory article: has a modulus of rupture, MOR, measured according to DIN EN 1402-6 after heating to 800°C, of no less than about 10 MPa; has a cold crushing strength, CCS, measured according to DIN EN 1402-6after heating to 800°C, of no less than about 140 MPa; is heatable at a rate no less than about 50°C/hour, for example, during initial heating of the refractory article after installation; has a refractoriness under load, RUL, measured according to ISO 1893, of no less than about 1400°C, for example, no less than about 1500°C; is resistant to metal infiltration, such as aluminium infiltration, at temperatures of 1200°C or more; has a bulk density, measured according to DIN EN 1402-6, from about 2.80 g/cm³ to about 3.00 g/cm³; has a water absorption, measured according to DIN EN 1402-6, from about 4.5 % to about 7.0 %; and/or has an open porosity, measured according to DIN EN 1402-6, from about 10 % to about 20 %.

In a ninth aspect, there is provided a use of a metaphosphate-providing component and/or an orthophosphate-providing component in a cement-free sol-based castable refractory composition to improve resistance to metal infiltration at elevated temperatures of a refractory article formed from the cement-free sol-based castable refractory composition.

The metaphosphate-providing component may be a metaphosphate salt such as aluminium metaphosphate.

The orthophosphate-providing component may be an orthophosphate salt such as aluminium orthophosphate.

The cement-free sol-based castable refractory composition may comprise a binder sol comprising colloidal silica.

The metal may be aluminium or an aluminium alloy.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

### FIGURES

Embodiments will now be described by way of example only, with reference to the Figures, in which:
**Figure 1** is a photograph of test samples of castable refractory compositions C1, C2, C3, C4, C5, C6 and C7 following heating to 800°C; and
**Figure 2** is photograph of cross-sections taken through test crucibles formed from castable refractory compositions (a) C1, (b) C1' and (c) C7 and used as molds for molten aluminium.

### DETAILED DESCRIPTION OF THE INVENTION

It has surprisingly been found that including a metaphosphate-providing component and/or an orthophosphate-providing component in a cement-free castable refractory composition can improve properties of the cement-free castable refractory composition such as metal infiltration resistance at elevated temperatures.

### Castable refractory composition

It will be appreciated that refractory materials are materials having properties that make them suitable for use as heat-resistant barriers at high temperatures. Refractory materials are widely used in ferrous and non-ferrous metallurgy as linings for metallurgical tanks, ladles, furnaces, crucibles, blast furnaces, hearths, vessels, vessel spouts, tundishes, reaction chambers, troughs and other equipment to protect against chemical and mechanical deformation caused by liquid metal and/or slag. Such linings can be formed using fired refractory bricks or using unshaped refractory materials known as "castables". Unlike linings assembled from individual pre-baked bricks, unshaped or castable refractory materials have the ability to form seamless linings and are often referred to as monolithic materials. Monolithic linings are typically cast in-situ from castable refractory compositions. Castable refractory materials are particularly useful as linings for cupola bottom plates and siphon refractory blocks, blast furnaces, mains, secondary and swinging troughs, and more generally tanks or troughs of tanks, casting ladles, casting troughs, reaction chambers and troughs that contain, direct the flow, or are suitable for the auxiliary industrial treatment of, liquid metals and slags or any other high temperature liquids, solids or gases.

Castable refractory compositions typically comprise a refractory particulate composition and a binder. The particles of the refractory particulate composition in the castable refractory composition may be bound together using a cement as a binder (i.e., the castable refractory composition may be a cementitious or cement-based castable refractory composition comprising cementitious material such as calcium aluminate cement (CAC) and/or calcium silicate cement (CSC)). However, the present invention particularly concerns cement-free castable refractory compositions in which the refractory particulate is bound together using a cement-free binder such as a sol binder. Reducing or eliminating the cement content of castable refractory compositions tends to improve the high-temperature properties of the castable refractory compositions by reducing the CaO content and thereby reducing the generation of low-temperature melting phases such as anorthite and gehlenite.

Accordingly, the castable refractory composition of the present invention may be substantially free of cementitious material such as calcium aluminate cement (CAC) and/or calcium silicate cement (CSC). For example, the castable refractory composition may comprise no greater than about 0.5 wt. %, for example, no greater than about 0.25 wt. %, or no greater than about 0.1 wt. %, or no greater than about 0.01 wt. %, cementitious material such as CAC and/or CSC.

The (e.g., cement-free) castable refractory composition of the present invention typically comprises: a refractory particulate composition; and a sol binder. The (e.g., cement-free) castable refractory composition also comprises a metaphosphate-providing component and/or an orthophosphate-providing component. The metaphosphate-providing component and/or the orthophosphate-providing component may form part of the refractory particulate composition and/or the sol binder and/or may be provided in addition to the refractory particulate composition and the sol binder.

The (e.g., cement-free) castable refractory composition may comprise (e.g., prior to drying of the castable refractory composition) no less than about 70 wt. %, for example, no less than about 75 wt. %, or no less than about 80 wt. %, or no less than about 85 wt. %, or no less than about 90 wt. %, or no less than about 93 wt. %, of the refractory particulate composition. The (e.g., cement-free) castable refractory composition may comprise (e.g., prior to drying of the castable refractory composition) no greater than about 93 wt. %, or no greater than about 90 wt. %, or no greater than about 85 wt. %, or no greater than about 80 wt. %, or no greater than about 75 wt. %, or no greater than about 70 wt. %, of the refractory particulate composition. The (e.g., cement-free) castable refractory composition may comprise (e.g., prior to drying of the castable refractory composition) from about 70 wt. % to about 93 wt. %, for example, from about 70 wt. % to about 90 wt. %, or from about 70 wt. % to about 85 wt. %, or from about 70 wt. % to about 80 wt. %, or from about 70 wt. % to about 75 wt. %, or from about 75 wt. % to about 93 wt. %, or from about 75 wt. % to about 90 wt. %, or from about 75 wt. % to about 85 wt. %, or from about 75 wt. % to about 80 wt. %, or from about 80 wt. % to about 93 wt. %, or from about 80 wt. % to about 90 wt. %, or from about 80 wt. % to about 85 wt. %, or from about 85 wt. % to about 93 wt. %, or from about 85 wt. % to about 90 wt. %, or from about 90 wt. % to about 93 wt. %, of the refractory particulate composition.

The (e.g., cement-free) castable refractory composition may comprise (e.g., prior to drying of the castable refractory composition) no less than about 5 wt. % (e.g., no less than about 5.0 wt. %), for example, no less than about 7.5 wt. %, or no less than about 10 wt. % (e.g., no less than about 10.0 wt. %), or no less than about 12.5 wt. %, or no less than about 15 wt. % (e.g., no less than about 15.0 wt. %), of the sol binder. The (e.g., cement-free) castable refractory composition may comprise (e.g., prior to drying of the castable refractory composition) no greater than about 15 wt. % (e.g., no greater than about 15.0 wt. %), for example, no greater than about 12.5 wt. %, or no greater than about 10 wt. % (e.g., no greater than about 10.0 wt. %), or no greater than about 7.5 wt. %, or no greater than about 5 wt. % (e.g., no greater than about 5.0 wt. %), of the sol binder. The (e.g., cement-free) castable refractory composition may comprise (e.g., prior to drying of the castable refractory composition) from about 5 wt. % to about 15 wt. % (e.g., from about 5.0 wt. % to about 15.0 wt. %), for example, from about 5 wt. % to about 12.5 wt. % (e.g., from about 5.0 wt. % to about 12.5 wt. %), or from about 5 wt. % to about 10 wt. % (e.g., from about 5.0 wt. % to about 10.0 wt. %), or from about 5 wt. % to about 7.5 wt. % (e.g., from about 5.0 wt. % to about 7.5 wt. %), or from about 7.5 wt. % to about 15 wt. % (e.g., from about 7.5 wt. % to about 15.0 wt. %), or from about 7.5 wt. % to about 12.5 wt. % (e.g., from about 7.5 wt. % to about 12.5 wt. %), or from about 7.5 wt. % to about 10 wt. % (e.g., from about 7.5 wt. % to about 10.0 wt. %), or from about 10 wt. % to about 15 wt. % (e.g., from about 10.0 wt. % to about 15.0 wt. %), or from about 10 wt. % to about 12.5 wt. % (e.g., from about 10.0 wt. % to about 12.5 wt. %), or from about 12.5 wt. % to about 15 wt. % (e.g., from about 12.5 wt. % to about 15.0 wt. %), of the sol binder.

The (e.g., cement-free) castable refractory composition may comprise (e.g., prior to drying of the castable refractory composition) no less than about 2 wt. % (e.g., no less than about 2.0 wt. %), for example, no less than about 3 wt. % (e.g., no less than about 3.0 wt. %), or no less than about 4 wt. % (e.g., no less than about 4.0 wt. %), or no less than about 5 wt. % (e.g., no less than about 5.0 wt. %), or no less than about 6 wt. % (e.g., no less than about 6.0 wt. %), of the metaphosphate-providing component and/or the orthophosphate-providing component. The (e.g., cement-free) castable refractory composition may comprise (e.g., prior to drying of the castable refractory composition) no greater than about 20 wt. % (e.g., no more than about 20.0 wt. %), for example, no greater than about 15 wt. % (e.g., no more than about 15.0 wt. %), or no greater than about 12 wt. % (e.g., no more than about 12.0 wt. %), or no greater than about 11 wt. % (e.g., no more than about 11.0 wt. %), or no greater than about 10 wt. % (e.g., no more than about 10.0 wt. %), or no greater than about 9 wt. % (e.g., no more than about 9.0 wt. %), or no greater than about 8 wt. % (e.g., no more than about 8.0 wt. %), or no greater than about 7 wt. % (e.g., no more than about 7.0 wt. %), or no greater than about 6 wt. % (e.g., no more than about 6.0 wt. %), of the metaphosphate-providing component and/or the orthophosphate-providing component. The (e.g., cement-free) castable refractory composition may comprise (e.g., prior to drying of the castable refractory composition) from about 2 wt. % to about 20 wt. % (e.g., from about 2.0 wt. % to about 20.0 wt. %), for example, from about 2 wt. % to about 15 wt. % (e.g., from about 2.0 wt. % to about 15.0 wt. %), or from about 2 wt. % to about 12 wt. % (e.g., from about 2.0 wt. % to about 12.0 wt. %), or from about 2 wt. % to about 11 wt. % (e.g., from about 2.0 wt. % to about 11.0 wt. %), or from about 2 wt. % to about 10 wt. % (e.g., from about 2.0 wt. % to about 10.0 wt. %), or from about 2 wt. % to about 9 wt. % (e.g., from about 2.0 wt. % to about 9.0 wt. %), or from about 2 wt. % to about 8 wt. % (e.g., from about 2.0 wt. % to about 8.0 wt. %), or from about 2 wt. % to about 7 wt. % (e.g., from about 2.0 wt. % to about 7.0 wt. %), or from about 2 wt. % to about 6 wt. % (e.g., from about 2.0 wt. % to about 6.0 wt. %), or from about 3 wt. % to about 20 wt. % (e.g., from about 3.0 wt. % to about 20.0 wt. %), or from about 3 wt. % to about 15 wt. % (e.g., from about 3.0 wt. % to about 15.0 wt. %), or from about 3 wt. % to about 12 wt. % (e.g., from about 3.0 wt. % to about 12.0 wt. %), or from about 3 wt. % to about 11 wt. % (e.g., from about 3.0 wt. % to about 11.0 wt. %), or from about 3 wt. % to about 10 wt. % (e.g., from about 3.0 wt. % to about 10.0 wt. %), or from about 3 wt. % to about 9 wt. % (e.g., from about 3.0 wt. % to about 9.0 wt. %), or from about 3 wt. % to about 8 wt. % (e.g., from about 3.0 wt. % to about 8.0 wt. %), or from about 3 wt. % to about 7 wt. % (e.g., from about 3.0 wt. % to about 7.0 wt. %), or from about 3 wt. % to about 6 wt. % (e.g., from about 3.0 wt. % to about 6.0 wt. %), or from about 4 wt. % to about 20 wt. % (e.g., from about 4.0 wt. % to about 20.0 wt. %), or from about 4 wt. % to about 15 wt. % (e.g., from about 4.0 wt. % to about 15.0 wt. %), or from about 4 wt. % to about 12 wt. % (e.g., from about 4.0 wt. % to about 12.0 wt. %), or from about 4 wt. % to about 11 wt. % (e.g., from about 4.0 wt. % to about 11.0 wt. %), or from about 4 wt. % to about 10 wt. % (e.g., from about 4.0 wt. % to about 10.0 wt. %), or from about 4 wt. % to about 9 wt. % (e.g., from about 4.0 wt. % to about 9.0 wt. %), or from about 4 wt. % to about 8 wt. % (e.g., from about 4.0 wt. % to about 8.0 wt. %), or from about 4 wt. % to about 7 wt. % (e.g., from about 4.0 wt. % to about 7.0 wt. %), or from about 4 wt. % to about 6 wt. % (e.g., from about 4.0 wt. % to about 6.0 wt. %), or from about 5 wt. % to about 20 wt. % (e.g., from about 5.0 wt. % to about 20.0 wt. %), or from about 5 wt. % to about 15 wt. % (e.g., from about 5.0 wt. % to about 15.0 wt. %), or from about 5 wt. % to about 12 wt. % (e.g., from about 5.0 wt. % to about 12.0 wt. %), or from about 5 wt. % to about 11 wt. % (e.g., from about 5.0 wt. % to about 11.0 wt. %), or from about 5 wt. % to about 10 wt. % (e.g., from about 5.0 wt. % to about 10.0 wt. %), or from about 5 wt. % to about 9 wt. % (e.g., from about 5.0 wt. % to about 9.0 wt. %), or from about 5 wt. % to about 8 wt. % (e.g., from about 5.0 wt. % to about 8.0 wt. %), or from about 5 wt. % to about 7 wt. % (e.g., from about 5.0 wt. % to about 7.0 wt. %), or from about 5 wt. % to about 6 wt. % (e.g., from about 5.0 wt. % to about 6.0 wt. %), or from about 6 wt. % to about 20 wt. % (e.g., from about 6.0 wt. % to about 20.0 wt. %), or from about 6 wt. % to about 15 wt. % (e.g., from about 6.0 wt. % to about 15.0 wt. %), or from about 6 wt. % to about 12 wt. % (e.g., from about 6.0 wt. % to about 12.0 wt. %), or from about 6 wt. % to about 11 wt. % (e.g., from about 6.0 wt. % to about 11.0 wt. %), or from about 6 wt. % to about 10 wt. % (e.g., from about 6.0 wt. % to about 10.0 wt. %), or from about 6 wt. % to about 9 wt. % (e.g., from about 6.0 wt. % to about 9.0 wt. %), or from about 6 wt. % to about 8 wt. % (e.g., from about 6.0 wt. % to about 8.0 wt. %), or from about 6 wt. % to about 7 wt. % (e.g., from about 6.0 wt. % to about 7.0 wt. %), of the metaphosphate-providing component and/or the orthophosphate-providing component.

The (e.g., cement-free) castable refractory composition may comprise (e.g., prior to drying of the castable refractory composition) no less than about 2 wt. % (e.g., no less than about 2.0 wt. %), for example, no less than about 3 wt. % (e.g., no less than about 3.0 wt. %), or no less than about 4 wt. % (e.g., no less than about 4.0 wt. %), or no less than about 5 wt. % (e.g., no less than about 5.0 wt. %), or no less than about 6 wt. % (e.g., no less than about 6.0 wt. %), of the metaphosphate-providing component. The (e.g., cement-free) castable refractory composition may comprise (e.g., prior to drying of the castable refractory composition) no greater than about 20 wt. % (e.g., no more than about 20.0 wt. %), for example, no greater than about 15 wt. % (e.g., no more than about 15.0 wt. %), or no greater than about 12 wt. % (e.g., no more than about 12.0 wt. %), or no greater than about 11 wt. % (e.g., no more than about 11.0 wt. %), or no greater than about 10 wt. % (e.g., no more than about 10.0 wt. %), or no greater than about 9 wt. % (e.g., no more than about 9.0 wt. %), or no greater than about 8 wt. % (e.g., no more than about 8.0 wt. %), or no greater than about 7 wt. % (e.g., no more than about 7.0 wt. %), or no greater than about 6 wt. % (e.g., no more than about 6.0 wt. %), of the metaphosphate-providing component. The (e.g., cement-free) castable refractory composition may comprise (e.g., prior to drying of the castable refractory composition) from about 2 wt. % to about 20 wt. % (e.g., from about 2.0 wt. % to about 20.0 wt. %), for example, from about 2 wt. % to about 15 wt. % (e.g., from about 2.0 wt. % to about 15.0 wt. %), or from about 2 wt. % to about 12 wt. % (e.g., from about 2.0 wt. % to about 12.0 wt. %), or from about 2 wt. % to about 11 wt. % (e.g., from about 2.0 wt. % to about 11.0 wt. %), or from about 2 wt. % to about 10 wt. % (e.g., from about 2.0 wt. % to about 10.0 wt. %), or from about 2 wt. % to about 9 wt. % (e.g., from about 2.0 wt. % to about 9.0 wt. %), or from about 2 wt. % to about 8 wt. % (e.g., from about 2.0 wt. % to about 8.0 wt. %), or from about 2 wt. % to about 7 wt. % (e.g., from about 2.0 wt. % to about 7.0 wt. %), or from about 2 wt. % to about 6 wt. % (e.g., from about 2.0 wt. % to about 6.0 wt. %), or from about 3 wt. % to about 20 wt. % (e.g., from about 3.0 wt. % to about 20.0 wt. %), or from about 3 wt. % to about 15 wt. % (e.g., from about 3.0 wt. % to about 15.0 wt. %), or from about 3 wt. % to about 12 wt. % (e.g., from about 3.0 wt. % to about 12.0 wt. %), or from about 3 wt. % to about 11 wt. % (e.g., from about 3.0 wt. % to about 11.0 wt. %), or from about 3 wt. % to about 10 wt. % (e.g., from about 3.0 wt. % to about 10.0 wt. %), or from about 3 wt. % to about 9 wt. % (e.g., from about 3.0 wt. % to about 9.0 wt. %), or from about 3 wt. % to about 8 wt. % (e.g., from about 3.0 wt. % to about 8.0 wt. %), or from about 3 wt. % to about 7 wt. % (e.g., from about 3.0 wt. % to about 7.0 wt. %), or from about 3 wt. % to about 6 wt. % (e.g., from about 3.0 wt. % to about 6.0 wt. %), or from about 4 wt. % to about 20 wt. % (e.g., from about 4.0 wt. % to about 20.0 wt. %), or from about 4 wt. % to about 15 wt. % (e.g., from about 4.0 wt. % to about 15.0 wt. %), or from about 4 wt. % to about 12 wt. % (e.g., from about 4.0 wt. % to about 12.0 wt. %), or from about 4 wt. % to about 11 wt. % (e.g., from about 4.0 wt. % to about 11.0 wt. %), or from about 4 wt. % to about 10 wt. % (e.g., from about 4.0 wt. % to about 10.0 wt. %), or from about 4 wt. % to about 9 wt. % (e.g., from about 4.0 wt. % to about 9.0 wt. %), or from about 4 wt. % to about 8 wt. % (e.g., from about 4.0 wt. % to about 8.0 wt. %), or from about 4 wt. % to about 7 wt. % (e.g., from about 4.0 wt. % to about 7.0 wt. %), or from about 4 wt. % to about 6 wt. % (e.g., from about 4.0 wt. % to about 6.0 wt. %), or from about 5 wt. % to about 20 wt. % (e.g., from about 5.0 wt. % to about 20.0 wt. %), or from about 5 wt. % to about 15 wt. % (e.g., from about 5.0 wt. % to about 15.0 wt. %), or from about 5 wt. % to about 12 wt. % (e.g., from about 5.0 wt. % to about 12.0 wt. %), or from about 5 wt. % to about 11 wt. % (e.g., from about 5.0 wt. % to about 11.0 wt. %), or from about 5 wt. % to about 10 wt. % (e.g., from about 5.0 wt. % to about 10.0 wt. %), or from about 5 wt. % to about 9 wt. % (e.g., from about 5.0 wt. % to about 9.0 wt. %), or from about 5 wt. % to about 8 wt. % (e.g., from about 5.0 wt. % to about 8.0 wt. %), or from about 5 wt. % to about 7 wt. % (e.g., from about 5.0 wt. % to about 7.0 wt. %), or from about 5 wt. % to about 6 wt. % (e.g., from about 5.0 wt. % to about 6.0 wt. %), or from about 6 wt. % to about 20 wt. % (e.g., from about 6.0 wt. % to about 20.0 wt. %), or from about 6 wt. % to about 15 wt. % (e.g., from about 6.0 wt. % to about 15.0 wt. %), or from about 6 wt. % to about 12 wt. % (e.g., from about 6.0 wt. % to about 12.0 wt. %), or from about 6 wt. % to about 11 wt. % (e.g., from about 6.0 wt. % to about 11.0 wt. %), or from about 6 wt. % to about 10wt. % (e.g., from about 6.0 wt. % to about 10.0 wt. %), or from about 6 wt. % to about 9 wt. % (e.g., from about 6.0 wt. % to about 9.0 wt. %), or from about 6 wt. % to about 8 wt. % (e.g., from about 6.0 wt. % to about 8.0 wt. %), or from about 6 wt. % to about 7 wt. % (e.g., from about 6.0 wt. % to about 7.0 wt. %), of the metaphosphate-providing component.

The (e.g., cement-free) castable refractory composition may comprise (e.g., prior to drying of the castable refractory composition) no less than about 2 wt. % (e.g., no less than about 2.0 wt. %), for example, no less than about 3 wt. % (e.g., no less than about 3.0 wt. %), or no less than about 4 wt. % (e.g., no less than about 4.0 wt. %), or no less than about 5 wt. % (e.g., no less than about 5.0 wt. %), or no less than about 6 wt. % (e.g., no less than about 6.0 wt. %), of the orthophosphate-providing component. The (e.g., cement-free) castable refractory composition may comprise (e.g., prior to drying of the castable refractory composition) no greater than about 20 wt. % (e.g., no more than about 20.0 wt. %), for example, no greater than about 15 wt. % (e.g., no more than about 15.0 wt. %), or no greater than about 12 wt. % (e.g., no more than about 12.0 wt. %), or no greater than about 11 wt. % (e.g., no more than about 11.0 wt. %), or no greater than about 10 wt. % (e.g., no more than about 10.0 wt. %), or no greater than about 9 wt. % (e.g., no more than about 9.0 wt. %), or no greater than about 8 wt. % (e.g., no more than about 8.0 wt. %), or no greater than about 7 wt. % (e.g., no more than about 7.0 wt. %), or no greater than about 6 wt. % (e.g., no more than about 6.0 wt. %), of the orthophosphate-providing component. The (e.g., cement-free) castable refractory composition may comprise (e.g., prior to drying of the castable refractory composition) from about 2 wt. % to about 20 wt. % (e.g., from about 2.0 wt. % to about 20.0 wt. %), for example, from about 2 wt. % to about 15 wt. % (e.g., from about 2.0 wt. % to about 15.0 wt. %), or from about 2 wt. % to about 12 wt. % (e.g., from about 2.0 wt. % to about 12.0 wt. %), or from about 2 wt. % to about 11 wt. % (e.g., from about 2.0 wt. % to about 11.0 wt. %), or from about 2 wt. % to about 10 wt. % (e.g., from about 2.0 wt. % to about 10.0 wt. %), or from about 2 wt. % to about 9 wt. % (e.g., from about 2.0 wt. % to about 9.0 wt. %), or from about 2 wt. % to about 8 wt. % (e.g., from about 2.0 wt. % to about 8.0 wt. %), or from about 2 wt. % to about 7 wt. % (e.g., from about 2.0 wt. % to about 7.0 wt. %), or from about 2 wt. % to about 6 wt. % (e.g., from about 2.0 wt. % to about 6.0 wt. %), or from about 3 wt. % to about 20 wt. % (e.g., from about 3.0 wt. % to about 20.0 wt. %), or from about 3 wt. % to about 15 wt. % (e.g., from about 3.0 wt. % to about 15.0 wt. %), or from about 3 wt. % to about 12 wt. % (e.g., from about 3.0 wt. % to about 12.0 wt. %), or from about 3 wt. % to about 11 wt. % (e.g., from about 3.0 wt. % to about 11.0 wt. %), or from about 3 wt. % to about 10 wt. % (e.g., from about 3.0 wt. % to about 10.0 wt. %), or from about 3 wt. % to about 9 wt. % (e.g., from about 3.0 wt. % to about 9.0 wt. %), or from about 3 wt. % to about 8 wt. % (e.g., from about 3.0 wt. % to about 8.0 wt. %), or from about 3 wt. % to about 7 wt. % (e.g., from about 3.0 wt. % to about 7.0 wt. %), or from about 3 wt. % to about 6 wt. % (e.g., from about 3.0 wt. % to about 6.0 wt. %), or from about 4 wt. % to about 20 wt. % (e.g., from about 4.0 wt. % to about 20.0 wt. %), or from about 4 wt. % to about 15 wt. % (e.g., from about 4.0 wt. % to about 15.0 wt. %), or from about 4 wt. % to about 12 wt. % (e.g., from about 4.0 wt. % to about 12.0 wt. %), or from about 4 wt. % to about 11 wt. % (e.g., from about 4.0 wt. % to about 11.0 wt. %), or from about 4 wt. % to about 10 wt. % (e.g., from about 4.0 wt. % to about 10.0 wt. %), or from about 4 wt. % to about 9 wt. % (e.g., from about 4.0 wt. % to about 9.0 wt. %), or from about 4 wt. % to about 8 wt. % (e.g., from about 4.0 wt. % to about 8.0 wt. %), or from about 4 wt. % to about 7 wt. % (e.g., from about 4.0 wt. % to about 7.0 wt. %), or from about 4 wt. % to about 6 wt. % (e.g., from about 4.0 wt. % to about 6.0 wt. %), or from about 5 wt. % to about 20 wt. % (e.g., from about 5.0 wt. % to about 20.0 wt. %), or from about 5 wt. % to about 15 wt. % (e.g., from about 5.0 wt. % to about 15.0 wt. %), or from about 5 wt. % to about 12 wt. % (e.g., from about 5.0 wt. % to about 12.0 wt. %), or from about 5 wt. % to about 11 wt. % (e.g., from about 5.0 wt. % to about 11.0 wt. %), or from about 5 wt. % to about 10 wt. % (e.g., from about 5.0 wt. % to about 10.0 wt. %), or from about 5 wt. % to about 9 wt. % (e.g., from about 5.0 wt. % to about 9.0 wt. %), or from about 5 wt. % to about 8 wt. % (e.g., from about 5.0 wt. % to about 8.0 wt. %), or from about 5 wt. % to about 7 wt. % (e.g., from about 5.0 wt. % to about 7.0 wt. %), or from about 5 wt. % to about 6 wt. % (e.g., from about 5.0 wt. % to about 6.0 wt. %), or from about 6 wt. % to about 20 wt. % (e.g., from about 6.0 wt. % to about 20.0 wt. %), or from about 6 wt. % to about 15wt. % (e.g., from about 6.0 wt. % to about 15.0 wt. %), or from about 6 wt. % to about 12 wt. % (e.g., from about 6.0 wt. % to about 12.0 wt. %), or from about 6 wt. % to about 11 wt. % (e.g., from about 6.0 wt. % to about 11.0 wt. %), or from about 6 wt. % to about 10wt. % (e.g., from about 6.0 wt. % to about 10.0 wt. %), or from about 6 wt. % to about 9 wt. % (e.g., from about 6.0 wt. % to about 9.0 wt. %), or from about 6 wt. % to about 8 wt. % (e.g., from about 6.0 wt. % to about 8.0 wt. %), or from about 6 wt. % to about 7 wt. % (e.g., from about 6.0 wt. % to about 7.0 wt. %), of the orthophosphate-providing component.

The (e.g., cement-free) castable refractory composition may comprise (e.g., prior to drying of the castable refractory composition) no less than about 2 wt. % (e.g., no less than about 2.0 wt. %), for example, no less than about 3 wt. % (e.g., no less than about 3.0 wt. %), or no less than about 4 wt. % (e.g., no less than about 4.0 wt. %), or no less than about 5 wt. % (e.g., no less than about 5.0 wt. %), or no less than about 6 wt. % (e.g., no less than about 6.0 wt. %), of the metaphosphate-providing component and the orthophosphate-providing component in combination (i.e., of the total content of the metaphosphate-providing component and the orthophosphate-providing component taken together). The (e.g., cement-free) castable refractory composition may comprise (e.g., prior to drying of the castable refractory composition) no greater than about 20 wt. % (e.g., no more than about 20.0 wt. %), for example, no greater than about 15 wt. % (e.g., no more than about 15.0 wt. %), or no greater than about 12 wt. % (e.g., no more than about 12.0 wt. %), or no greater than about 11 wt. % (e.g., no more than about 11.0 wt. %), or no greater than about 10 wt. % (e.g., no more than about 10.0 wt. %), or no greater than about 9 wt. % (e.g., no more than about 9.0 wt. %), or no greater than about 8 wt. % (e.g., no more than about 8.0 wt. %), or no greater than about 7 wt. % (e.g., no more than about 7.0 wt. %), or no greater than about 6 wt. % (e.g., no more than about 6.0 wt. %), of the metaphosphate-providing component and the orthophosphate-providing component in combination (i.e., of the total content of the metaphosphate-providing component and the orthophosphate-providing component taken together).

The (e.g., cement-free) castable refractory composition may comprise (e.g., prior to drying of the castable refractory composition) from about 2 wt. % to about 20 wt. % (e.g., from about 2.0 wt. % to about 20.0 wt. %), for example, from about 2 wt. % to about 15 wt. % (e.g., from about 2.0 wt. % to about 15.0 wt. %), or from about 2 wt. % to about 12 wt. % (e.g., from about 2.0 wt. % to about 12.0 wt. %), or from about 2 wt. % to about 11 wt. % (e.g., from about 2.0 wt. % to about 11.0 wt. %), or from about 2 wt. % to about 10 wt. % (e.g., from about 2.0 wt. % to about 10.0 wt. %), or from about 2 wt. % to about 9 wt. % (e.g., from about 2.0 wt. % to about 9.0 wt. %), or from about 2 wt. % to about 8 wt. % (e.g., from about 2.0 wt. % to about 8.0 wt. %), or from about 2 wt. % to about 7 wt. % (e.g., from about 2.0 wt. % to about 7.0 wt. %), or from about 2 wt. % to about 6 wt. % (e.g., from about 2.0 wt. % to about 6.0 wt. %), or from about 3 wt. % to about 20 wt. % (e.g., from about 3.0 wt. % to about 20.0 wt. %), or from about 3 wt. % to about 15 wt. % (e.g., from about 3.0 wt. % to about 15.0 wt. %), or from about 3 wt. % to about 12 wt. % (e.g., from about 3.0 wt. % to about 12.0 wt. %), or from about 3 wt. % to about 11 wt. % (e.g., from about 3.0 wt. % to about 11.0 wt. %), or from about 3 wt. % to about 10 wt. % (e.g., from about 3.0 wt. % to about 10.0 wt. %), or from about 3 wt. % to about 9 wt. % (e.g., from about 3.0 wt. % to about 9.0 wt. %), or from about 3 wt. % to about 8 wt. % (e.g., from about 3.0 wt. % to about 8.0 wt. %), or from about 3 wt. % to about 7 wt. % (e.g., from about 3.0 wt. % to about 7.0 wt. %), or from about 3 wt. % to about 6 wt. % (e.g., from about 3.0 wt. % to about 6.0 wt. %), or from about 4 wt. % to about 20 wt. % (e.g., from about 4.0 wt. % to about 20.0 wt. %), or from about 4 wt. % to about 15 wt. % (e.g., from about 4.0 wt. % to about 15.0 wt. %), or from about 4 wt. % to about 12 wt. % (e.g., from about 4.0 wt. % to about 12.0 wt. %), or from about 4 wt. % to about 11 wt. % (e.g., from about 4.0 wt. % to about 11.0 wt. %), or from about 4 wt. % to about 10 wt. % (e.g., from about 4.0 wt. % to about 10.0 wt. %), or from about 4 wt. % to about 9 wt. % (e.g., from about 4.0 wt. % to about 9.0 wt. %), or from about 4 wt. % to about 8 wt. % (e.g., from about 4.0 wt. % to about 8.0 wt. %), or from about 4 wt. % to about 7 wt. % (e.g., from about 4.0 wt. % to about 7.0 wt. %), or from about 4 wt. % to about 6 wt. % (e.g., from about 4.0 wt. % to about 6.0 wt. %), or from about 5 wt. % to about 20 wt. % (e.g., from about 5.0 wt. % to about 20.0 wt. %), or from about 5 wt. % to about 15 wt. % (e.g., from about 5.0 wt. % to about 15.0 wt. %), or from about 5 wt. % to about 12 wt. % (e.g., from about 5.0 wt. % to about 12.0 wt. %), or from about 5 wt. % to about 11 wt. % (e.g., from about 5.0 wt. % to about 11.0 wt. %), or from about 5 wt. % to about 10 wt. % (e.g., from about 5.0 wt. % to about 10.0 wt. %), or from about 5 wt. % to about 9 wt. % (e.g., from about 5.0 wt. % to about 9.0 wt. %), or from about 5 wt. % to about 8 wt. % (e.g., from about 5.0 wt. % to about 8.0 wt. %), or from about 5 wt. % to about 7 wt. % (e.g., from about 5.0 wt. % to about 7.0 wt. %), or from about 5 wt. % to about 6 wt. % (e.g., from about 5.0 wt. % to about 6.0 wt. %), or from about 6 wt. % to about 20 wt. % (e.g., from about 6.0 wt. % to about 20.0 wt. %), or from about 6 wt. % to about 15 wt. % (e.g., from about 6.0 wt. % to about 15.0 wt. %), or from about 6 wt. % to about 12 wt. % (e.g., from about 6.0 wt. % to about 12.0 wt. %), or from about 6 wt. % to about 11 wt. % (e.g., from about 6.0 wt. % to about 11.0 wt. %), or from about 6 wt. % to about 10 wt. % (e.g., from about 6.0 wt. % to about 10.0 wt. %), or from about 6 wt. % to about 9 wt. % (e.g., from about 6.0 wt. % to about 9.0 wt. %), or from about 6 wt. % to about 8 wt. % (e.g., from about 6.0 wt. % to about 8.0 wt. %), or from about 6 wt. % to about 7 wt. % (e.g., from about 6.0 wt. % to about 7.0 wt. %), of the metaphosphate-providing component and the orthophosphate-providing component in combination (i.e., of the total content of the metaphosphate-providing component and the orthophosphate-providing component taken together).

In some embodiments, the (e.g., cement-free) castable refractory composition comprises a metaphosphate-providing component and does not comprise an orthophosphate-providing component, i.e., the (e.g., cement-free) castable refractory composition is substantially free of orthophosphate-providing components. For example, the (e.g., cement-free) castable refractory composition may be substantially free of phosphate-providing components other than metaphosphate-providing components. e.g., i.e., For example, the (e.g., cement-free) castable refractory composition may be substantially free of orthophosphate salts such as trisodium phosphate (Na₃PO₄, also known as sodium orthophosphate or trisodium orthophosphate), tripotassium phosphate (K₃PO₄, also known as potassium orthophosphate or tripotassium orthophosphate) or aluminium phosphate (AlPO₄, also known as aluminium orthophosphate). The (e.g., cement-free) castable refractory composition may comprise no greater than about 0.5 wt. %, for example, no greater than about 0.25 wt. %, or no greater than about 0.1 wt. %, or no greater than about 0.01 wt. %, of phosphate-providing components other than metaphosphate-providing components. The (e.g., cement-free) castable refractory composition may comprise no greater than about 0.5 wt. %, for example, no greater than about 0.25 wt. %, or no greater than about 0.1 wt. %, or no greater than about 0.01 wt. %, of orthophosphate-providing components. The (e.g., cement-free) castable refractory composition may comprise no greater than about 0.5 wt. %, for example, no greater than about 0.25 wt. %, or no greater than about 0.1 wt. %, or no greater than about 0.01 wt. %, of orthophosphate salts such as Na₃PO₄, K₃PO₄ or AlPO₄.

In some embodiments, the (e.g., cement-free) castable refractory composition comprises an orthophosphate-providing component and does not comprise a metaphosphate-providing component, i.e., the (e.g., cement-free) castable refractory composition is substantially free of metaphosphate-providing components. For example, the (e.g., cement-free) castable refractory composition may be substantially free of phosphate-providing components other than orthophosphate-providing components. For example, the (e.g., cement-free) castable refractory composition may be substantially free of metaphosphate salts such as sodium metaphosphate (NaPO₃), potassium metaphosphate (KPO₃) or aluminium metaphosphate (Al(PO₃)₃). The (e.g., cement-free) castable refractory composition may comprise no greater than about 0.5 wt. %, for example, no greater than about 0.25 wt. %, or no greater than about 0.1 wt. %, or no greater than about 0.01 wt. %, of phosphate-providing components other than orthophosphate-providing components. The (e.g., cement-free) castable refractory composition may comprise no greater than about 0.5 wt. %, for example, no greater than about 0.25 wt. %, or no greater than about 0.1 wt. %, or no greater than about 0.01 wt. %, of metaphosphate-providing components. The (e.g., cement-free) castable refractory composition may comprise no greater than about 0.5 wt. %, for example, no greater than about 0.25 wt. %, or no greater than about 0.1 wt. %, or no greater than about 0.01 wt. %, of metaphosphate salts such as NaPO₃, KPO₃ or Al(PO₃)₃.

In some embodiments, the (e.g., cement-free) castable refractory composition comprises a metaphosphate-providing component and an orthophosphate-providing component. The (e.g., cement-free) castable refractory composition may be substantially free of phosphate-providing components other than metaphosphate-providing components or orthophosphate-providing components. For example, the (e.g., cement-free) castable refractory composition may be substantially free of pyrophosphate-providing components. The (e.g., cement-free) castable refractory composition may comprise no greater than about 0.5 wt. %, for example, no greater than about 0.25 wt. %, or no greater than about 0.1 wt. %, or no greater than about 0.01 wt. %, of phosphate-providing components other than metaphosphate-providing components or orthophosphate-providing components.

The (e.g., cement-free) castable refractory composition may comprise (e.g., prior to drying of the castable refractory composition): from about 70 wt. % to about 93 wt. %, for example, from about 70 wt. % to about 90 wt. %, or from about 70 wt. % to about 85 wt. %, or from about 70 wt. % to about 80 wt. %, or from about 70 wt. % to about 75 wt. %, or from about 75 wt. % to about 93 wt. %, or from about 75 wt. % to about 90 wt. %, or from about 75 wt. % to about 85 wt. %, or from about 75 wt. % to about 80 wt. %, or from about 80 wt. % to about 93 wt. %, or from about 80 wt. % to about 90 wt. %, or from about 80 wt. % to about 85 wt. %, or from about 85 wt. % to about 93 wt. %, or from about 85 wt. % to about 90 wt. %, or from about 90 wt. % to about 93 wt. %, of the refractory particulate composition; from about 5 wt. % to about 15 wt. %, for example, from about 5 wt. % to about 12.5 wt. %, or from about 5 wt. % to about 10 wt. %, or from about 5 wt. % to about 7.5 wt. %, or from about 7.5 wt. % to about 15 wt. %, or from about 7.5 wt. % to about 12.5 wt. %, or from about 7.5 wt. % to about 10 wt. %, or from about 10 wt. % to about 15 wt. %, or from about 10 wt. % to about 12.5 wt. %, or from about 12.5 wt. % to about 15 wt. %, of the sol binder; and from about 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from about 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the metaphosphate-providing component and/or the orthophosphate-providing component (which may form part of the refractory particulate composition and/or the binder sol).

The (e.g., cement-free) castable refractory composition may comprise (e.g., prior to drying of the castable refractory composition): from about 70 wt. % to about 93 wt. %, for example, from about 70 wt. % to about 90 wt. %, or from about 70 wt. % to about 85 wt. %, or from about 70 wt. % to about 80 wt. %, or from about 70 wt. % to about 75 wt. %, or from about 75 wt. % to about 93 wt. %, or from about 75 wt. % to about 90 wt. %, or from about 75 wt. % to about 85 wt. %, or from about 75 wt. % to about 80 wt. %, or from about 80 wt. % to about 93 wt. %, or from about 80 wt. % to about 90 wt. %, or from about 80 wt. % to about 85 wt. %, or from about 85 wt. % to about 93 wt. %, or from about 85 wt. % to about 90 wt. %, or from about 90 wt. % to about 93 wt. %, of the refractory particulate composition; from about 5 wt. % to about 15 wt. %, for example, from about 5 wt. % to about 12.5 wt. %, or from about 5 wt. % to about 10 wt. %, or from about 5 wt. % to about 7.5 wt. %, or from about 7.5 wt. % to about 15 wt. %, or from about 7.5 wt. % to about 12.5 wt. %, or from about 7.5 wt. % to about 10 wt. %, or from about 10 wt. % to about 15 wt. %, or from about 10 wt. % to about 12.5 wt. %, or from about 12.5 wt. % to about 15 wt. %, of the sol binder; and from about 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from about 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the metaphosphate-providing component (which may form part of the refractory particulate composition and/or the binder sol).

The (e.g., cement-free) castable refractory composition may comprise (e.g., prior to drying of the castable refractory composition): from about 70 wt. % to about 93 wt. %, for example, from about 70 wt. % to about 90 wt. %, or from about 70 wt. % to about 85 wt. %, or from about 70 wt. % to about 80 wt. %, or from about 70 wt. % to about 75 wt. %, or from about 75 wt. % to about 93 wt. %, or from about 75 wt. % to about 90 wt. %, or from about 75 wt. % to about 85 wt. %, or from about 75 wt. % to about 80 wt. %, or from about 80 wt. % to about 93 wt. %, or from about 80 wt. % to about 90 wt. %, or from about 80 wt. % to about 85 wt. %, or from about 85 wt. % to about 93 wt. %, or from about 85 wt. % to about 90 wt. %, or from about 90 wt. % to about 93 wt. %, of the refractory particulate composition; from about 5 wt. % to about 15 wt. %, for example, from about 5 wt. % to about 12.5 wt. %, or from about 5 wt. % to about 10 wt. %, or from about 5 wt. % to about 7.5 wt. %, or from about 7.5 wt. % to about 15 wt. %, or from about 7.5 wt. % to about 12.5 wt. %, or from about 7.5 wt. % to about 10 wt. %, or from about 10 wt. % to about 15 wt. %, or from about 10 wt. % to about 12.5 wt. %, or from about 12.5 wt. % to about 15 wt. %, of the sol binder; and from about 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from about 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the orthophosphate-providing component (which may form part of the refractory particulate composition and/or the binder sol).

The (e.g., cement-free) castable refractory composition may comprise (e.g., prior to drying of the castable refractory composition): from about 70 wt. % to about 93 wt. %, for example, from about 70 wt. % to about 90 wt. %, or from about 70 wt. % to about 85 wt. %, or from about 70 wt. % to about 80 wt. %, or from about 70 wt. % to about 75 wt. %, or from about 75 wt. % to about 93 wt. %, or from about 75 wt. % to about 90 wt. %, or from about 75 wt. % to about 85 wt. %, or from about 75 wt. % to about 80 wt. %, or from about 80 wt. % to about 93 wt. %, or from about 80 wt. % to about 90 wt. %, or from about 80 wt. % to about 85 wt. %, or from about 85 wt. % to about 93 wt. %, or from about 85 wt. % to about 90 wt. %, or from about 90 wt. % to about 93 wt. %, of the refractory particulate composition; from about 5 wt. % to about 15 wt. %, for example, from about 5 wt. % to about 12.5 wt. %, or from about 5 wt. % to about 10 wt. %, or from about 5 wt. % to about 7.5 wt. %, or from about 7.5 wt. % to about 15 wt. %, or from about 7.5 wt. % to about 12.5 wt. %, or from about 7.5 wt. % to about 10 wt. %, or from about 10 wt. % to about 15 wt. %, or from about 10 wt. % to about 12.5 wt. %, or from about 12.5 wt. % to about 15 wt. %, of the sol binder; and from about 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from about 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the metaphosphate-providing component and the orthophosphate-providing component in combination (which may form part of the refractory particulate composition and/or the binder sol).

The chemical composition of the (e.g., cement-free) castable refractory composition may be determined by X-ray fluorescence (XRF) according to DIN EN ISO 12677.

The (e.g., cement-free) castable refractory composition may comprise no less than about 70 wt. %, for example, no less than about 75 wt. %, or no less than about 80 wt. %, or no less than about 82 wt. %, or no less than about 83 wt. %, Al₂O₃ as determined by XRF according to DIN EN ISO 12677. The (e.g., cement-free) castable refractory composition may comprise no more than about 90 wt. %, for example, no more than about 85 wt. %, or no more than about 84 wt. %, or no more than about 83 wt. %, Al₂O₃ as determined by XRF according to DIN EN ISO 12677. The (e.g., cement-free) castable refractory composition may comprise from about 70 wt. % to about 90 wt. %, for example, from about 70 wt. % to about 85 wt. %, or from about 70 wt. % to about 84 wt. %, or from about 70 wt. % to about 83 wt. %, or from about 75 wt. % to about 90 wt. %, or from about 75 wt. % to about 85 wt. %, or from about 75 wt. % to about 84 wt. %, or from about 75 wt. % to about 83 wt. %, or from about 80 wt. % to about 90 wt. %, or from about 80 wt. % to about 85 wt. %, or from about 80 wt. % to about 84 wt. %, or from about 80 wt. % to about 83 wt. %, or from about 82 wt. % to about 90 wt. %, or from about 82 wt. % to about 85 wt. %, or from about 82 wt. % to about 84 wt. %, or from about 82 wt. % to about 83 wt. %, or from about 83 wt. % to about 90 wt. %, or from about 83 wt. % to about 85 wt. %, or from about 83 wt. % to about 84 wt. %, Al₂O₃ as determined by XRF according to DIN EN ISO 12677.

The (e.g., cement-free) castable refractory composition may comprise no less than about 5 wt. %, for example, no less than about 7 wt. %, or no less than about 8 wt. %, or no less than about 8.3 wt. %, SiO₂ as determined by XRF according to DIN EN ISO 12677. The (e.g., cement-free) castable refractory composition may comprise no more than about 12 wt. %, for example, no more than about 10 wt. %, or no more than about 9 wt. %, or no more than about 8.5 wt. %, or no more than about 8.3 wt. %, SiO₂ as determined by XRF according to DIN EN ISO 12677. The (e.g., cement-free) castable refractory composition may comprise from about 5 wt. % to about 12 wt. %, for example, from about 5 wt. % to about 10 wt. %, or from about 5 wt. % to about 9 wt. %, or from about 5 wt. % to about 8.5 wt. %, or from about 5 wt. % to about 8.3 wt. %, or from about 7 wt. % to about 12 wt. %, or from about 7 wt. % to about 10 wt. %, or from about 7 wt. % to about 9 wt. %, or from about 7 wt. % to about 8.5 wt. %, or from about 7 wt. % to about 8.3 wt. %, or from about 8 wt. % to about 12 wt. %, or from about 8 wt. % to about 10 wt. %, or from about 8 wt. % to about 9 wt. %, or from about 8 wt. % to about 8.5 wt. %, or from about 8 wt. % to about 8.3 wt. %, or from about 8.3 wt. % to about 12 wt. %, or from about 8.3 wt. % to about 10 wt. %, or from about 8.3 wt. % to about 9 wt. %, or from about 8.3 wt. % to about 8.5 wt. %, SiO₂ as determined by XRF according to DIN EN ISO 12677.

The (e.g., cement-free) castable refractory composition may comprise no less than about 0.1 wt. %, for example, no less than about 0.5 wt. %, or no less than about 1 wt. % (e.g., no less than about 1.0 wt. %), Fe₂O₃ as determined by XRF according to DIN EN ISO 12677. The (e.g., cement-free) castable refractory composition may comprise no more than about 2 wt. % (e.g., no more than about 2.0 wt. %), for example, no more than about 1.5 wt. %, or no more than about 1 wt. % (e.g., no more than about 1.0 wt. %), Fe₂O₃ as determined by XRF according to DIN EN ISO 12677. The (e.g., cement-free) castable refractory composition may comprise from about 0.1 wt. % to about 2 wt. % (e.g., from about 0.1 wt. % to about 2.0 wt. %), for example, from about 0.1 wt. % to about 1.5 wt. %, or from about 0.1 wt. % to about 1 wt. % (e.g., from about 0.1 wt. % to about 1.0 wt. %), or from about 0.5 wt. % to about 2 wt. % (e.g., from about 0.5 wt. % to about 2.0 wt. %), or from about 0.5 wt. % to about 1.5 wt. %, or from about 0.5 wt. % to about 1 wt. % (e.g., from about 0.5 wt. % to about 1.0 wt. %), or from about 1 wt. % to about 2 wt. % (e.g., from about 1.0 wt. % to about 2.0 wt. %), or from about 1 wt. % to about 1.5 wt. % (e.g., from about 1.0 wt. % to about 1.5 wt. %), Fe₂O₃ as determined by XRF according to DIN EN ISO 12677.

The (e.g., cement-free) castable refractory composition may comprise no more than about 1 wt. % (e.g., no more than about 1.0 wt. %), for example, no more than about 0.5 wt. %, or no more than about 0.3 wt. %, or no more than about 0.2 wt. %, CaO as determined by XRF according to DIN EN ISO 12677. The (e.g., cement-free) castable refractory composition may comprise no less than about 0.01 wt. % CaO as determined by XRF according to DIN EN ISO 12677. The (e.g., cement-free) castable refractory composition may comprise from about 0.01 wt. % to about 1 wt. % (e.g., from about 0.01 wt. % to about 1.0 wt. %), for example, from about 0.01 wt. % to about 0.5 wt. %, or from about 0.01 wt. % to about 0.3 wt. %, or from about 0.01 wt. % to about 0.2 wt. %, CaO as determined by XRF according to DIN EN ISO 12677.

The (e.g., cement-free) castable refractory composition may comprise no more than about 1 wt. % (e.g., no more than about 1.0 wt. %), for example, no more than about 0.5 wt. %, or no more than about 0.4 wt. %, or no more than about 0.3 wt. %, MgO as determined by XRF according to DIN EN ISO 12677. The (e.g., cement-free) castable refractory composition may comprise no less than about 0.01 wt. %, for example, no less than about 0.1 wt. %, MgO as determined by XRF according to DIN EN ISO 12677. The (e.g., cement-free) castable refractory composition may comprise from about 0.01 wt. % to about 1 wt. % (e.g., from about 0.01 wt. % to about 1.0 wt. %), for example, from about 0.01 wt. % to about 0.5 wt. %, or from about 0.01 wt. % to about 0.4 wt. %, or from about 0.01 wt. % to about 0.3 wt. %, or from about 0.1 wt. % to about 1 wt. % (e.g., from about 0.1 wt. % to about 1.0 wt. %), or from about 0.1 wt. % to about 0.5 wt. %, or from about 0.1 wt. % to about 0.4 wt. %, or from about 0.1 wt. % to about 0.3 wt. %, MgO as determined by XRF according to DIN EN ISO 12677.

The (e.g., cement-free) castable refractory composition may comprise no more than about 0.5 wt. % (e.g., no more than about 0.50 wt. %), for example, no more than about 0.3 wt. % (e.g., no more than about 0.30 wt. %), or no more than about 0.2 wt. % (e.g., no more than about 0.20 wt. %), or no more than about 0.1 wt. % (e.g., no more than about 0.10 wt. %), Na₂O as determined by XRF according to DIN EN ISO 12677. The (e.g., cement-free) castable refractory composition may comprise no less than about 0.01 wt. %, for example, no less than about 0.05 wt. %, Na₂O as determined by XRF according to DIN EN ISO 12677. The (e.g., cement-free) castable refractory composition may comprise from about 0.01 wt. % to about 0.5 wt. % (e.g., from about 0.01 wt. % to about 0.50 wt. %), for example, from about 0.01 wt. % to about 0.3 wt. % (e.g., from about 0.01 wt. % to about 0.30 wt. %), or from about 0.01 wt. % to about 0.2 wt. % (e.g., from about 0.01 wt. % to about 0.20 wt. %), or from about 0.01 wt. % to about 0.1 wt. % (e.g., from about 0.01 wt. % to about 0.10 wt. %), or from about 0.05 wt. % to about 0.5 wt. % (e.g., from about 0.05 wt. % to about 0.50 wt. %), or from about 0.05 wt. % to about 0.3 wt. % (e.g., from about 0.05 wt. % to about 0.30 wt. %), or from about 0.05 wt. % to about 0.2 wt. % (e.g., from about 0.05 wt. % to about 0.20 wt. %), or from about 0.05 wt. % to about 0.1 wt. % (e.g., from about 0.05 wt. % to about 0.10 wt. %), Na₂O as determined by XRF according to DIN EN ISO 12677.

The (e.g., cement-free) castable refractory composition may comprise no more than about 0.5 wt. %, for example, no more than about 0.3 wt. % (e.g., no more than about 0.30 wt. %), or no more than about 0.2 wt. % (e.g., no more than about 0.20 wt. %), or no more than about 0.1 wt. % (e.g., no more than about 0.10 wt. %), K₂O as determined by XRF according to DIN EN ISO 12677e.g., . The (e.g., cement-free) castable refractory composition may comprise no less than about 0.01 wt. %, for example, no less than about 0.05 wt. %, K₂O as determined by XRF according to DIN EN ISO 12677. The (e.g., cement-free) castable refractory composition may comprise from about 0.01 wt. % to about 0.5 wt. % (e.g., from about 0.01 wt. % to about 0.50 wt. %), for example, from about 0.01 wt. % to about 0.3 wt. % (e.g., from about 0.01 wt. % to about 0.30 wt. %), or from about 0.01 wt. % to about 0.2 wt. % (e.g., from about 0.01 wt. % to about 0.20 wt. %), or from about 0.01 wt. % to about 0.1 wt. % (e.g., from about 0.01 wt. % to about 0.10 wt. %), or from about 0.05 wt. % to about 0.5 wt. % (e.g., from about 0.05 wt. % to about 0.50 wt. %), or from about 0.05 wt. % to about 0.3 wt. % (e.g., from about 0.05 wt. % to about 0.30 wt. %), or from about 0.05 wt. % to about 0.2 wt. % (e.g., from about 0.05 wt. % to about 0.20 wt. %), or from about 0.05 wt. % to about 0.1 wt. % (e.g., from about 0.05 wt. % to about 0.10 wt. %), K₂O as determined by XRF according to DIN EN ISO 12677.

The (e.g., cement-free) castable refractory composition may comprise no more than about 6 wt. % (e.g., no more than about 6.0 wt. %), for example, no more than about 5 wt. % (e.g., no more than about 5.0 wt. %), or no more than about 4.8 wt. %, or no more than about 4.7 wt. %, P₂O₅ as determined by XRF according to DIN EN ISO 12677. The (e.g., cement-free) castable refractory composition may comprise no less than about 1 wt. % (e.g., no less than about 1.0 wt. %), for example, no less than about 2 wt. % (e.g., no less than about 2.0 wt. %), or no less than about 3 wt. % (e.g., no less than about 3.0 wt. %), or no less than about 4 wt. % (e.g., no less than about 4.0 wt. %), or no less than about 4.6 wt. %, or no less than about 4.7 wt. %, P₂O₅ as determined by XRF according to DIN EN ISO 12677. The (e.g., cement-free) castable refractory composition may comprise from about 1 wt. % to about 6 wt. % (e.g., from about 1.0 wt. % to about 6.0 wt. %), for example, from about 1 wt. % to about 5 wt. % (e.g., from about 1.0 wt. % to about 5.0 wt. %), or from about 1 wt. % to about 4.8 wt. % (e.g., from about 1.0 wt. % to about 4.8 wt. %), or from about 1 wt. % to about 4.7 wt. % (e.g., from about 1.0 wt. % to about 4.7 wt. %), or from about 2 wt. % to about 6 wt. % (e.g., from about 2.0 wt. % to about 6.0 wt. %), or from about 2 wt. % to about 5 wt. % (e.g., from about 2.0 wt. % to about 5.0 wt. %), or from about 2 wt. % to about 4.8 wt. % (e.g., from about 2.0 wt. % to about 4.9 wt. %), or from about 2 wt. % to about 4.7 wt. % (e.g., from about 2.0 wt. % to about 4.7 wt. %), or from about 3 wt. % to about 6 wt. % (e.g., from about 3.0 wt. % to about 6.0 wt. %), or from about 3 wt. % to about 5 wt. % (e.g., from about 3.0 wt. % to about 5.0 wt. %), or from about 3 wt. % to about 4.8 wt. % (e.g., from about 3.0 wt. % to about 4.8 wt. %), or from about 3 wt. % to about 4.7 wt. % (e.g., from about 3.0 wt. % to about 4.7 wt. %), or from about 4 wt. % to about 6 wt. % (e.g., from about 4.0 wt. % to about 6.0 wt. %), or from about 4 wt. % to about 5 wt. % (e.g., from about 4.0 wt. % to about 5.0 wt. %), or from about 4 wt. % to about 4.8 wt. % (e.g., from about 4.0 wt. % to about 4.8 wt. %), or from about 4 wt. % to about 4.7 wt. % (e.g., from about 4.0 wt. % to about 4.7 wt. %), or from about 4.6 wt. % to about 6 wt. % (e.g., from about 4.6 wt. % to about 6.0 wt. %), or from about 4.6 wt. % to about 5 wt. % (e.g., from about 4.6 wt. % to about 5.0 wt. %), or from about 4.6 wt. % to about 4.8 wt. %, or from about 4.6 wt. % to about 4.7 wt. %, or from about 4.7 wt. % to about 6 wt. % (e.g., from about 4.7 wt. % to about 6.0 wt. %), or from about 4.7 wt. % to about 5 wt. % (e.g., from about 4.7 wt. % to about 5.0 wt. %), or from about 4.7 wt. % to about 4.8 wt. %, P₂O₅ as determined by XRF according to DIN EN ISO 12677.

The (e.g., cement-free) castable refractory composition may comprise no less than about 1 wt. % (e.g., no less than about 1.0 wt. %), for example, no less than about 2 wt. % (e.g., no less than about 2.0 wt. %), or no less than about 2.3 wt. %, or no less than about 2.4 wt. %, TiO₂ as determined by XRF according to DIN EN ISO 12677. The (e.g., cement-free) castable refractory composition may comprise no more than about 5 wt. % (e.g., no more than about 5.0 wt. %), for example, no more than about 4 wt. % (e.g., no more than about 4.0 wt. %), or no more than about 3 wt. % (e.g., no more than about 3.0 wt. %), or no more than about 2 wt. % (e.g., no more than about 2.0 wt. %), or no more than about 2.5 wt. %, or no more than about 2.4 wt. %, TiO₂ as determined by XRF according to DIN EN ISO 12677. The (e.g., cement-free) castable refractory composition may comprise from about 1 wt. % to about 5 wt. % (e.g., from about 1.0 wt. % to about 5.0 wt. %), for example, from about 1 wt. % to about 4 wt. % (e.g., from about 1.0 wt. % to about 4.0 wt. %), or from about 1 wt. % to about 3 wt. % (e.g., from about 1.0 wt. % to about 3.0 wt. %), or from about 1 wt. % to about 2.5 wt. % (e.g., from about 1.0 wt. % to about 2.5 wt. %), or from about 1 wt. % to about 2.4 wt. % (e.g., from about 1.0 wt. % to about 2.4 wt. %), or from about 2 wt. % to about 5 wt. % (e.g., from about 2.0 wt. % to about 5.0 wt. %), or from about 2 wt. % to about 4 wt. % (e.g., from about 2.0 wt. % to about 4.0 wt. %), or from about 2 wt. % to about 3 wt. % (e.g., from about 2.0 wt. % to about 3.0 wt. %), or from about 2 wt. % to about 2.5 wt. % (e.g., from about 2.0 wt. % to about 2.5 wt. %), or from about 2 wt. % to about 2.4 wt. % (e.g., from about 2.0 wt. % to about 2.4 wt. %), or from about 2.3 wt. % to about 5 wt. % (e.g., from about 2.3 wt. % to about 5.0 wt. %), or from about 2.3 wt. % to about 4 wt. % (e.g., from about 2.3 wt. % to about 4.0 wt. %), or from about 2.3 wt. % to about 3 wt. % (e.g., from about 2.3 wt. % to about 3.0 wt. %), or from about 2.3 wt. % to about 2.5 wt. %, or from about 2.3 wt. % to about 2.4 wt. %, or from about 2.4 wt. % to about 5 wt. % (e.g., from about 2.4 wt. % to about 5.0 wt. %), or from about 2.4 wt. % to about 4 wt. % (e.g., from about 2.4 wt. % to about 4.0 wt. %), or from about 2.4 wt. % to about 3 wt. % (e.g., from about 2.4 wt. % to about 3.0 wt. %), or from about 2.4 wt. % to about 2.5 wt. %, TiO₂ as determined by XRF according to DIN EN ISO 12677.

The (e.g., cement-free) castable refractory composition may comprise (e.g., consist essentially of, or consist of): from about 70 wt. % to about 90 wt. %, for example, from about 70 wt. % to about 85 wt. %, or from about 70 wt. % to about 84 wt. %, or from about 70 wt. % to about 83 wt. %, or from about 75 wt. % to about 90 wt. %, or from about 75 wt. % to about 85 wt. %, or from about 75 wt. % to about 84 wt. %, or from about 75 wt. % to about 83 wt. %, or from about 80 wt. % to about 90 wt. %, or from about 80 wt. % to about 85 wt. %, or from about 80 wt. % to about 84 wt. %, or from about 80 wt. % to about 83 wt. %, or from about 82 wt. % to about 90 wt. %, or from about 82 wt. % to about 85 wt. %, or from about 82 wt. % to about 84 wt. %, or from about 82 wt. % to about 83 wt. %, or from about 83 wt. % to about 90 wt. %, or from about 83 wt. % to about 85 wt. %, or from about 83 wt. % to about 84 wt. %, Al₂O₃ as determined by XRF according to DIN EN ISO 12677; from about 5 wt. % to about 12 wt. %, for example, from about 5 wt. % to about 10 wt. %, or from about 5 wt. % to about 9 wt. %, or from about 5 wt. % to about 8.5 wt. %, or from about 5 wt. % to about 8.3 wt. %, or from about 7 wt. % to about 12 wt. %, or from about 7 wt. % to about 10 wt. %, or from about 7 wt. % to about 9 wt. %, or from about 7 wt. % to about 8.5 wt. %, or from about 7 wt. % to about 8.3 wt. %, or from about 8 wt. % to about 12 wt. %, or from about 8 wt. % to about 10 wt. %, or from about 8 wt. % to about 9 wt. %, or from about 8 wt. % to about 8.5 wt. %, or from about 8 wt. % to about 8.3 wt. %, or from about 8.3 wt. % to about 12 wt. %, or from about 8.3 wt. % to about 10 wt. %, or from about 8.3 wt. % to about 9 wt. %, or from about 8.3 wt. % to about 8.5 wt. %, SiO₂ as determined by XRF according to DIN EN ISO 12677; from about 0.1 wt. % to about 2 wt. % (e.g., from about 0.1 wt. % to about 2.0 wt. %), for example, from about 0.1 wt. % to about 1.5 wt. %, or from about 0.1 wt. % to about 1 wt. % (e.g., from about 0.1 wt. % to about 1.0 wt. %), or from about 0.5 wt. % to about 2 wt. % (e.g., from about 0.5 wt. % to about 2.0 wt. %), or from about 0.5 wt. % to about 1.5 wt. %, or from about 0.5 wt. % to about 1 wt. % (e.g., from about 0.5 wt. % to about 1.0 wt. %), or from about 1 wt. % to about 2 wt. % (e.g., from about 1.0 wt. % to about 2.0 wt. %), or from about 1 wt. % to about 1.5 wt. % (e.g., from about 1.0 wt. % to about 1.5 wt. %), Fe₂O₃ as determined by XRF according to DIN EN ISO 12677; from about 0.01 wt. % to about 1 wt. % (e.g., from about 0.01 wt. % to about 1.0 wt. %), for example, from about 0.01 wt. % to about 0.5 wt. %, or from about 0.01 wt. % to about 0.3 wt. %, or from about 0.01 wt. % to about 0.2 wt. %, CaO as determined by XRF according to DIN EN ISO 12677; from about 0.01 wt. % to about 1 wt. % (e.g., from about 0.01 wt. % to about 1.0 wt. %), for example, from about 0.01 wt. % to about 0.5 wt. %, or from about 0.01 wt. % to about 0.4 wt. %, or from about 0.01 wt. % to about 0.3 wt. %, or from about 0.1 wt. % to about 1 wt. % (e.g., from about 0.1 wt. % to about 1.0 wt. %), or from about 0.1 wt. % to about 0.5 wt. %, or from about 0.1 wt. % to about 0.4 wt. %, or from about 0.1 wt. % to about 0.3 wt. %, MgO as determined by XRF according to DIN EN ISO 12677; from about 0.01 wt. % to about 0.5 wt. %, for example, from about 0.01 wt. % to about 0.3 wt. %, or from about 0.01 wt. % to about 0.2 wt. %, or from about 0.01 wt. % to about 0.1 wt. %, or from about 0.05 wt. % to about 0.5 wt. %, or from about 0.05 wt. % to about 0.3 wt. %, or from about 0.05 wt. % to about 0.2 wt. %, or from about 0.05 wt. % to about 0.1 wt. %, Na₂O as determined by XRF according to DIN EN ISO 12677; from about 0.01 wt. % to about 0.5 wt. %, for example, from about 0.01 wt. % to about 0.3 wt. %, or from about 0.01 wt. % to about 0.2 wt. %, or from about 0.01 wt. % to about 0.1 wt. %, or from about 0.05 wt. % to about 0.5 wt. %, or from about 0.05 wt. % to about 0.3 wt. %, or from about 0.05 wt. % to about 0.2 wt. %, or from about 0.05 wt. % to about 0.1 wt. %, K₂O as determined by XRF according to DIN EN ISO 12677; from about 1 wt. % to about 6 wt. %, for example, from about 1 wt. % to about 5 wt. %, or from about 1 wt. % to about 4.8 wt. %, or from about 1 wt. % to about 4.7 wt. %, or from about 2 wt. % to about 6 wt. %, or from about 2 wt. % to about 5 wt. %, or from about 2 wt. % to about 4.8 wt. %, or from about 2 wt. % to about 4.7 wt. %, or from about 3 wt. % to about 6 wt. %, or from about 3 wt. % to about 5 wt. %, or from about 3 wt. % to about 4.8 wt. %, or from about 3 wt. % to about 4.7 wt. %, or from about 4 wt. % to about 6 wt. %, or from about 4 wt. % to about 5 wt. %, or from about 4 wt. % to about 4.8 wt. %, or from about 4 wt. % to about 4.7 wt. %, or from about 4.6 wt. % to about 6 wt. %, or from about 4.6 wt. % to about 5 wt. %, or from about 4.6 wt. % to about 4.8 wt. %, or from about 4.6 wt. % to about 4.7 wt. %, or from about 4.7 wt. % to about 6 wt. %, or from about 4.7 wt. % to about 5 wt. %, or from about 4.7 wt. % to about 4.8 wt. %, P₂O₅ as determined by XRF according to DIN EN ISO 12677; and from about 1 wt. % to about 5 wt. %, for example, from about 1 wt. % to about 4 wt. %, or from about 1 wt. % to about 3 wt. %, or from about 1 wt. % to about 2.5 wt. %, or from about 1 wt. % to about 2.4 wt. %, or from about 2 wt. % to about 5 wt. %, or from about 2 wt. % to about 4 wt. %, or from about 2 wt. % to about 3 wt. %, or from about 2 wt. % to about 2.5 wt. %, or from about 2 wt. % to about 2.4 wt. %, or from about 2.3 wt. % to about 5 wt. %, or from about 2.3 wt. % to about 4 wt. %, or from about 2.3 wt. % to about 3 wt. %, or from about 2.3 wt. % to about 2.5 wt. %, or from about 2.3 wt. % to about 2.4 wt. %, or from about 2.4 wt. % to about 5 wt. %, or from about 2.4 wt. % to about 4 wt. %, or from about 2.4 wt. % to about 3 wt. %, or from about 2.4 wt. % to about 2.5 wt. %, TiO₂ as determined by XRF according to DIN EN ISO 12677.

### Metaphosphate-providing component

The metaphosphate-providing component may be any component capable of providing the castable refractory composition with metaphosphate (i.e., PO_{3̅}) anions. The metaphosphate-providing component may therefore be a metaphosphate salt (i.e., a salt of metaphosphoric acid (i.e., HPO₃)). The metaphosphate salt may be a metal metaphosphate salt such as sodium metaphosphate (NaPO₃), potassium metaphosphate (KPO₃) or aluminium metaphosphate (Al(PO₃)₃).

Preferably, the metaphosphate-providing component is aluminium metaphosphate (i.e., CAS number 13776-88-0), for example, M 16-04 aluminium metaphosphate available from Chemische Fabrik Budenheim KG, Germany.

The metaphosphate-providing component (e.g., aluminium metaphosphate) may be provided in any suitable form, e.g., any suitable crystalline form or polymorph.

The metaphosphate-providing component may be, may form part of, or may be derived from, a naturally-occurring metaphosphate-providing material such a metaphosphate-providing mineral product.

The aluminium metaphosphate may comprise no less than about 70 wt. %, for example, no less than about 75 wt. %, or no less than about 80 wt. %, P₂O₅ as determined by XRF according to DIN EN ISO 12677. The aluminium metaphosphate may comprise no more than about 90 wt. %, for example, no more than about 85 wt. %, or no more than about 80 wt. %, P₂O₅ as determined by XRF according to DIN EN ISO 12677. The aluminium metaphosphate may comprise from about 70 wt. % to about 90 wt. %, for example, from about 70 wt. % to about 85 wt. %, or from about 70 wt. % to about 80 wt. %, or from about 75 wt. % to about 90 wt. %, or from about 75 wt. % to about 85 wt. %, or from about 75 wt. % to about 80 wt. %, or from about 80 wt. % to about 90 wt. %, or from about 80 wt. % to about 85 wt. %, e.g., about 80 wt. %, P₂O₅ as determined by XRF according to DIN EN ISO 12677.

The aluminium metaphosphate may comprise no less than about 10 wt. %, for example, no less than about 15 wt. %, no less than about 18 wt. %, or no less than about 19 wt. %, Al₂O₃ as determined by XRF according to DIN EN ISO 12677. The aluminium metaphosphate may comprise no more than about 28 wt. %, for example, no more than about 25 wt. %, or no more than about 20 wt. %, or no more than about 19 wt. %, Al₂O₃ as determined by XRF according to DIN EN ISO 12677. The aluminium metaphosphate may comprise from about 10 wt. % to about 28 wt. %, for example, from about 10 wt. % to about 25 wt. %, or from about 10 wt. % to about 20 wt. %, or from about 10 wt. % to about 19 wt. %, or from about 15 wt. % to about 28 wt. %, or from about 15 wt. % to about 25 wt. %, or from about 15 wt. % to about 20 wt. %, or from about 15 wt. % to about 19 wt. %, or from about 18 wt. % to about 28 wt. %, or from about 18 wt. % to about 25 wt. %, or from about 18 wt. % to about 20 wt. %, or from about 18 wt. % to about 19 wt. %, or from about 19 wt. % to about 28 wt. %, or from about 19 wt. % to about 25 wt. %, or from about 19 wt. % to about 20 wt. %, e.g., about 19 wt. %, Al₂O₃ as determined by XRF according to DIN EN ISO 12677.

The aluminium metaphosphate may have a loss on ignition, determined by XRF according to ISO 26845, of no less than about 0.1 %, for example, no less than about 0.2 %, or no less than about 0.3 %. The aluminium metaphosphate may have a loss on ignition, determined by XRF according to ISO 26845, of no greater than about 0.5 %, for example, no greater than about 0.4 %, or no greater than about 0.3 %. The aluminium metaphosphate may have a loss on ignition, determined by XRF according to ISO 26845, from about 0.1 % to about 0.5 %, for example, from about 0.1 % to about 0.4 %, or from about 0.1 % to about 0.3 %, or from about 0.2 % to about 0.5 %, or from about 0.2 % to about 0.4 %, or from about 0.2 % to about 0.3 %, or from about 0.3 % to about 0.5 %, or from about 0.3 % to about 0.4 %, e.g., about 0.3 %.

The aluminium metaphosphate may have a pH (at 10 % suspension and at 20 °C) of no less than about 1, for example, no less than about 2, or no less than about 3. The aluminium metaphosphate may have a pH (at 10 % suspension and at 20 °C) of no greater than about 5, for example, no greater than about 4, or no greater than about 3. The aluminium metaphosphate may have a pH (at 10 % suspension and at 20 °C) from about 1 to about 5, for example, from about 1 to about 4, or from about 1 to about 3, or from about 2 to about 5, or from about 2 to about 4, or from about 2 to about 3, or from about 3 to about 5, or from about 3 to about 4, e.g., about 3.

The aluminium metaphosphate may have a bulk density no less than about 600 g/l, for example, no less than about 700 g/l, or no less than about 800 g/l. The aluminium metaphosphate may have a bulk density no greater than about 1000 g/l, for example, no greater than about 900 g/l, or no greater than about 800 g/l. The aluminium metaphosphate may have a bulk density from about 600 g/l to about 1000 g/l, for example, from about 600 g/l to about 900 g/l, or from about 600 g/l to about 800 g/l, or from about 700 g/l to about 1000 g/l, or from about 700 g/l to about 900 g/l, or from about 700 g/l to about 800 g/l, or from about 800 g/l to about 1000 g/l, or from about 800 g/l to about 900 g/l, e.g., about 800 g/l.

It may be that no more than about 10 %, for example, no more than about 7.5 %, or no more than about 5 %, of particles of the aluminium metaphosphate have a particle size greater than about 0.100 mm as measured by sieve analysis.

The metaphosphate-providing component may form part of the refractory particulate composition. That is to say, it may be that the refractory particulate composition comprises the metaphosphate-providing component.

The metaphosphate-providing component may form part of the sol binder. That is to say, it may be that the sol binder comprises the metaphosphate-providing component.

It may be that each of the refractory particulate composition and the sol binder comprise at least some of the metaphosphate-providing component.

It may be that (e.g., at least some of) the metaphosphate-providing component in the castable refractory composition does not form part of the refractory particulate composition or the sol binder. That is to say, it may be that the castable refractory composition comprises the metaphosphate-providing component in addition to the refractory particulate composition and the sol binder.

The (e.g., cement-free) castable refractory composition may comprise (e.g., prior to drying of the castable refractory composition): from about 70 wt. % to about 93 wt. %, for example, from about 70 wt. % to about 90 wt. %, or from about 70 wt. % to about 85 wt. %, or from about 70 wt. % to about 80 wt. %, or from about 70 wt. % to about 75 wt. %, or from about 75 wt. % to about 93 wt. %, or from about 75 wt. % to about 90 wt. %, or from about 75 wt. % to about 85 wt. %, or from about 75 wt. % to about 80 wt. %, or from about 80 wt. % to about 93 wt. %, or from about 80 wt. % to about 90 wt. %, or from about 80 wt. % to about 85 wt. %, or from about 85 wt. % to about 93 wt. %, or from about 85 wt. % to about 90 wt. %, or from about 90 wt. % to about 93 wt. %, of the refractory particulate composition; and from about 5 wt. % to about 15 wt. %, for example, from about 5 wt. % to about 12.5 wt. %, or from about 5 wt. % to about 10 wt. %, or from about 5 wt. % to about 7.5 wt. %, or from about 7.5 wt. % to about 15 wt. %, or from about 7.5 wt. % to about 12.5 wt. %, or from about 7.5 wt. % to about 10 wt. %, or from about 10 wt. % to about 15 wt. %, or from about 10 wt. % to about 12.5 wt. %, or from about 12.5 wt. % to about 15 wt. %, of the sol binder; wherein the castable refractory composition comprises from about 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from about 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of aluminium metaphosphate.

### Orthophosphate-providing component

The orthophosphate-providing component may be any component capable of providing the castable refractory composition with orthophosphate (i.e., [PO₄]³⁻) anions. The orthophosphate-providing component may therefore be an orthophosphate salt (i.e., a salt of orthophosphoric acid (i.e., H₃PO₄)). The orthophosphate salt may be a metal orthophosphate salt such as sodium orthophosphate (Na₃PO₄), potassium orthophosphate (K₃PO₄) or aluminium orthophosphate (AlPO₄).

Preferably, the orthophosphate-providing component is aluminium orthophosphate (i.e., CAS number 7784-30-7), for example, aluminium orthophosphate available from Tatichem, Shanghai MintChem Development Co.,Ltd, China.

The orthophosphate-providing component (e.g., aluminium orthophosphate) may be provided in any suitable form, e.g., any suitable crystalline form or polymorph.

The orthophosphate-providing component may be, may form part of, or may be derived from, a naturally-occurring orthophosphate-providing material such an orthophosphate-providing mineral product, for example, berlinite.

The orthophosphate-providing component may form part of the refractory particulate composition. That is to say, it may be that the refractory particulate composition comprises the orthophosphate-providing component.

The orthophosphate-providing component may form part of the sol binder. That is to say, it may be that the sol binder comprises the orthophosphate-providing component.

It may be that each of the refractory particulate composition and the sol binder comprise at least some of the orthophosphate-providing component.

It may be that (e.g., at least some of) the orthophosphate-providing component in the castable refractory composition does not form part of the refractory particulate composition or the sol binder. That is to say, it may be that the castable refractory composition comprises the orthophosphate-providing component in addition to the refractory particulate composition and the sol binder.

The (e.g., cement-free) castable refractory composition may comprise (e.g., prior to drying of the castable refractory composition): from about 70 wt. % to about 93 wt. %, for example, from about 70 wt. % to about 90 wt. %, or from about 70 wt. % to about 85 wt. %, or from about 70 wt. % to about 80 wt. %, or from about 70 wt. % to about 75 wt. %, or from about 75 wt. % to about 93 wt. %, or from about 75 wt. % to about 90 wt. %, or from about 75 wt. % to about 85 wt. %, or from about 75 wt. % to about 80 wt. %, or from about 80 wt. % to about 93 wt. %, or from about 80 wt. % to about 90 wt. %, or from about 80 wt. % to about 85 wt. %, or from about 85 wt. % to about 93 wt. %, or from about 85 wt. % to about 90 wt. %, or from about 90 wt. % to about 93 wt. %, of the refractory particulate composition; and from about 5 wt. % to about 15 wt. %, for example, from about 5 wt. % to about 12.5 wt. %, or from about 5 wt. % to about 10 wt. %, or from about 5 wt. % to about 7.5 wt. %, or from about 7.5 wt. % to about 15 wt. %, or from about 7.5 wt. % to about 12.5 wt. %, or from about 7.5 wt. % to about 10 wt. %, or from about 10 wt. % to about 15 wt. %, or from about 10 wt. % to about 12.5 wt. %, or from about 12.5 wt. % to about 15 wt. %, of the sol binder; wherein the castable refractory composition comprises from about 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from about 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of aluminium orthophosphate.

### Combination of metaphosphate-providing and orthophosphate-providing components

The (e.g., cement-free) castable refractory composition may comprise both a metaphosphate-providing component and an orthophosphate-providing component.

The metaphosphate-providing component and the orthophosphate-providing component may be provided in a weight ratio of no less than about 0.01:1, for example, no less than about 0.1:1, or no less than about 0.2:1, or no less than about 0.3:1, or no less than about 0.5:1, or no less than about 0.75:1, or no less than about 1:1, or no less than about 1.5:1, or no less than about 2:1, or no less than about 3:1, or no less than about 4:1, or no less than about 5:1, or no less than about 10:1, or no less than about 100:1, metaphosphate-providing component to orthophosphate-providing component. The metaphosphate-providing component and the orthophosphate-providing component may be provided in a weight ratio of no more than about 100:1, for example, no more than about 10:1, or no more than about 5:1, or no more than about 4:1, or no more than about 3:1, or no more than about 2:1, or no more than about 1.5:1, or no more than about 1:1, or no more than about 0.75:1, or no more than about 0.5:1, or no more than about 0.3:1, or no more than about 0.2:1, or no more than about 0.1:1, or no more than about 0.01:1, metaphosphate-providing component to orthophosphate-providing component. The metaphosphate-providing component and the orthophosphate-providing component may be provided in a weight ratio from about 0.01:1 to about 100:1, for example, from about 0.01:1 to about 10:1, or from about 0.01:1 to about 5:1, or from about 0.01:1 to about 2:1, or from about 0.01:1 to about 1:1, or from about 0.01:1 to about 0.5:1, or from about 0.1:1 to about 100:1, or from about 0.1:1 to about 10:1, or from about 0.1:1 to about 5:1, or from about 0.1:1 to about 2:1, or from about 0.1:1 to about 1:1, or from about 0.1:1 to about 0.5:1, or from about 0.5:1 to about 100:1, or from about 0.5:1 to about 10:1, or from about 0.5:1 to about 5:1, or from about 0.5:1 to about 2:1, or from about 0.5:1 to about 1:1, or from about 1:1 to about 100:1, or from about 1:1 to about 10:1, or from about 1:1 to about 5:1, or from about 1:1 to about 2:1, or from about 2:1 to about 100:1, or from about 2:1 to about 10:1, or from about 2:1 to about 5:1, or from about 5:1 to about 100:1, or from about 5:1 to about 10:1, or from about 10:1 to about 100:1, metaphosphate-providing component to orthophosphate-providing component.

Preferably, the metaphosphate-providing component is aluminium metaphosphate and the orthophosphate-providing component is aluminium orthophosphate.

The metaphosphate-providing component and the orthophosphate-providing component may form part of the refractory particulate composition. That is to say, it may be that the refractory particulate composition comprises the metaphosphate-providing component and the orthophosphate-providing component.

The metaphosphate-providing component and the orthophosphate-providing component may form part of the sol binder. That is to say, it may be that the sol binder comprises the metaphosphate-providing component and the orthophosphate-providing component.

It may be that each of the refractory particulate composition and the sol binder comprise at least some of the metaphosphate-providing component and at least some of the orthophosphate-providing component.

It may be that one of the refractory particulate composition and the sol binder comprises the metaphosphate-providing component and that the other of the refractory particulate composition and the sol binder comprises the orthophosphate-providing component.

It may be that (e.g., at least some of) the metaphosphate-providing component and/or the orthophosphate-providing component in the castable refractory composition does not form part of the refractory particulate composition or the sol binder. That is to say, it may be that the castable refractory composition comprises the metaphosphate-providing component and/or the orthophosphate-providing component in addition to the refractory particulate composition and the sol binder.

The (e.g., cement-free) castable refractory composition may comprise (e.g., prior to drying of the castable refractory composition): from about 70 wt. % to about 93 wt. %, for example, from about 70 wt. % to about 90 wt. %, or from about 70 wt. % to about 85 wt. %, or from about 70 wt. % to about 80 wt. %, or from about 70 wt. % to about 75 wt. %, or from about 75 wt. % to about 93 wt. %, or from about 75 wt. % to about 90 wt. %, or from about 75 wt. % to about 85 wt. %, or from about 75 wt. % to about 80 wt. %, or from about 80 wt. % to about 93 wt. %, or from about 80 wt. % to about 90 wt. %, or from about 80 wt. % to about 85 wt. %, or from about 85 wt. % to about 93 wt. %, or from about 85 wt. % to about 90 wt. %, or from about 90 wt. % to about 93 wt. %, of the refractory particulate composition; and from about 5 wt. % to about 15 wt. %, for example, from about 5 wt. % to about 12.5 wt. %, or from about 5 wt. % to about 10 wt. %, or from about 5 wt. % to about 7.5 wt. %, or from about 7.5 wt. % to about 15 wt. %, or from about 7.5 wt. % to about 12.5 wt. %, or from about 7.5 wt. % to about 10 wt. %, or from about 10 wt. % to about 15 wt. %, or from about 10 wt. % to about 12.5 wt. %, or from about 12.5 wt. % to about 15 wt. %, of the sol binder; wherein the castable refractory composition comprises from about 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from about 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of aluminium metaphosphate and aluminium orthophosphate (i.e., taken in combination).

The metaphosphate-providing component and the orthophosphate-providing component may be provided as part of the same material. For example, the (e.g., cement-free) refractory particulate composition may comprise a phosphate-providing material which contains both the metaphosphate-providing component and the orthophosphate-providing component. For example, the phosphate-providing material may be (or may be derived from) a naturally-occurring phosphate-providing material which contains a mixture of phosphates. For example, the phosphate-providing material may be a phosphate-providing mineral product which contains both the metaphosphate-providing component and the orthophosphate-providing component.

In some examples, the (e.g., cement-free) castable refractory composition comprises a phosphate-providing material, wherein the phosphate-providing material comprises the metaphosphate-providing component and/or the orthophosphate-providing component. The phosphate-providing material may further comprise other phosphate-providing components such as hexacyclophosphate-providing components.

For example, the (e.g., cement-free) castable refractory composition may comprise an aluminium phosphate product, wherein the aluminium phosphate product comprises aluminium metaphosphate and/or aluminium orthophosphate. The aluminium phosphate product may further comprise other aluminium phosphates such as aluminium hexacyclophosphate.

The phosphate-providing material (e.g., aluminium phosphate product) may comprise more of the metaphosphate-providing component (e.g., aluminium metaphosphate) and/or the orthophosphate-providing component (e.g., aluminium orthophosphate) than other phosphate-providing components (e.g., hexacyclophosphate-providing components, for example, aluminium hexacyclophosphate). For example, the phosphate-providing material (e.g., aluminium phosphate product) may comprise no less than about 80 wt. %, for example, no less than about 90 wt. %, or no less than about 95 wt. %, metaphosphate-providing component (e.g., aluminium metaphosphate) and/or orthophosphate-providing component (e.g., aluminium orthophosphate). The phosphate-providing material (e.g., aluminium phosphate product) may comprise no more than about 20 wt. %, for example, no more than about 10 wt. %, or no more than about 5 wt. %, other phosphate-providing components (e.g., hexacyclophosphate-providing components, for example, aluminium hexacyclophosphate).

### Refractory particulate composition

The refractory particulate composition is typically cement-free. That is to say, the refractory particulate composition may be substantially free of cementitious material such as calcium aluminate cement (CAC) and/or calcium silicate cement (CSC). For example, the refractory particulate composition may comprise no greater than about 0.5 wt. %, for example, no greater than about 0.25 wt. %, or no greater than about 0.1 wt. %, or no greater than about 0.01 wt. %, cementitious material such as CAC and/or CSC.

The (e.g., cement-free) refractory particulate composition may comprise (e.g., cement-free) refractory aggregate material. The (e.g., cement-free) refractory aggregate material may comprise (e.g., predominantly) bauxite and/or alumina.

Bauxite is a sedimentary rock which is made up predominantly of the minerals gibbsite (AL(OH)₃), boehmite (γ-AlO(OH)) and/or diaspore (a-AIO(OH)) and may also include small amount of impurities such as ferrous oxide, silica and titanium dioxide. The bauxite may be calcined bauxite. The (e.g., cement-free) refractory aggregate material may comprise low-density and/or high-density bauxite.

The alumina may be present in the form of calcined alumina, sintered alumina and/or fused alumina. Calcined alumina may be prepared from bauxite using, for example, the Bayer process. Sintered alumina may be prepared by sintering calcined alumina. Fused alumina may be prepared by electrically fusing aluminous raw materials, for example, in an electric arc furnace. The fused alumina may be brown fused alumina or white fused alumina. Brown fused alumina is produced using starting materials such as bauxite, anthracite and iron slag and is brown due to the presence of impurities. White fused alumina is produced using high-purity aluminium oxide as a starting material and has a lower impurity content than brown fused alumina.

It may be that the (e.g., cement-free) refractory aggregate material consists essentially (e.g., consists) of bauxite and/or alumina. Additionally or alternatively, the (e.g., cement-free) refractory aggregate material may comprise: one or more spinels such as MgAl₂O₄, aluminates (e.g., MgO.Al₂O₃, FeO.Al₂O₃, MnO.Al₂O₃, ZnO.Al₂O₃ or NiO.Al₂O₃), chromites (e.g., MgO.Cr₂O₃, FeO.Cr₂O₃, MnO.Cr₂O₃, ZnO.Cr₂O₃ or NiO.Cr₂O₃) orferrites (e.g., MgO.Fe₂O₃, FeO.Fe₂O₃, MnO.Fe₂O₃, ZnO.Fe₂O₃, NiO.Fe₂O₃); magnesia; dolomite; chamotte; and/or vermiculite.

It may be that the (e.g., cement-free) refractory particulate composition comprises no less than about 50 wt. %, for example, no less than about 55 wt. %, or no less than about 60 wt. %, of bauxite (e.g., high and/or low-density bauxite). It may be that the (e.g., cement-free) refractory particulate composition comprises no greater than about 70 wt. %, for example, no greater than about 65 wt. %, or no greater than about 62 wt. %, of bauxite (e.g., high and/or low-density bauxite). It may be that the (e.g., cement-free) refractory particulate composition comprises from about 50 wt. % to about 70 wt. %, for example, from about 50 wt. % to about 65 wt. %, or from about 50 wt. % to about 62 wt. %, or from about 55 wt. % to about 70 wt. %, or from about 55 wt. % to about 65 wt. %, or from about 55 wt. % to about 62 wt. %, or from about 60 wt. % to about 70 wt. %, or from about 60 wt. % to about 65 wt. %, or from about 60 wt. % to about 62 wt. %, of bauxite (e.g., high and/or low-density bauxite).

Bauxite is typically available commercially in grades defined by particle size ranges of about 3 mm to about 6 mm, about 1 mm to about 3 mm, and about 0 mm to about 1 mm.

It may be that the (e.g., cement-free) refractory particulate composition comprises bauxite having a particle size from about 3 mm to about 6 mm. For example, the (e.g., cement-free) refractory particulate composition may comprise bauxite having a d₅₀ from about 3 mm to about 6 mm, for example, about 4.5 mm. It may be that the (e.g., cement-free) refractory particulate composition comprises no less than about 10 wt. %, for example, no less than about 15 wt. %, or no less than about 20 wt. %, of bauxite having a particle size from about 3 mm to about 6 mm (e.g., a d₅₀ from about 3 mm to about 6 mm, for example, about 4.5 mm). It may be that the (e.g., cement-free) refractory particulate composition comprises no greater than about 30 wt. %, for example, no greater than about 25 wt. %, or no greater than about 20 wt. %, of bauxite having a particle size from about 3 mm to about 6 mm (e.g., a d₅₀ from about 3 mm to about 6 mm, for example, about 4.5 mm). It may be that the (e.g., cement-free) refractory particulate composition comprises from about 10 wt. % to about 30 wt. %, for example, from about 10 wt. % to about 25 wt. %, or from about 10 wt. % to about 20 wt. %, or from about 15 wt. % to about 30 wt. %, or from about 15 wt. % to about 25 wt. %, or from about 15 wt. % to about 20 wt. %, or from about 20 wt. % to about 30 wt. %, or from about 20 wt. % to about 25 wt. %, of bauxite having a particle size from about 3 mm to about 6 mm (e.g., a d₅₀ from about 3 mm to about 6 mm, for example, about 4.5 mm).

It may be that the (e.g., cement-free) refractory particulate composition comprises bauxite having a particle size from about 1 mm to about 3 mm. For example, the (e.g., cement-free) refractory particulate composition may comprise bauxite having a d₅₀ from about 1 mm to about 3 mm, for example, about 2 mm. It may be that the (e.g., cement-free) refractory particulate composition comprises no less than about 15 wt. %, for example, no less than about 20 wt. %, or no less than about 25 wt. %, bauxite having a particle size from about 1 mm to about 3 mm (e.g., a d₅₀ from about 1 mm to about 3 mm, for example, about 2 mm). It may be that the (e.g., cement-free) refractory particulate composition comprises no greater than about 35 wt. %, for example, no greater than about 30 wt. %, or no greater than about 25 wt. %, of bauxite having a particle size from about 1 mm to about 3 mm (e.g., a d₅₀ from about 1 mm to about 3 mm, for example, about 2 mm). It may be that the (e.g., cement-free) refractory particulate composition comprises from about 15 wt. % to about 35 wt. %, for example, from about 15 wt. % to about 30 wt. %, or from about 15 wt. % to about 25 wt. %, or from about 20 wt. % to about 35 wt. %, or from about 20 wt. % to about 30 wt. %, or from about 20 wt. % to about 25 wt. %, or from about 25 wt. % to about 35 wt. %, or from about 25 wt. % to about 30 wt. %, of bauxite having a particle size from about 1 mm to about 3 mm (e.g., a d₅₀ from about 1 mm to about 3 mm, for example, about 2 mm).

It may be that the (e.g., cement-free) refractory particulate composition comprises bauxite having a particle size from about 0 mm to about 1 mm. For example, the (e.g., cement-free) refractory particulate composition may comprise bauxite having a d₅₀ no greater than about 1 mm, for example, of about 0.5 mm. It may be that the (e.g., cement-free) refractory particulate composition comprises no less than about 5 wt. %, for example, no less than about 10 wt. %, or no less than about 15 wt. %, of bauxite having a particle size from about 0 mm to about 1 mm (e.g. a d₅₀ no greater than about 1 mm, for example, of about 0.5 mm). It may be that the (e.g., cement-free) refractory particulate composition comprises no greater than about 25 wt. %, for example, no greater than about 20 wt. %, or no greater than about 16 wt. %, of bauxite having a particle size from about 0 mm to about 1 mm (e.g. a d₅₀ no greater than about 1 mm, for example, of about 0.5 mm). It may be that the (e.g., cement-free) refractory particulate composition comprises from about 5 wt. % to about 25 wt. %, for example, from about 5 wt. % to about 20 wt. %, or from about 5 wt. % to about 16 wt. %, or from about 10 wt. % to about 25 wt. %, or from about 10 wt. % to about 20 wt. %, or from about 10 wt. % to about 16 wt. %, or from about 15 wt. % to about 25 wt. %, or from about 15 wt. % to about 20 wt. %, or from about 15 wt. % to about 16 wt. %, of bauxite having a particle size from about 0 mm to about 1 mm (e.g. a d₅₀ no greater than about 1 mm, for example, of about 0.5 mm).

It may be that the (e.g., cement-free) refractory particulate composition comprises: bauxite having a a particle size from about 3 mm to about 6 mm (e.g. a d₅₀ from about 3 mm to about 6 mm, for example, about 4.5 mm); bauxite having a particle size from about 1 mm to about 3 mm (e.g. a d₅₀ from about 1 mm to about 3 mm, for example, about 2 mm); and bauxite having a particle size from about 0 mm to about 1 mm (e.g., a d₅₀ no greater than about 1 mm, for example, of about 0.5 mm). For example, it may be that the (e.g., cement-free) refractory particulate composition comprises: from about 10 wt. % to about 30 wt. %, for example, from about 10 wt. % to about 25 wt. %, or from about 10 wt. % to about 20 wt. %, or from about 15 wt. % to about 30 wt. %, or from about 15 wt. % to about 25 wt. %, or from about 15 wt. % to about 20 wt. %, or from about 20 wt. % to about 30 wt. %, or from about 20 wt. % to about 25 wt. %, of bauxite having a particle size from about 3 mm to about 6 mm (e.g., a d₅₀ from about 3 mm to about 6 mm, for example, about 4.5 mm); from about 15 wt. % to about 30 wt. %, or from about 15 wt. % to about 25 wt. %, or from about 20 wt. % to about 35 wt. %, or from about 20 wt. % to about 30 wt. %, or from about 20 wt. % to about 25 wt. %, or from about 25 wt. % to about 35 wt. %, or from about 25 wt. % to about 30 wt. %, of bauxite having a particle size from about 1 mm to about 3 mm (e.g., a d₅₀ from about 1 mm to about 3 mm, for example, about 2 mm); and from about 5 wt. % to about 25 wt. %, for example, from about 5 wt. % to about 20 wt. %, or from about 5 wt. % to about 16 wt. %, or from about 10 wt. % to about 25 wt. %, or from about 10 wt. % to about 20 wt. %, or from about 10 wt. % to about 16 wt. %, or from about 15 wt. % to about 25 wt. %, or from about 15 wt. % to about 20 wt. %, or from about 15 wt. % to about 16 wt. %, of bauxite having a particle size from about 0 mm to about 1 mm (e.g., a d₅₀ no greater than about 1 mm, for example, of about 0.5 mm).

It may be that the (e.g., cement-free) refractory particulate composition comprises no less than about 20 wt. %, for example, no less than about 25 wt. %, or no less than about 30 wt. %, or no less than about 31 wt. %, of alumina (e.g., calcined, sintered and/or fused alumina). It may be that the (e.g., cement-free) refractory particulate composition comprises no greater than about 40 wt. %, for example, no greater than about 35 wt. %, or no greater than about 34 wt. %, of alumina (e.g., calcined, sintered and/or fused alumina). It may be that the (e.g., cement-free) refractory particulate composition comprises from about 20 wt. % to about 40 wt. %, for example, from about 20 wt. % to about 35 wt. %, or from about 20 wt. % to about 34 wt. %, or from about 25 wt. % to about 40 wt. %, or from about 25 wt. % to about 35 wt. %, or from about 25 wt. % to about 34 wt. %, or from about 30 wt. % to about 40 wt. %, or from about 30 wt. % to about 35 wt. %, or from about 30 wt. % to about 34 w. %, of alumina (e.g., calcined, sintered and/or fused alumina).

Fused alumina, such as brown fused alumina, is available commercially in a grade having a particle size from about 0 mm to about 0.5 mm.

It may be that the (e.g., cement-free) refractory particulate composition comprises fused alumina, for example, brown fused alumina, such as brown fused alumina having a particle size no greater than about 0.5 mm (e.g., a d₅₀ no greater than about 0.5 mm, for example, of about 0.25 mm). It may be that the (e.g., cement-free) refractory particulate composition comprises no less than about 5 wt. %, for example, no less than about 8 wt. %, or no less than about 10 wt. %, or no less than about 12 wt. %, of fused alumina, for example, brown fused alumina, such as brown fused alumina having a particle size no greater than about 0.5 mm (e.g., a d₅₀ no greater than about 0.5 mm, for example, of about 0.25 mm). It may be that the (e.g., cement-free) refractory particulate composition comprises no greater than about 20 wt. %, for example, no greater than about 16 wt. %, or no greater than about 14 wt. %, or no greater than about 12 wt. %, of fused alumina, for example, brown fused alumina, such as brown fused alumina having a particle size no greater than about 0.5 mm (e.g., a d₅₀ no greater than about 0.5 mm, for example, of about 0.25 mm). It may be that the (e.g., cement-free) refractory particulate composition comprises from about 5 wt. % to about 20 wt. %, for example, from about 5 wt. % to about 16 wt. %, or from about 5 wt. % to about 14 wt. %, or from about 5 wt. % to about 12 wt. %, or from about 8 wt. % to about 20 wt. %, or from about 8 wt. % to about 16 wt. %, or from about 8 wt. % to about 14 wt. %, or from about 8 wt. % to about 12 wt. %, or from about 10 wt. % to about 20 wt. %, or from about 10 wt. % to about 16 wt. %, or from about 10 wt. % to about 14 wt. %, or from about 10 wt. % to about 12 wt. %, or from about 12 wt. % to about 20 wt. %, or from about 12 wt. % to about 16 wt. %, or from about 12 wt. % to about 14 wt. %, of fused alumina, for example, brown fused alumina, such as brown fused alumina having a particle size no greater than about 0.5 mm (e.g., a d₅₀ no greater than about 0.5 mm, for example, of about 0.25 mm).

It may be that the (e.g., cement-free) refractory particulate composition comprises calcined alumina, for example, calcined alumina having a d₅₀ from about 4 µm to about 6 µm. It may be that the (e.g., cement-free) refractory particulate composition comprises no less than about 10 wt. %, for example, no less than about 15 wt. %, or no less than about 20 wt. %, of calcined alumina, for example, calcined alumina having a d₅₀ from about 4 µm to about 6 µm. It may be that the (e.g., cement-free) refractory particulate composition comprises no greater than about 30 wt. %, for example, no greater than about 25 wt. %, or no greater than about 20 wt. %, of calcined alumina, for example, calcined alumina having a d₅₀ from about 4 µm to about 6 µm. It may be that the (e.g., cement-free) refractory particulate composition comprises from about 10 wt. % to about 30 wt. %, for example, from about 10 wt. % to about 25 wt. %, or from about 10 wt. % to about 20 wt. %, or from about 15 wt. % to about 30 wt. %, or from about 15 wt. % to about 25 wt. %, or from about 15 wt. % to about 20 wt. %, or from about 20 wt. % to about 30 wt. %, or from about 20 wt. % to about 25 wt. %, of calcined alumina, for example, calcined alumina having a d₅₀ from about 4 µm to about 6 µm.

It may be that the (e.g., cement-free) refractory particulate composition comprises: fused alumina, for example, brown fused alumina, such as brown fused alumina having a particle size no greater than about 0.5 mm (e.g., a d₅₀ no greater than about 0.5 mm, for example, of about 0.25 mm); and calcined alumina, for example, calcined alumina having a d₅₀ from about 4 µm to about 6 µm. It may be that the (e.g., cement-free) refractory particulate composition comprises: from about 5 wt. % to about 20 wt. %, for example, from about 5 wt. % to about 16 wt. %, or from about 5 wt. % to about 14 wt. %, or from about 5 wt. % to about 12 wt. %, or from about 8 wt. % to about 20 wt. %, or from about 8 wt. % to about 16 wt. %, or from about 8 wt. % to about 14 wt. %, or from about 8 wt. % to about 12 wt. %, or from about 10 wt. % to about 20 wt. %, or from about 10 wt. % to about 16 wt. %, or from about 10 wt. % to about 14 wt. %, or from about 10 wt. % to about 12 wt. %, or from about 12 wt. % to about 20 wt. %, or from about 12 wt. % to about 16 wt. %, or from about 12 wt. % to about 14 wt. %, of fused alumina, for example, brown fused alumina, such as brown fused alumina having a particle size no greater than about 0.5 mm (e.g., a d₅₀ no greater than about 0.5 mm, for example, of about 0.25 mm); and from about 10 wt. % to about 30 wt. %, for example, from about 10 wt. % to about 25 wt. %, or from about 10 wt. % to about 20 wt. %, or from about 15 wt. % to about 30 wt. %, or from about 15 wt. % to about 25 wt. %, or from about 15 wt. % to about 20 wt. %, or from about 20 wt. % to about 30 wt. %, or from about 20 wt. % to about 25 wt. %, of calcined alumina, for example, calcined alumina having a d₅₀ from about 4 µm to about 6 µm.

It may be that the (e.g., cement-free) refractory particulate composition comprises: bauxite having a particle size from about 3 mm to about 6 mm (e.g., a d₅₀ from about 3 mm to about 6 mm, for example, about 4.5 mm); bauxite having a particle size from about 1 mm to about 3 mm (e.g., a d₅₀ from about 1 mm to about 3 mm, for example, about 2 mm); bauxite having a particle size from about 0 mm to about 1 mm (e.g., a d₅₀ no greater than about 1 mm, for example, of about 0.5 mm); fused alumina, for example, brown fused alumina, such as brown fused alumina having a particle size from about 0 mm to about 0.5 mm (e.g., a d₅₀ no greater than about 0.5 mm, for example, of about 0.25 mm); and calcined alumina, for example, calcined alumina having a d₅₀ from about 4 µm to about 6 µm.

It may be that the (e.g., cement-free) refractory particulate composition comprises: from about 10 wt. % to about 30 wt. %, for example, from about 10 wt. % to about 25 wt. %, or from about 10 wt. % to about 20 wt. %, or from about 15 wt. % to about 30 wt. %, or from about 15 wt. % to about 25 wt. %, or from about 15 wt. % to about 20 wt. %, or from about 20 wt. % to about 30 wt. %, or from about 20 wt. % to about 25 wt. %, of bauxite having a particle size from about 3 mm to about 6 mm (e.g. a d₅₀ from about 3 mm to about 6 mm, for example, about 4.5 mm); from about 15 wt. % to about 30 wt. %, or from about 15 wt. % to about 25 wt. %, or from about 20 wt. % to about 35 wt. %, or from about 20 wt. % to about 30 wt. %, or from about 20 wt. % to about 25 wt. %, or from about 25 wt. % to about 35 wt. %, or from about 25 wt. % to about 30 wt. %, of bauxite having a particle size from about 1 mm to about 3 mm (e.g., a d₅₀ from about 1 mm to about 3 mm, for example, about 2 mm); from about 5 wt. % to about 25 wt. %, for example, from about 5 wt. % to about 20 wt. %, or from about 5 wt. % to about 16 wt. %, or from about 10 wt. % to about 25 wt. %, or from about 10 wt. % to about 20 wt. %, or from about 10 wt. % to about 16 wt. %, or from about 15 wt. % to about 25 wt. %, or from about 15 wt. % to about 20 wt. %, or from about 15 wt. % to about 16 wt. %, of bauxite having a particle size from about 0 mm to about 1 mm (e.g., a d₅₀ no greater than about 1 mm, for example, of about 0.5 mm); from about 5 wt. % to about 20 wt. %, for example, from about 5 wt. % to about 16 wt. %, or from about 5 wt. % to about 14 wt. %, or from about 5 wt. % to about 12 wt. %, or from about 8 wt. % to about 20 wt. %, or from about 8 wt. % to about 16 wt. %, or from about 8 wt. % to about 14 wt. %, or from about 8 wt. % to about 12 wt. %, or from about 10 wt. % to about 20 wt. %, or from about 10 wt. % to about 16 wt. %, or from about 10 wt. % to about 14 wt. %, or from about 10 wt. % to about 12 wt. %, or from about 12 wt. % to about 20 wt. %, or from about 12 wt. % to about 16 wt. %, or from about 12 wt. % to about 14 wt. %, of fused alumina, for example, brown fused alumina, such as brown fused alumina having a particle size no greater than about 0.5 mm (e.g., a d₅₀ no greater than about 0.5 mm, for example, of about 0.25 mm); and from about 10 wt. % to about 30 wt. %, for example, from about 10 wt. % to about 25 wt. %, or from about 10 wt. % to about 20 wt. %, or from about 15 wt. % to about 30 wt. %, or from about 15 wt. % to about 25 wt. %, or from about 15 wt. % to about 20 wt. %, or from about 20 wt. % to about 30 wt. %, or from about 20 wt. % to about 25 wt. %, of calcined alumina, for example, calcined alumina having a d₅₀ from about 4 µm to about 6 µm.

It may be that the (e.g., cement-free) refractory particulate composition comprises: from about 10 wt. % to about 30 wt. % of bauxite having a particle size from about 3 mm to about 6 mm (e.g., a d₅₀ from about 3 mm to about 6 mm, for example, of about 4.5 mm); from about 15 wt. % to about 35 wt. % of bauxite having a particle size from about 1 mm to about 3 mm (e.g., a d₅₀ from about 1 mm to about 3 mm, for example, of about 2 mm); from about 5 wt. % to about 25 wt. % of bauxite having a particle size from about 0 mm to about 1 mm (e.g., a d₅₀ no greater than about 1 mm, for example, of about 0.5 mm); from about 5 wt. % to about 25 wt. % of fused alumina, for example, brown fused alumina, for example, having a particle size no greater than about 0.5 mm (e.g., a d₅₀ no greater than about 0.5 mm, for example, of about 0.25 mm); and from about 10 wt. % to about 30 wt. % of calcined alumina, for example, having a d₅₀ from about 4 µm to about 6 µm.

The (e.g., cement-free) refractory particulate composition may be substantially free of silicon carbide (SiC). For example, the (e.g., cement-free) refractory particulate composition may comprise no greater than about 0.5 wt. %, or no greater than about 0.25 wt. %, or no greater than about 0.1 wt. %, or no greater than about 0.01 wt. %, of silicon carbide. The presence of silicon carbide can lead to excessive oxidation when the castable refractory composition is exposed to elevated temperatures, for example, greater than about 1200°C.

The (e.g., cement-free) refractory particulate composition may be substantially free of zirconium silicate (ZrSiO₄). For example, the (e.g., cement-free) refractory particulate composition may comprise no greater than about 0.5 wt. %, or no greater than about 0.25 wt. %, or no greater than about 0.1 wt. %, or no greater than about 0.01 wt. %, of zirconium silicate. The presence of zirconium silicate may degrade mechanical properties, such as the strength (e.g., the cold crushing strength), of the castable refractory composition or a refractory article made therefrom.

The (e.g., cement-free) refractory particulate composition may comprise microsilica, also known as silica fume (i.e., CAS number 69012-64-2), which is an amorphous polymorph of silica mostly collected in baghouse filters as a by-product of silicon and ferro-silicon production. A suitable microsilica is Elkem^{®} microsilica, for example, Elkem^{®} 971 U microsilica, available from Elkem Silicon Products, Norway. The microsilica may comprise no more than about 5 wt. %, for example, no more than about 1 wt. %, or no more than about 0.5 wt. %, coarse particles greater than 45 µm (measured by wet sieving using a 45 µm sieve). The (e.g., cement-free) refractory particulate composition may comprise no less than about 0.1 wt. %, for example, no less than about 0.5 wt. %, or no less than about 0.9 wt. %, or no less than about 1.0 wt. %, microsilica. The (e.g., cement-free) refractory particulate composition may comprise no greater than about 2 wt. % (e.g., no greater than about 2.0 wt. %), for example, no greater than about 1.5 wt. %, or no greater than about 1.1 wt. %, or no greater than about 1.0 wt. %, microsilica. The (e.g., cement-free) refractory particulate composition may comprise from about 0.1 wt. % to about 2 wt. % (e.g., about 2.0 wt. %), for example, from about 0.1 wt. % to about 1.5 wt. %, or from about 0.1 wt. % to about 1.1 wt. %, or from about 0.1 wt. % to about 1.0 wt. %, or from about 0.5 wt. % to about 2 wt. % (e.g., about 2.0 wt. %), or from about 0.5 wt. % to about 1.5 wt. %, or from about 0.5 wt. % to about 1.1 wt. %, or from about 0.5 wt. % to about 1.0 wt. %, or from about 0.9 wt. % to about 2 wt. % (e.g., about 2.0 wt. %), or from about 0.9 wt. % to about 1.5 wt. %, or from about 0.9 wt. % to about 1.1 wt. %, or from about 0.9 wt. % to about 1.0 wt. %, or from about 1.0 wt. % to about 2 wt. % (e.g., about 2.0 wt. %), or from about 1.0 wt. % to about 1.5 wt. %, or from about 1.0 wt. % to about 1.1 wt. %, microsilica.

The (e.g., cement-free) refractory particulate composition may comprise one or more additives. For example, the (e.g., cement-free) refractory particulate composition may comprise a deflocculant. Deflocculants are substances which, when added to a suspension of particles in liquid, cause a reduction in apparent viscosity. Deflocculants assist in dispersing a composition or maintaining a composition in a dispersed state. Deflocculants can be organic (such as humic acids, lignosulfonates, polyacrylates, polycarbonates, polyethylene glycol, etc.) or inorganic (such as sodium and potassium carbonates, sodium and potassium hydroxides, sodium silicates, phosphates, polyphosphates and sodium and ammonium oxalates, etc.). A suitable deflocculant is Castament^{®} FS 20 which is a polyethylene glycol based deflocculant available from BASF Constructions Solutions GmbH, Germany.

The (e.g., cement-free) refractory particulate composition may comprise no less than about 0.01 wt. %, for example, no less than about 0.03 wt. %, or no less than about 0.05 wt. %, of a deflocculant. The (e.g., cement-free) refractory particulate composition may comprise no greater than about 1 wt. % (e.g., no greater than about 1.0 wt. %, or no greater than about 1.00 wt. %), for example, no greater than about 0.5 wt. % (e.g., no greater than about 0.50 wt. %), or no greater than about 0.1 wt. % (e.g., no greater than about 0.10 wt. %), or no greater than about 0.05 wt. %, of a deflocculant. The (e.g., cement-free) refractory particulate composition may comprise from about 0.01 wt. % to about 1 wt. % (e.g., about 1.0 wt. %, or about 1.00 wt. %), for example, from about 0.01 wt. % to about 0.5 wt. % (e.g., about 0.50 wt. %), or from about 0.01 wt. % to about 0.1 wt. % (e.g., about 0.10 wt. %), or from about 0.01 wt. % to about 0.05 wt. %, or from about 0.03 wt. % to about 1 wt. % (e.g., about 1.0 wt. %, or about 1.00 wt. %), or from about 0.03 wt. % to about 0.5 wt. % (e.g., about 0.50 wt. %), or from about 0.03 wt. % to about 0.1 wt. % (e.g., about 0.1 wt. %), or from about 0.03 wt. % to about 0.05 wt. %, or from about 0.05 wt. % to about 1 wt. % (e.g., about 1.0 wt. %, or about 1.00 wt. %), or from about 0.05 wt. % to about 0.5 wt. % (e.g., about 0.50 wt. %), or from about 0.05 wt. % to about 0.1 wt. % (e.g., about 0.10 wt. %), of a deflocculant.

The (e.g., cement-free) refractory particulate composition may comprise a colloidal silica activator. The colloidal silica activator may weaken a suspension of colloidal silica present in the (e.g., cement-free) refractory particulate composition, causing the colloidal silica to settle and/or gel and form a 3D network of SiO-groups. Colloidal silica is typically stable against gelling and settling in a pH range of about 8 to about 10.5. The colloidal silica activator may therefore increase the pH of the (e.g., cement-free) refractory particulate composition, for example, above 10.5, to weaken the colloidal silica suspension. The colloidal silica activator may be a compound of magnesium such as magnesium oxide (i.e., magnesia (MgO)) or magnesium carbonate (i.e., magnesite (MgCO₃)). The colloidal silica activator may be dead burned magnesia (DBM). A suitable colloidal silica activator is nedMag^{®} 99, which is 99 % pure DBM, available from Nedmag B.V., the Netherlands.

The (e.g., cement-free) refractory particulate composition may comprise no less than about 0.01 wt. %, for example, no less than about 0.05 wt. %, or no less than about 0.1 wt. % (e.g., no less than about 0.10 wt. %), of the colloidal silica activator (e.g., magnesium oxide). The (e.g., cement-free) refractory particulate composition may comprise no greater than about 1 wt. % (e.g., no greater than about 1.0 wt. %, or no greater than about 1.00 wt. %), for example, no greater than about 0.5 wt. % (e.g., no greater than about 0.50 wt. %), or no greater than about 0.1 wt. % (e.g., no greater than about 0.10 wt. %), of the colloidal silica activator (e.g., magnesium oxide). The (e.g., cement-free) refractory particulate composition may comprise from about 0.01 wt. % to about 1 wt. % (e.g., about 1.0 wt. %, or about 1.00 wt. %), for example, from about 0.01 wt. % to about 0.5 wt. % (e.g., about 0.50 wt. %), or from about 0.01 wt. % to about 0.1 wt. % (e.g., about 0.10 w. %), or from about 0.05 wt. % to about 1 wt. % (e.g., about 1.0 wt. %, or about 1.00 wt. %), or from about 0.05 wt. % to about 0.5 wt. % (e.g., about 0.50 wt. %), or from about 0.05 wt. % to about 0.1 wt. % (e.g., about 0.10 wt. %), or from about 0.1 wt. % to about 1 wt. % (e.g., about 1.0 wt. %, or about 1.00 wt. %), or from about 0.1 wt. % to about 0.5 wt. % (e.g., about 0.50 wt. %), of the colloidal silica activator (e.g., magnesium oxide).

The (e.g., cement-free) refractory particulate composition may comprise no less than about 2 wt. %, for example, no less than about 3 wt. %, or no less than about 4 wt. %, or no less than about 5 wt. %, or no less than about 6 wt. %, of the metaphosphate-providing component and/or the orthophosphate-providing component (e.g., the metaphosphate salt such as aluminium metaphosphate and/or the orthophosphate salt such as aluminium orthophosphate). The (e.g., cement-free) refractory particulate composition may comprise no greater than about 20 wt. %, for example, no greater than about 15 wt. %, or no greater than about 12 wt. %, or no greater than about 11 wt. %, or no greater than about 10 wt. %, or no greater than about 9 wt. %, or no greater than about 8 wt. %, or no greater than about 7 wt. %, or no greater than about 6 wt. %, of the metaphosphate-providing component and/or the orthophosphate-providing component (e.g., the metaphosphate salt such as aluminium metaphosphate and/or the orthophosphate salt such as aluminium orthophosphate). The (e.g., cement-free) refractory particulate composition may comprise from 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the metaphosphate-providing component and/or the orthophosphate-providing component (e.g., the metaphosphate salt such as aluminium metaphosphate and/or the orthophosphate salt such as aluminium orthophosphate).

The (e.g., cement-free) refractory particulate composition may comprise no less than about 2 wt. %, for example, no less than about 3 wt. %, or no less than about 4 wt. %, or no less than about 5 wt. %, or no less than about 6 wt. %, of the metaphosphate-providing component (e.g., the metaphosphate salt such as aluminium metaphosphate). The (e.g., cement-free) refractory particulate composition may comprise no greater than about 20 wt. %, for example, no greater than about 15 wt. %, or no greater than about 12 wt. %, or no greater than about 11 wt. %, or no greater than about 10 wt. %, or no greater than about 9 wt. %, or no greater than about 8 wt. %, or no greater than about 7 wt. %, or no greater than about 6 wt. %, of the metaphosphate-providing component (e.g., the metaphosphate salt such as aluminium metaphosphate). The (e.g., cement-free) refractory particulate composition may comprise from 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the metaphosphate-providing component (e.g., the metaphosphate salt such as aluminium metaphosphate).

The (e.g., cement-free) refractory particulate composition may comprise no less than about 2 wt. %, for example, no less than about 3 wt. %, or no less than about 4 wt. %, or no less than about 5 wt. %, or no less than about 6 wt. %, of the the orthophosphate-providing component (e.g., the orthophosphate salt such as aluminium orthophosphate).

The (e.g., cement-free) refractory particulate composition may comprise no greater than about 20 wt. %, for example, no greater than about 15 wt. %, or no greater than about 12 wt. %, or no greater than about 11 wt. %, or no greater than about 10 wt. %, or no greater than about 9 wt. %, or no greater than about 8 wt. %, or no greater than about 7 wt. %, or no greater than about 6 wt. %, of the orthophosphate-providing component (e.g., the orthophosphate salt such as aluminium orthophosphate). The (e.g., cement-free) refractory particulate composition may comprise from 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the orthophosphate-providing component (e.g., the orthophosphate salt such as aluminium orthophosphate).

The (e.g., cement-free) refractory particulate composition may comprise no less than about 2 wt. %, for example, no less than about 3 wt. %, or no less than about 4 wt. %, or no less than about 5 wt. %, or no less than about 6 wt. %, of the metaphosphate-providing component and the orthophosphate-providing component (e.g., the metaphosphate salt such as aluminium metaphosphate and the orthophosphate salt such as aluminium orthophosphate) in combination. The (e.g., cement-free) refractory particulate composition may comprise no greater than about 20 wt. %, for example, no greater than about 15 wt. %, or no greater than about 12 wt. %, or no greater than about 11 wt. %, or no greater than about 10 wt. %, or no greater than about 9 wt. %, or no greater than about 8 wt. %, or no greater than about 7 wt. %, or no greater than about 6 wt. %, of the metaphosphate-providing component and the orthophosphate-providing component (e.g., the metaphosphate salt such as aluminium metaphosphate and the orthophosphate salt such as aluminium orthophosphate) in combination. The (e.g., cement-free) refractory particulate composition may comprise from 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the metaphosphate-providing component and the orthophosphate-providing component (e.g., the metaphosphate salt such as aluminium metaphosphate and the orthophosphate salt such as aluminium orthophosphate) in combination.

In some embodiments, the (e.g., cement-free) refractory particulate composition comprises a metaphosphate-providing component and does not comprise an orthophosphate-providing component, i.e., the (e.g., cement-free) refractory particulate composition is substantially free of orthophosphate-providing components. For example, the (e.g., cement-free) refractory particulate composition may be substantially free of phosphate-providing components other than metaphosphate-providing components. For example, the (e.g., cement-free) refractory particulate composition may be substantially free of orthophosphate salts such as trisodium phosphate (Na₃PO₄, also known as sodium orthophosphate or trisodium orthophosphate), tripotassium phosphate (K₃PO₄, also known as potassium orthophosphate or tripotassium orthophosphate) or aluminium phosphate (AlPO₄, also known as aluminium orthophosphate). The (e.g., cement-free) refractory particulate composition may comprise no greater than about 0.5 wt. %, for example, no greater than about 0.25 wt. %, or no greater than about 0.1 wt. %, or no greater than about 0.01 wt. %, of phosphate-providing components other than metaphosphate-providing components. The (e.g., cement-free) refractory particulate composition may comprise no greater than about 0.5 wt. %, for example, no greater than about 0.25 wt. %, or no greater than about 0.1 wt. %, or no greater than about 0.01 wt. %, of orthophosphate-providing components. The (e.g., cement-free) refractory particulate composition may comprise no greater than about 0.5 wt. %, for example, no greater than about 0.25 wt. %, or no greater than about 0.1 wt. %, or no greater than about 0.01 wt. %, of orthophosphate salts such as Na₃PO₄, K₃PO₄ or AlPO₄.

In some embodiments, the (e.g., cement-free) refractory particulate composition comprises an orthophosphate-providing component and does not comprise a metaphosphate-providing component, i.e., the (e.g., cement-free) refractory particulate composition is substantially free of metaphosphate-providing components. For example, the (e.g., cement-free) refractory particulate composition may be substantially free of phosphate-providing components other than orthophosphate-providing components. For example, the (e.g., cement-free) refractory particulate composition may be substantially free of metaphosphate salts such as sodium metaphosphate (NaPO₃), potassium metaphosphate (KPO₃) or aluminium metaphosphate (Al(PO₃)₃). The (e.g., cement-free) refractory particulate composition may comprise no greater than about 0.5 wt. %, for example, no greater than about 0.25 wt. %, or no greater than about 0.1 wt. %, or no greater than about 0.01 wt. %, of phosphate-providing components other than orthophosphate-providing components. The (e.g., cement-free) refractory particulate composition may comprise no greater than about 0.5 wt. %, for example, no greater than about 0.25 wt. %, or no greater than about 0.1 wt. %, or no greater than about 0.01 wt. %, of metaphosphate-providing components. The (e.g., cement-free) refractory particulate composition may comprise no greater than about 0.5 wt. %, for example, no greater than about 0.25 wt. %, or no greater than about 0.1 wt. %, or no greater than about 0.01 wt. %, of metaphosphate salts such as NaPO₃, KPO₃ or Al(PO₃)₃.

In some embodiments, the (e.g., cement-free) refractory particulate composition comprises a metaphosphate-providing component and an orthophosphate-providing component. The (e.g., cement-free) refractory particulate composition may be substantially free of phosphate-providing components other than metaphosphate-providing components or orthophosphate-providing components. For example, the (e.g., cement-free) refractory particulate composition may be substantially free of pyrophosphate-providing components. The (e.g., cement-free) refractory particulate composition may comprise no greater than about 0.5 wt. %, for example, no greater than about 0.25 wt. %, or no greater than about 0.1 wt. %, or no greater than about 0.01 wt. %, of phosphate-providing components other than metaphosphate-providing components or orthophosphate-providing components.

### Sol binder

A sol binder is a colloid (i.e., a colloidal suspension) of binder (i.e., binder particles) in a liquid.

The sol binder may comprise silica, alumina and/or spinel. That is to say, the binder component of the sol binder may comprise (e.g., consist essentially of, or consist of) silica, alumina and/or spinel.

Preferably, the sol binder comprises silica (i.e., the binder component of the sol binder comprises (e.g., consists essentially of, or consists of) silica). The silica may be colloidal silica.

The (e.g., colloidal) silica may have a d₅₀ no less than about 1 nm, for example, no less than about 10 nm, or no less than about 100 nm, or no less than about 1 µm, or no less than about 5 µm , or no less than about 10 µm, or no less than about 15 µm, or no less than about 20 µm. The (e.g., colloidal) silica may have a d₅₀ no greater than about 100 µm, for example, no greater than about 50 µm, or no greater than about 30 µm, or no greater than about 25 µm, or no greater than about 20 µm, or no greater than about 10 µm, or no greater than about 1 µm , or no greater than about 100 nm. The (e.g., colloidal) silica may have a d50 from about 1 nm to about 100 µm , for example, from about 1 nm to about 50 µm, or from about 1 nm to about 30 µm, or from about 1 nm to about 20 µm, or from about 1 nm to about 10 µm, or from about 1 nm to about 1 µm, or from about 1 nm to about 100 nm, or from about 1 µm to about 50 µm, or from about 1 µm to about 30 µm, or from about 1 µm to about 20 µm, or from about 5 µm to about 50 µm , or from about 5 µm to about 30 µm, or from about 5 µm to about 20 µm, or from about 5 µm to about 10 µm, or from about 10 µm to about 50 µm, or from about 10 µm to about 30 µm, or from about 10 µm to about 20 µm, or from about 20 µm to about 50 µm, or from about 20 µm to about 30 µm , or from about 15 µm to about 25 µm.

The (e.g., colloidal) silica may have a (e.g. BET) specific surface area no less than about 50 m²/g, for example, no less than about 100 m²/g, or no less than about 120 m²/g, or no less than about 130 m²/g, or no less than about 140 m²/g. The (e.g., colloidal) silica may have a (e.g. BET) specific surface area no greater than about 300 m²/g, for example, no greater than about 250 m²/g, or no greater than about 200 m²/g, or no greater than about 175 m²/g, or no greater than about 150 m²/g, or no greater than about 140 m²/g. The (e.g., colloidal) silica may have a (e.g. BET) specific surface area from about 50 m²/g to about 300 m²/g, for example, from about 50 m²/g to about 250 m²/g, or from about 50 m²/g to about 200 m²/g, or from about 50 m²/g to about 175 m²/g, or from about 50 m²/g to about 150 m²/g, or from about 50 m²/g to about 140 m²/g, or from about 100 m²/g to about 300 m²/g, or from about 100 m²/g to about 250 m²/g, or from about 100 m²/g to about 200 m²/g, or from about 100 m²/g to about 175 m²/g, or from about 100 m²/g to about 150 m²/g, or from about 100 m²/g to about 140 m²/g, or from about 120 m²/g to about 300 m²/g, or from about 120 m²/g to about 250 m²/g, or from about 120 m²/g to about 200 m²/g, or from about 120 m²/g to about 175 m²/g, or from about 120 m²/g to about 150 m²/g, or from about 130 m²/g to about 300 m²/g, or from about 130 m²/g to about 250 m²/g, or from about 130 m²/g to about 200 m²/g, or from about 130 m²/g to about 175 m²/g, or from about 130 m²/g to about 150 m²/g, or from about 140 m²/g to about 300 m²/g, or from about 140 m²/g to about 250 m²/g, or from about 140 m²/g to about 200 m²/g, or from about 140 m²/g to about 175 m²/g, or from about 140 m²/g to about 150 m²/g.

It may be that the sol binder comprises (i.e., prior to drying) no less than about 20 wt. %, for example, no less than about 30 wt. %, or no less than about 35 wt. %, or no less than about 40 wt. %, binder such as silica (e.g., colloidal silica). It may be that the sol binder comprises (i.e., prior to drying) no greater than about 50 wt. %, for example, no greater than about 45 wt. %, or no greater than about 40 wt. %, or no greater than about 35 wt. %, binder such as silica (e.g., colloidal silica). It may be that the sol binder comprises (i.e., prior to drying) from about 20 wt. % to about 50 wt. %, for example, from about 20 wt. % to about 45 wt. %, or from about 20 wt. % to about 40 wt. %, or from about 20 wt. % to about 35 wt. %, or from about 30 wt. % to about 50 wt. %, or from about 30 wt. % to about 45 wt. %, or from about 30 wt. % to about 40 wt. %, or from about 30 wt. % to about 35 wt. %, or from about 35 wt. % to about 50 wt. %, or from about 35 wt. % to about 45 wt. %, or from about 35 wt. % to about 40 wt. %, or from about 40 wt. % to about 50 wt. %, or from about 40 wt. % to about 45 wt. %, binder such as silica (e.g., colloidal silica).

The sol binder may be an aqueous sol binder. Accordingly, the sol binder may comprise water. That is to say, the liquid component of the sol binder may comprise (e.g., consist essentially of, or consist of) water.

It may be that the sol binder comprises (i.e., prior to drying) no less than about 50 wt. %, for example, no less than about 55 wt. %, or no less than about 60 wt. %, or no less than about 65 wt. %, or no less than about 70 wt. %, water. It may be that the sol binder comprises (i.e., prior to drying) no greater than about 80 wt. %, for example, no greater than about 75 wt. %, or no greater than about 70 wt. %, or no greater than about 65 wt. %, or no greater than about 60 wt. %, water. It may be that the sol binder comprises (i.e., prior to drying) from about 50 wt. % to about 80 wt. %, for example, from about 50 wt. % to about 75 wt. %, or from about 50 wt. % to about 70 wt. %, or from about 50 wt. % to about 65 wt. %, or from about 50 wt. % to about 60 wt. %, or from about 55 wt. % to about 80 wt. %, or from about 55 wt. % to about 75 wt. %, or from about 55 wt. % to about 70 wt. %, or from about 55 wt. % to about 65 wt. %, or from about 55 wt. % to about 60 wt. %, or from about 60 wt. % to about 80 wt. %, or from about 60 wt. % to about 75 wt. %, or from about 60 wt. % to about 70 wt. %, or from about 60 wt. % to about 65 wt. %, or from about 65 wt. % to about 80 wt. %, or from about 65 wt. % to about 75 wt. %, or from about 65 wt. % to about 70 wt. %, or from about 70 wt. % to about 80 wt. %, or from about 70 wt. % to about 75 wt. %, water.

It may be that the sol binder comprises one or more additives, for example, an antifreeze agent such as ethylene glycol (i.e., monoethylene glycol), propylene glycol, propylene glycol methyl ether or glycerol.

It may be that the sol binder comprises (i.e., prior to drying) no less than about 1 wt. % (e.g., no less than about 1.0 wt. %), for example, no less than about 2 wt. % (e.g., no less than about 2.0 wt. %), or no less than about 3 wt. % (e.g., no less than about 3.0 wt. %), or no less than about 4 wt. % (e.g., no less than about 4.0 wt. %), or no less than about 4.5 wt. %, of additives, for example of antifreeze agent such as ethylene glycol (i.e., monoethylene glycol), propylene glycol, propylene glycol methyl ether or glycerol. It may be that the sol binder comprises (i.e., prior to drying) no greater than about 10 wt. % (e.g., no greater than about 10.0 wt. %), for example, no greater than about 9 wt. % (e.g., no greater than about 9.0 wt. %), or no greater than 8 wt. % (e.g., no greater than about 8.0 wt. %), or no greater than about 7 wt. % (e.g., no greater than about 7.0 wt. %), or no greater than about 6 wt. % (e.g., no greater than about 6.0 wt. %), or no greater than about 5.5 wt. %, of additives, for example of antifreeze agent such as ethylene glycol (i.e., monoethylene glycol), propylene glycol, propylene glycol methyl ether or glycerol. It may be that the sol binder comprises (i.e., prior to drying) from about 1 wt. % to about 10 wt. %, for example, from about 1 wt. % to about 9 wt. %, or from about 1 wt. % to about 8 wt. %, or from about 1 wt. % to about 7 wt. %, or from about 1 wt. % to about 6 wt. %, or from about 1 wt. % to about 5.5 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 2 wt. % to about 5.5 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 3 wt. % to about 5.5 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 4 wt. % to about 5.5 wt. %, or from about 4.5 wt. % to about 10 wt. %, or from about 4.5 wt. % to about 9 wt. %, or from about 4.5 wt. % to about 8 wt. %, or from about 4.5 wt. % to about 7 wt. %, or from about 4.5 wt. % to about 6 wt. %, or from about 4.5 wt. % to about 5.5 wt. %, of additives, for example of antifreeze agent such as ethylene glycol (i.e., monoethylene glycol), propylene glycol, propylene glycol methyl ether or glycerol.

It may be that the sol binder comprises (i.e., prior to drying): from about 20 wt. % to about 50 wt. %, for example, from about 20 wt. % to about 45 wt. %, or from about 20 wt. % to about 40 wt. %, or from about 20 wt. % to about 35 wt %, or from about 30 wt. % to about 50 wt. %, or from about 30 wt. % to about 45 wt. %, or from about 30 wt. % to about 40 wt. %, or from about 30 wt. % to about 35 wt %, or from about 35 wt. % to about 50 wt. %, or from about 35 wt. % to about 45 wt. %, or from about 35 wt. % to about 40 wt. %, or from about 40 wt. % to about 50 wt. %, or from about 40 wt. % to about 45 wt. %, binder such as silica (e.g., colloidal silica); from about 50 wt. % to about 80 wt. %, for example, from about 50 wt. % to about 75 wt. %, or from about 50 wt. % to about 70 wt. %, or from about 50 wt. % to about 65 wt. %, or from about 50 wt. % to about 60 wt. %, or from about 55 wt. % to about 80 wt. %, or from about 55 wt. % to about 75 wt. %, or from about 55 wt. % to about 70 wt. %, or from about 55 wt. % to about 65 wt. %, or from about 55 wt. % to about 60 wt. %, or from about 60 wt. % to about 80 wt. %, or from about 60 wt. % to about 75 wt. %, or from about 60 wt. % to about 70 wt. %, or from about 60 wt. % to about 65 wt. %, or from about 65 wt. % to about 80 wt. %, or from about 65 wt. % to about 75 wt. %, or from about 65 wt. % to about 70 wt. %, or from about 70 wt. % to about 80 wt. %, or from about 70 wt. % to about 75 wt. %, water; and, optionally, from about 1 wt. % to about 10 wt. %, for example, from about 1 wt. % to about 9 wt. %, or from about 1 wt. % to about 8 wt. %, or from about 1 wt. % to about 7 wt. %, or from about 1 wt. % to about 6 wt. %, or from about 1 wt. % to about 5.5 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 2 wt. % to about 5.5 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 3 wt. % to about 5.5 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 4 wt. % to about 5.5 wt. %, or from about 4.5 wt. % to about 10 wt. %, or from about 4.5 wt. % to about 9 wt. %, or from about 4.5 wt. % to about 8 wt. %, or from about 4.5 wt. % to about 7 wt. %, or from about 4.5 wt. % to about 6 wt. %, or from about 4.5 wt. % to about 5.5 wt. %, of additives, for example of antifreeze agent such as ethylene glycol (i.e., monoethylene glycol), propylene glycol, propylene glycol methyl ether or glycerol.

It may be that the sol binder comprises (i.e., prior to drying): from about 20 wt. % to about 50 wt. %, for example, from about 20 wt. % to about 45 wt. %, or from about 20 wt. % to about 40 wt. %, or from about 20 wt. % to about 35 wt %, or from about 30 wt. % to about 50 wt. %, or from about 30 wt. % to about 45 wt. %, or from about 30 wt. % to about 40 wt. %, or from about 30 wt. % to about 35 wt %, or from about 35 wt. % to about 50 wt. %, or from about 35 wt. % to about 45 wt. %, or from about 35 wt. % to about 40 wt. %, or from about 40 wt. % to about 50 wt. %, or from about 40 wt. % to about 45 wt. %, of colloidal silica; from about 50 wt. % to about 80 wt. %, for example, from about 50 wt. % to about 75 wt. %, or from about 50 wt. % to about 70 wt. %, or from about 50 wt. % to about 65 wt. %, or from about 50 wt. % to about 60 wt. %, or from about 55 wt. % to about 80 wt. %, or from about 55 wt. % to about 75 wt. %, or from about 55 wt. % to about 70 wt. %, or from about 55 wt. % to about 65 wt. %, or from about 55 wt. % to about 60 wt. %, or from about 60 wt. % to about 80 wt. %, or from about 60 wt. % to about 75 wt. %, or from about 60 wt. % to about 70 wt. %, or from about 60 wt. % to about 65 wt. %, or from about 65 wt. % to about 80 wt. %, or from about 65 wt. % to about 75 wt. %, or from about 65 wt. % to about 70 wt. %, or from about 70 wt. % to about 80 wt. %, or from about 70 wt. % to about 75 wt. %, water; and from about 1 wt. % to about 10 wt. %, for example, from about 1 wt. % to about 9 wt. %, or from about 1 wt. % to about 8 wt. %, or from about 1 wt. % to about 7 wt. %, or from about 1 wt. % to about 6 wt. %, or from about 1 wt. % to about 5.5 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 2 wt. % to about 5.5 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 3 wt. % to about 5.5 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 4 wt. % to about 5.5 wt. %, or from about 4.5 wt. % to about 10 wt. %, or from about 4.5 wt. % to about 9 wt. %, or from about 4.5 wt. % to about 8 wt. %, or from about 4.5 wt. % to about 7 wt. %, or from about 4.5 wt. % to about 6 wt. %, or from about 4.5 wt. % to about 5.5 wt. %, of antifreeze agent such as ethylene glycol.

It may be that the sol binder consists essentially of (e.g., consists of) (i.e., prior to drying): from about 20 wt. % to about 50 wt. %, for example, from about 20 wt. % to about 45 wt. %, or from about 20 wt. % to about 40 wt. %, or from about 20 wt. % to about 35 wt %, or from about 30 wt. % to about 50 wt. %, or from about 30 wt. % to about 45 wt. %, or from about 30 wt. % to about 40 wt. %, or from about 30 wt. % to about 35 wt %, or from about 35 wt. % to about 50 wt. %, or from about 35 wt. % to about 45 wt. %, or from about 35 wt. % to about 40 wt. %, or from about 40 wt. % to about 50 wt. %, or from about 40 wt. % to about 45 wt. %, of colloidal silica; from about 50 wt. % to about 80 wt. %, for example, from about 50 wt. % to about 75 wt. %, or from about 50 wt. % to about 70 wt. %, or from about 50 wt. % to about 65 wt. %, or from about 50 wt. % to about 60 wt. %, or from about 55 wt. % to about 80 wt. %, or from about 55 wt. % to about 75 wt. %, or from about 55 wt. % to about 70 wt. %, or from about 55 wt. % to about 65 wt. %, or from about 55 wt. % to about 60 wt. %, or from about 60 wt. % to about 80 wt. %, or from about 60 wt. % to about 75 wt. %, or from about 60 wt. % to about 70 wt. %, or from about 60 wt. % to about 65 wt. %, or from about 65 wt. % to about 80 wt. %, or from about 65 wt. % to about 75 wt. %, or from about 65 wt. % to about 70 wt. %, or from about 70 wt. % to about 80 wt. %, or from about 70 wt. % to about 75 wt. %, water; and from about 1 wt. % to about 10 wt. %, for example, from about 1 wt. % to about 9 wt. %, or from about 1 wt. % to about 8 wt. %, or from about 1 wt. % to about 7 wt. %, or from about 1 wt. % to about 6 wt. %, or from about 1 wt. % to about 5.5 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 2 wt. % to about 5.5 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 3 wt. % to about 5.5 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 4 wt. % to about 5.5 wt. %, or from about 4.5 wt. % to about 10 wt. %, or from about 4.5 wt. % to about 9 wt. %, or from about 4.5 wt. % to about 8 wt. %, or from about 4.5 wt. % to about 7 wt. %, or from about 4.5 wt. % to about 6 wt. %, or from about 4.5 wt. % to about 5.5 wt. %, of ethylene glycol.

The sol binder is typically cement-free. That is to say, sol binder may be substantially free of cementitious material such as calcium aluminate cement (CAC) and/or calcium silicate cement (CSC). For example, the sol binder may comprise no greater than about 0.5 wt. %, for example, no greater than about 0.25 wt. %, or no greater than about 0.1 wt. %, or no greater than about 0.01 wt. %, cementitious material such as CAC and/or CSC.

The sol binder may comprise no less than about 20 wt. %, for example, no less than about 30 wt. %, or no less than about 35 wt. %, or no less than about 40 wt. %, solids. The sol binder may comprise no greater than about 60 wt. %, for example, no greater than about 50 wt. %, or no greater than about 45 wt. %, or no greater than about 40 wt. %, solids. The sol binder may comprise from about 20 wt. % to about 60 wt. %, for example, from about 20 wt. % to about 50 wt. %, or from about 20 wt. % to about 45 wt. %, or from about 20 wt. % to about 40 wt. %, or from about 30 wt. % to about 60 wt. %, or from about 30 wt. % to about 50 wt. %, or from about 30 wt. % to about 45 wt. %, or from about 30 wt. % to about 40 wt. %, or from about 35 wt. % to about 60 wt. %, or from about 35 wt. % to about 50 wt. %, or from about 35 wt. % to about 45 wt. %, or from about 35 wt. % to about 40 wt. %, or from about 40 wt. % to about 60 wt. %, or from about 40 wt. % to about 50 wt. %, or from about 40 wt. % to about 45 wt. %, solids.

The sol binder may have a residue of no less than about 20 wt. %, for example, no less than about 30 wt. %, or no less than about 35 wt. %, or no less than about 40 wt. %, when all liquid is removed. The sol binder may have a residue of no greater than about 60 wt. %, for example, no greater than about 50 wt. %, or no greater than about 45 wt. %, or no greater than about 40 wt. %, when all liquid is removed. The sol binder may have a residue from about 20 wt. % to about 60 wt. %, for example, from about 20 wt. % to about 50 wt. %, or from about 20 wt. % to about 45 wt. %, or from about 20 wt. % to about 40 wt. %, or from about 30 wt. % to about 60 wt. %, or from about 30 wt. % to about 50 wt. %, or from about 30 wt. % to about 45 wt. %, or from about 30 wt. % to about 40 wt. %, or from about 35 wt. % to about 60 wt. %, or from about 35 wt. % to about 50 wt. %, or from about 35 wt. % to about 45 wt. %, or from about 35 wt. % to about 40 wt. %, or from about 40 wt. % to about 60 wt. %, or from about 40 wt. % to about 50 wt. %, or from about 40 wt. % to about 45 wt. %, when all liquid is removed.

The sol binder may have a silicon dioxide (SiO₂) content of no less than about 20 wt. %, for example, no less than about 30 wt. %, or no less than about 35 wt. %, or no less than about 39 wt. %. The sol binder may have a silicon dioxide (SiO₂) content of no greater than about 60 wt. %, for example, no greater than about 50 wt. %, or no greater than about 45 wt. %, or no greater than about 40 wt. %. The sol binder may have a silicon dioxide (SiO₂) content from about 20 wt. % to about 60 wt. %, for example, from about 20 wt. % to about 50 wt. %, or from about 20 wt. % to about 45 wt. %, or from about 20 wt. % to about 40 wt. %, or from about 30 wt. % to about 60 wt. %, or from about 30 wt. % to about 50 wt. %, or from about 30 wt. % to about 45 wt. %, or from about 30 wt. % to about 40 wt. %, or from about 35 wt. % to about 60 wt. %, or from about 35 wt. % to about 50 wt. %, or from about 35 wt. % to about 45 wt. %, or from about 35 wt. % to about 40 wt. %, or from about 39 wt. % to about 60 wt. %, or from about 39 wt. % to about 50 wt. %, or from about 39 wt. % to about 45 wt. %, or from about 39 wt. % to about 40 wt. %.

The silica (e.g. colloidal silica) may have a silicon dioxide (SiO₂) content of no less than about 99.0 wt. %, for example, no less than about 99.5 wt. %.

The sol binder may have a density (determined from the weight of 1 litre of sol binder suspension) at 20°C no less than about 1.1 g/cm³ (e.g., no less than about 1.10 g/cm³), for example, no less than about 1.2 g/cm³ (e.g., no less than about 1.20 g/cm³), or no less than about 1.25 g/cm³, or no less than about 1.28 g/cm³. The sol binder may have a density (determined from the weight of 1 litre of sol binder suspension) at 20°C no greater than about 1.5 g/cm³ (e.g., no greater than about 1.50 g/cm³), for example, no greater than about 1.4 g/cm³ (e.g., no greater than about 1.40 g/cm³), or no greater than about 1.35 g/cm³, or no greater than about 1.3 g/cm³ (e.g., no greater than about 1.30 g/cm³), or no greater than about 1.29 g/cm³. The sol binder may have a density (determined from the weight of 1 litre of sol binder suspension) at 20°C from about 1.1 g/cm³to about 1.5 g/cm³, for example, from about 1.1 g/cm³to about 1.4 g/cm³, or from about 1.1 g/cm³to about 1.35 g/cm³, or from about 1.1 g/cm³to about 1.3 g/cm³, or from about 1.1 g/cm³ to about 1.29 g/cm³, or from about 1.2 g/cm³to about 1.5 g/cm³, or from about 1.2 g/cm³to about 1.4 g/cm³, or from about 1.2 g/cm³to about 1.35 g/cm³, or from about 1.2 g/cm³ to about 1.3 g/cm³, or from about 1.2 g/cm³ to about 1.29 g/cm³, or from about 1.25 g/cm³ to about 1.5 g/cm³, or from about 1.25 g/cm³ to about 1.4 g/cm³, or from about 1.25 g/cm³ to about 1.35 g/cm³, or from about 1.25 g/cm³ to about 1.3 g/cm³, or from about 1.25 g/cm³ to about 1.29 g/cm³, or from about 1.28 g/cm³to about 1.5 g/cm³, or from about 1.28 g/cm³ to about 1.4 g/cm³, or from about 1.28 g/cm³ to about 1.35 g/cm³, or from about 1.28 g/cm³ to about 1.3 g/cm³, or from about 1.28 g/cm³ to about 1.29 g/cm³.

The sol binder may have a free alkalinity (as Na₂O) no less than about 0.1 wt. % (e.g., no less than about 0.10 wt. %), for example, no less than about 0.2 wt. % (e.g., no less than about 0.20 wt. %), or no less than about 0.25 wt. %, or no less than about 0.26 wt. %. The sol binder may have a free alkalinity (as Na₂O) no greater than about 0.4 wt. % (e.g., no greater than about 0.40 wt. %), for example, no greater than about 0.3 wt. % (e.g., no greater than about 0.40 wt. %), or no greater than about 0.27 wt. %, or no greater than about 0.26 wt. %. The sol binder may have a free alkalinity (as Na₂O) from about 0.1 wt. % to about 0.4 wt. %, for example, from about 0.1 wt. % to about 0.3 wt. %, or from about 0.1 wt. % to about 0.27 wt. %, or from about 0.1 wt. % to about 0.26 wt. %, or from about 0.2 wt. % to about 0.4 wt. %, or from about 0.2 wt. % to about 0.3 wt. %, or from about 0.2 wt. % to about 0.27 wt. %, or from about 0.2 wt. % to about 0.26 wt. %, or from about 0.25 wt. % to about 0.4 wt. %, or from about 0.25 wt. % to about 0.3 wt. %, or from about 0.25 wt. % to about 0.27 wt. %, or from about 0.25 wt. % to about 0.26 wt. %, or from about 0.26 wt. % to about 0.4 wt. %, or from about 0.26 wt. % to about 0.3 wt. %, or from about 0.26 wt. % to about 0.27 wt. %.

The sol binder may be alkaline. The sol binder may have a pH at 25°C greater than about 7. The sol binder may have a pH at 25°C no less than about 8 (e.g., no less than about 8.0), for example, no less than about 9 (e.g., no less than about 9.0), or no less than about 9.5, or no less than about 9.6. The sol binder may have a pH at 25°C no greater than about 11 (e.g., no greater than about 11.0), for example, no greater than about 10 (e.g., no greater than about 10.0), or no greater than about 9.7, or no greater than about 9.6. The sol binder may have a pH at 25°C from about 8 to about 11, for example, from about 8 to about 10, or from about 8 to about 9.7, or from about 8 to about 9.6, or from about 9 to about 11, or from about 9 to about 10, or from about 9 to about 9.7, or from about 9 to about 9.6, or from about 9.5 to about 11, or from about 9.5 to about 10, or from about 9.5 to about 9.7, or from about 9.5 to about 9.6, or from about 9.6 to about 11, or from about 9.6 to about 10, or from about 9.6 to about 9.7.

The sol binder may have an apparent viscosity (i.e., η, determined using a rheometer) at 25°C and at a shear rate (i.e., γ) of 50 s⁻¹ no less than about 4 mPa·s, for example, no less than about 5 mPa·s, or no less than about 6 mPa·s, or no less than about 7 mPa·s, or no less than about 8 mPa·s, or no less than about 9 mPa·s. The sol binder may have an apparent viscosity (i.e., η, determined using a rheometer) at 25°C and at a shear rate (i.e., γ) of 50 s⁻¹ no greater than about 35 mPa·s, for example, no greater than about 30 mPa·s, or no greater than about 25 mPa·s, or no greater than about 20 mPa·s, or no greater than about 15 mPa·s, or no greater than about 10 mPa·s, or no greater than about 9 mPa·s. The sol binder may have an apparent viscosity (i.e., η, determined using a rheometer) at 25°C and at a shear rate (i.e., γ) of 50 s⁻¹ from about 4 mPa·s to about 35 mPa·s, for example, from about 4 mPa·s to about 30 mPa·s, or from about 4 mPa·s to about 25 mPa·s, or from about 4 mPa·s to about 20 mPa·s, or from about 4 mPa·s to about 15 mPa·s, or from about 4 mPa·s to about 10 mPa·s, or from about 4 mPa·s to about 9 mPa·s, or from about 5 mPa·s to about 20 mPa·s, or from about 5 mPa·s to about 15 mPa·s, or from about 5 mPa·s to about 10 mPa·s, or from about 5 mPa·s to about 9 mPa·s, or from about 6 mPa·s to about 20 mPa·s, or from about 6 mPa·s to about 15 mPa·s, or from about 6 mPa·s to about 10 mPa·s, or from about 6 mPa·s to about 9 mPa·s, or from about 7 mPa·s to about 20 mPa·s, or from about 7 mPa·s to about 15 mPa·s, or from about 7 mPa·s to about 10 mPa·s, or from about 7 mPa·s to about 9 mPa·s, or from about 8 mPa·s to about 20 mPa·s, or from about 8 mPa·s to about 15 mPa·s, or from about 8 mPa·s to about 10 mPa·s, or from about 8 mPa·s to about 9 mPa·s, or from about 9 mPa·s to about 20 mPa·s, or from about 9 mPa·s to about 15 mPa·s, or from about 9 mPa·s to about 10 mPa·s. The inventors have found that use of a less viscous sol binder enables use of relatively less water in the castable refractory composition, which leads to improvements in mechanical properties such as the cold crushing strength.

The (e.g., cement-free) castable refractory composition may comprise: the refractory particulate composition; and a sol binder comprising colloidal silica and having an apparent viscosity (i.e., η) at 25°C and at a shear rate (i.e., γ) of 50 s⁻¹ from about 4 mPa·s to about 35 mPa·s, for example, from about 4 mPa·s to about 30 mPa·s, or from about 4 mPa·s to about 25 mPa·s, or from about 4 mPa·s to about 20 mPa·s, or from about 4 mPa·s to about 15 mPa·s, or from about 4 mPa·s to about 10 mPa·s, or from about 4 mPa·s to about 9 mPa·s, or from about 5 mPa·s to about 20 mPa·s, or from about 5 mPa·s to about 15 mPa·s, or from about 5 mPa·s to about 10 mPa·s, or from about 5 mPa·s to about 9 mPa·s, or from about 6 mPa·s to about 20 mPa·s, or from about 6 mPa·s to about 15 mPa·s, or from about 6 mPa·s to about 10 mPa·s, or from about 6 mPa·s to about 9 mPa·s, or from about 7 mPa·s to about 20 mPa·s, or from about 7 mPa·s to about 15 mPa·s, or from about 7 mPa·s to about 10 mPa·s, or from about 7 mPa·s to about 9 mPa·s, or from about 8 mPa·s to about 20 mPa·s, or from about 8 mPa·s to about 15 mPa·s, or from about 8 mPa·s to about 10 mPa·s, or from about 8 mPa·s to about 9 mPa·s, or from about 9 mPa·s to about 20 mPa·s, or from about 9 mPa·s to about 15 mPa·s, or from about 9 mPa·s to about 10 mPa·s; wherein the castable refractory composition comprises aluminium metaphosphate and/or aluminium orthophosphate.

The (e.g., cement-free) castable refractory composition may comprise (e.g., prior to drying of the castable refractory composition): from about 70 wt. % to about 93 wt. %, for example, from about 70 wt. % to about 90 wt. %, or from about 70 wt. % to about 85 wt. %, or from about 70 wt. % to about 80 wt. %, or from about 70 wt. % to about 75 wt. %, or from about 75 wt. % to about 93 wt. %, or from about 75 wt. % to about 90 wt. %, or from about 75 wt. % to about 85 wt. %, or from about 75 wt. % to about 80 wt. %, or from about 80 wt. % to about 93 wt. %, or from about 80 wt. % to about 90 wt. %, or from about 80 wt. % to about 85 wt. %, or from about 85 wt. % to about 93 wt. %, or from about 85 wt. % to about 90 wt. %, or from about 90 wt. % to about 93 wt. %, of the refractory particulate composition; and from about 5 wt. % to about 15 wt. %, for example, from about 5 wt. % to about 12.5 wt. %, or from about 5 wt. % to about 10 wt. %, or from about 5 wt. % to about 7.5 wt. %, or from about 7.5 wt. % to about 15 wt. %, or from about 7.5 wt. % to about 12.5 wt. %, or from about 7.5 wt. % to about 10 wt. %, or from about 10 wt. % to about 15 wt. %, or from about 10 wt. % to about 12.5 wt. %, or from about 12.5 wt. % to about 15 wt. %, of the sol binder comprising colloidal silica and having an apparent viscosity (i.e., η) at 25°C and at a shear rate (i.e., γ) of 50 s⁻¹ from about 4 mPa·s to about 35 mPa·s, for example, from about 4 mPa·s to about 30 mPa·s, or from about 4 mPa·s to about 25 mPa·s, or from about 4 mPa·s to about 20 mPa·s, or from about 4 mPa·s to about 15 mPa·s, or from about 4 mPa·s to about 10 mPa·s, or from about 4 mPa·s to about 9 mPa·s, or from about 5 mPa·s to about 20 mPa·s, or from about 5 mPa·s to about 15 mPa·s, or from about 5 mPa·s to about 10 mPa·s, or from about 5 mPa·s to about 9 mPa·s, or from about 6 mPa·s to about 20 mPa·s, or from about 6 mPa·s to about 15 mPa·s, or from about 6 mPa·s to about 10 mPa·s, or from about 6 mPa·s to about 9 mPa·s, or from about 7 mPa·s to about 20 mPa·s, or from about 7 mPa·s to about 15 mPa·s, or from about 7 mPa·s to about 10 mPa·s, or from about 7 mPa·s to about 9 mPa·s, or from about 8 mPa·s to about 20 mPa·s, or from about 8 mPa·s to about 15 mPa·s, or from about 8 mPa·s to about 10 mPa·s, or from about 8 mPa·s to about 9 mPa·s, or from about 9 mPa·s to about 20 mPa·s, or from about 9 mPa·s to about 15 mPa·s, or from about 9 mPa·s to about 10 mPa·s; wherein the castable refractory composition comprises from about 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from about 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of aluminium metaphosphate and/or aluminium orthophosphate.

A suitable sol binder is KÖSTROSOL^{®} 2040 FS available from CWK Chemiewerk Bad Köstritz GmbH, Germany.

The sol binder may comprise the metaphosphate-providing component and/or the orthophosphate-providing component.

For example, the sol binder may comprise (i.e., prior to drying) no less than about 2 wt. %, for example, no less than about 3 wt. %, or no less than about 4 wt. %, or no less than about 5 wt. %, or no less than about 6 wt. %, of the metaphosphate-providing component and/or the orthophosphate-providing component (e.g., the metaphosphate salt such as aluminium metaphosphate and/or the orthophosphate salt such as aluminium orthophosphate). The sol binder may comprise no greater than about 20 wt. %, for example, no greater than about 15 wt. %, or no greater than about 12 wt. %, or no greater than about 11 wt. %, or no greater than about 10 wt. %, or no greater than about 9 wt. %, or no greater than about 8 wt. %, or no greater than about 7 wt. %, or no greater than about 6 wt. %, of the metaphosphate-providing component and/or the orthophosphate-providing component (e.g., the metaphosphate salt such as aluminium metaphosphate and/or the orthophosphate salt such aluminium orthophosphate). The sol binder may comprise from 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the metaphosphate-providing component and/or the orthophosphate-providing component (e.g., the metaphosphate salt such as aluminium metaphosphate and/or the orthophosphate salt such as aluminium orthophosphate).

The sol binder may comprise (i.e., prior to drying) no less than about 2 wt. %, for example, no less than about 3 wt. %, or no less than about 4 wt. %, or no less than about 5 wt. %, or no less than about 6 wt. %, of the metaphosphate-providing component (e.g., the metaphosphate salt such as aluminium metaphosphate). The sol binder may comprise no greater than about 20 wt. %, for example, no greater than about 15 wt. %, or no greater than about 12 wt. %, or no greater than about 11 wt. %, or no greater than about 10 wt. %, or no greater than about 9 wt. %, or no greater than about 8 wt. %, or no greater than about 7 wt. %, or no greater than about 6 wt. %, of the metaphosphate-providing component (e.g., the metaphosphate salt such as aluminium metaphosphate). The sol binder may comprise from 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the metaphosphate-providing component (e.g., the metaphosphate salt such as aluminium metaphosphate).

The sol binder may comprise (i.e., prior to drying) no less than about 2 wt. %, for example, no less than about 3 wt. %, or no less than about 4 wt. %, or no less than about 5 wt. %, or no less than about 6 wt. %, of the orthophosphate-providing component (e.g., the orthophosphate salt such as aluminium orthophosphate). The sol binder may comprise no greater than about 20 wt. %, for example, no greater than about 15 wt. %, or no greater than about 12 wt. %, or no greater than about 11 wt. %, or no greater than about 10 wt. %, or no greater than about 9 wt. %, or no greater than about 8 wt. %, or no greater than about 7 wt. %, or no greater than about 6 wt. %, of the orthophosphate-providing component (e.g., the orthophosphate salt such aluminium orthophosphate). The sol binder may comprise from 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the orthophosphate-providing component (e.g., the orthophosphate salt such as aluminium orthophosphate).

The sol binder may comprise (i.e., prior to drying) no less than about 2 wt. %, for example, no less than about 3 wt. %, or no less than about 4 wt. %, or no less than about 5 wt. %, or no less than about 6 wt. %, of the metaphosphate-providing component and the orthophosphate-providing component (e.g., the metaphosphate salt such as aluminium metaphosphate and the orthophosphate salt such as aluminium orthophosphate) in combination. The sol binder may comprise no greater than about 20 wt. %, for example, no greater than about 15 wt. %, or no greater than about 12 wt. %, or no greater than about 11 wt. %, or no greater than about 10 wt. %, or no greater than about 9 wt. %, or no greater than about 8 wt. %, or no greater than about 7 wt. %, or no greater than about 6 wt. %, of the metaphosphate-providing component and the orthophosphate-providing component (e.g., the metaphosphate salt such as aluminium metaphosphate and the orthophosphate salt such aluminium orthophosphate) in combination. The sol binder may comprise from 2 wt. % to about 20 wt. %, for example, from about 2 wt. % to about 15 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from 3 wt. % to about 20 wt. %, or from about 3 wt. % to about 15 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from 4 wt. % to about 20 wt. %, or from about 4 wt. % to about 15 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from 5 wt. % to about 20 wt. %, or from about 5 wt. % to about 15 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from 6 wt. % to about 20 wt. %, or from about 6 wt. % to about 15 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, of the metaphosphate-providing component and the orthophosphate-providing component (e.g., the metaphosphate salt such as aluminium metaphosphate and the orthophosphate salt such as aluminium orthophosphate) in combination.

In some embodiments, the sol binder comprises a metaphosphate-providing component and does not comprise an orthophosphate-providing component, i.e., the sol binder is substantially free of orthophosphate-providing components. For example, the sol binder may be substantially free of phosphate-providing components other than metaphosphate-providing components. For example, the sol binder may be substantially free of orthophosphate salts such as trisodium phosphate (Na₃PO₄, also known as sodium orthophosphate or trisodium orthophosphate), tripotassium phosphate (K₃PO₄, also known as potassium orthophosphate or tripotassium orthophosphate) or aluminium phosphate (AlPO₄, also known as aluminium orthophosphate). The sol binder may comprise no greater than about 0.5 wt. %, for example, no greater than about 0.25 wt. %, or no greater than about 0.1 wt. %, or no greater than about 0.01 wt. %, of phosphate-providing components other than metaphosphate-providing components. The sol binder may comprise no greater than about 0.5 wt. %, for example, no greater than about 0.25 wt. %, or no greater than about 0.1 wt. %, or no greater than about 0.01 wt. %, of orthophosphate-providing components. The sol binder may comprise no greater than about 0.5 wt. %, for example, no greater than about 0.25 wt. %, or no greater than about 0.1 wt. %, or no greater than about 0.01 wt. %, of orthophosphate salts such as Na₃PO₄, K₃PO₄ or AlPO₄.

In some embodiments, the sol binder comprises an orthophosphate-providing component and does not comprise a metaphosphate-providing component, i.e., the sol binder is substantially free of metaphosphate-providing components. For example, the sol binder may be substantially free of phosphate-providing components other than orthophosphate-providing components. For example, the sol binder may be substantially free of metaphosphate salts such as sodium metaphosphate (NaPO₃), potassium metaphosphate (KPO₃) or aluminium metaphosphate (Al(PO₃)₃). The sol binder may comprise no greater than about 0.5 wt. %, for example, no greater than about 0.25 wt. %, or no greater than about 0.1 wt. %, or no greater than about 0.01 wt. %, of phosphate-providing components other than orthophosphate-providing components. The sol binder may comprise no greater than about 0.5 wt. %, for example, no greater than about 0.25 wt. %, or no greater than about 0.1 wt. %, or no greater than about 0.01 wt. %, of metaphosphate-providing components. The sol binder may comprise no greater than about 0.5 wt. %, for example, no greater than about 0.25 wt. %, or no greater than about 0.1 wt. %, or no greater than about 0.01 wt. %, of metaphosphate salts such as NaPO₃, KPO₃ or Al(PO₃)₃.

In some embodiments, the sol binder comprises a metaphosphate-providing component and an orthophosphate-providing component. The sol binder may be substantially free of phosphate-providing components other than metaphosphate-providing components or orthophosphate-providing components. For example, the sol binder may be substantially free of pyrophosphate-providing components. The sol binder may comprise no greater than about 0.5 wt. %, for example, no greater than about 0.25 wt. %, or no greater than about 0.1 wt. %, or no greater than about 0.01 wt. %, of phosphate-providing components other than metaphosphate-providing components or orthophosphate-providing components.

The sol binder may be available as a preprepared sol.

Alternatively, the sol binder may be prepared by combining (e.g., mixing together) a dry sol binder composition and a liquid (e.g., water) to form a sol. In embodiments in which the sol binder comprises at least some of the metaphosphate-providing component and/or at least of the orthophosphate-providing component, the dry sol binder composition may comprise: (e.g., cement-free) binder; and the metaphosphate-providing component and/or the orthophosphate-providing component.

### Method of manufacture

The (e.g., cement-free) castable refractory composition may be prepared by combining: the (e.g., cement-free) refractory particulate composition; the (e.g., cement-free) sol binder; and the metaphosphate-providing component and/or the orthophosphate-providing component.

It will be appreciated that the (e.g., cement-free) sol binder is in the form of a sol, i.e., a colloidal suspension containing a liquid. The method may therefore comprise combining: the (e.g., cement-free) refractory particulate composition; a preprepared (e.g., cement-free) sol binder; and the metaphosphate-providing component and/or the orthophosphate-providing component. Alternatively, the method may comprise: preparing the (e.g., cement-free) sol binder; and combining: the (e.g., cement-free) refractory particulate composition; the (e.g., cement-free) sol binder; and the metaphosphate-providing component and/or the orthophosphate-providing component. The (e.g., cement-free) sol binder may be prepared by combining binder (e.g., colloidal silica) and liquid (e.g., water), and any optional additives (e.g., antifreeze).

The metaphosphate-providing component and/or the orthophosphate-providing component may be part of the (e.g., cement-free) refractory particulate composition and/or the (e.g., cement-free) sol binder. Accordingly, the method may comprise combining the (e.g., cement-free) refractory particulate composition and the (e.g., cement-free) sol binder, wherein the (e.g., cement-free) refractory particulate composition comprises the metaphosphate-providing component and/or the orthophosphate-providing component. Alternatively, the method may comprise combining the (e.g., cement-free) refractory particulate composition and the (e.g., cement-free) sol binder, wherein the (e.g., cement-free) sol binder comprises the metaphosphate-providing component and/or the orthophosphate-providing component. Further alternatively, the method may comprise combining the (e.g., cement-free) refractory particulate composition and the (e.g., cement-free) sol binder, wherein both the (e.g., cement-free) refractory particulate composition and the (e.g., cement-free) sol binder comprise the metaphosphate-providing component and/or the orthophosphate-providing component.

It will be appreciated that combining the components of the (e.g., cement-free) castable refractory composition may comprise mixing the said components together.

### Refractory article

The (e.g., cement-free) castable refractory composition can be used to make a refractory article such as a monolithic refractory lining.

The refractory article can be made by a method comprising: forming the article from the (e.g., cement-free) castable refractory composition; and drying the article. Drying may be carried out by heating the article. The method may further comprise firing the article at an elevated temperature, for example, at from about 150°C to about 250°C for a period of about 1 hour to about 36 hours, for example, about 24 hours.

Forming the article from the castable refractory composition may comprise using one or more techniques selected from casting, vibration casting, wet gunning, dry gunning, self-flowing, ramming, rodding, or patching.

### Properties

The (e.g., cement-free) castable refractory composition or a refractory article made therefrom may have a modulus of rupture, MOR, measured according to DIN EN 1402-6 after heating to 110°C for 24 hours, of no less than about 1 M Pa, for example, no less than about 2 MPa, or no less than about 3 MPa, or no less than about 4 MPa, or no less than about 4.5 MPa. The (e.g., cement-free) castable refractory composition or a refractory article made therefrom may have a modulus of rupture, MOR, measured according to DIN EN 1402-6 after heating to 110°C for 24 hours, of no greater than about 10 MPa, for example, no greater than about 9 MPa, or no greater than about 8 MPa, or no greater than about 7 MPa, or no greater than about 6 MPa, or no greater than about 5 MPa, or no greater than about 4.5 MPa. The (e.g., cement-free) castable refractory composition or a refractory article made therefrom may have a modulus of rupture, MOR, measured according to DIN EN 1402-6 after heating to 110°C for 24 hours, from about 1 MPa to about 10 MPa, for example, from about 1 MPa to about 9 MPa, or from about 1 MPa to about 8 MPa, or from about 1 MPa to about 7 MPa, or from about 1 MPa to about 6 MPa, or from about 1 MPa to about 5 MPa, or from about 1 MPa to about 4.5 MPa, or from about 2 MPa to about 10 MPa, or from about 2 MPa to about 9 MPa, or from about 2 MPa to about 8 MPa, or from about 2 MPa to about 7 MPa, or from about 2 MPa to about 6 MPa, or from about 2 MPa to about 5 MPa, or from about 2 MPa to about 4.5 MPa, or from about 3 MPa to about 10 MPa, or from about 3 MPa to about 9 MPa, or from about 3 MPa to about 8 MPa, or from about 3 MPa to about 7 MPa, or from about 3 MPa to about 6 MPa, or from about 3 MPa to about 5 MPa, or from about 3 MPa to about 4.5 MPa, or from about 4 MPa to about 10 MPa, or from about 4 MPa to about 9 MPa, or from about 4 MPa to about 8 MPa, or from about 4 MPa to about 7 MPa, or from about 4 MPa to about 6 MPa, or from about 4 MPa to about 5 MPa, or from about 4 MPa to about 4.5 MPa, or from about 4.5 MPa to about 10 MPa, or from about 4.5 MPa to about 9 MPa, or from about 4.5 MPa to about 8 MPa, or from about 4.5 MPa to about 7 MPa, or from about 4.5 MPa to about 6 MPa, or from about 4.5 MPa to about 5 MPa.

The (e.g., cement-free) castable refractory composition or a refractory article made therefrom may have a modulus of rupture, MOR, measured according to DIN EN 1402-6 after heating to 800°C for 5 hours, of no less than about 10 MPa, for example, no less than about 11 MPa, or no less than about 12 MPa, or no less than about 13 MPa, or no less than about 14 MPa, or no less than about 15 MPa, or no less than about 16 MPa, or no less than about 16.5 MPa. The (e.g., cement-free) castable refractory composition or a refractory article made therefrom may have a modulus of rupture, MOR, measured according to DIN EN 1402-6 after heating to 800°C for 5 hours, of no greater than about 20 MPa, for example, no greater than about 19 MPa, or no greater than about 18 MPa, or no greater than about 17 MPa, or no greater than about 16.5 MPa. The (e.g., cement-free) castable refractory composition or a refractory article made therefrom may have a modulus of rupture, MOR, measured according to DIN EN 1402-6 after heating to 800°C for 5 hours, of from about 10 MPa to about 20 MPa, for example, from about 10 MPa to about 19 MPa, or from about 10 MPa to about 18 MPa, or from about 10 MPa to about 17 MPa, or from about 10 MPa to about 16.5 MPa, or from about 11 MPa to about 20 MPa, or from about 11 MPa to about 19 MPa, or from about 11 MPa to about 18 MPa, or from about 11 MPa to about 17 MPa, or from about 11 MPa to about 16.5 MPa, or from about 12 MPa to about 20 MPa, or from about 12 MPa to about 19 MPa, or from about 12 MPa to about 18 MPa, or from about 12 MPa to about 17 MPa, or from about 12 MPa to about 16.5 MPa, or from about 13 MPa to about 20 MPa, or from about 13 MPa to about 19 MPa, or from about 13 MPa to about 18 MPa, or from about 13 MPa to about 17 MPa, or from about 13 MPa to about 16.5 MPa, or from about 14 MPa to about 20 MPa, or from about 14 MPa to about 19 MPa, or from about 14 MPa to about 18 MPa, or from about 14 MPa to about 17 MPa, or from about 14 MPa to about 16.5 MPa, or from about 15 MPa to about 20 MPa, or from about 15 MPa to about 19 MPa, or from about 15 MPa to about 18 MPa, or from about 15 MPa to about 17 MPa, or from about 15 MPa to about 16.5 MPa, or from about 16 MPa to about 20 MPa, or from about 16 MPa to about 19 MPa, or from about 16 MPa to about 18 MPa, or from about 16 MPa to about 17 MPa, or from about 16 MPa to about 16.5 MPa, or from about 16.5 MPa to about 20 MPa, or from about 16.5 MPa to about 19 MPa, or from about 16.5 MPa to about 18 MPa, or from about 16.5 MPa to about 17 MPa.

The (e.g., cement-free) castable refractory composition or a refractory article made therefrom may have a modulus of rupture, MOR, measured according to DIN EN 1402-6 after heating to 1200°C for 5 hours, of no less than about 10 M Pa, for example, no less than about 12 MPa, or no less than about 14 MPa, or no less than about 15 MPa, or no less than about 16 MPa, or no less than about 17 MPa, or no less than about 19 MPa. The (e.g., cement-free) castable refractory composition or a refractory article made therefrom may have a modulus of rupture, MOR, measured according to DIN EN 1402-6 after heating to 1200°C for 5 hours, of no greater than about 30 MPa, for example, no greater than about 25 MPa, or no greater than about 24 MPa, or no greater than about 23 MPa, or no greater than about 22 MPa, or no greater than about 21 MPa, or no greater than about 20 MPa, or no greater than about 19 MPa. The (e.g., cement-free) castable refractory composition or a refractory article made therefrom may have a modulus of rupture, MOR, measured according to DIN EN 1402-6 after heating to 1200°C for 5 hours, of from about 10 MPa to about 30 MPa, for example, from about 10 MPa to about 25 MPa, or from about 10 MPa to about 24 MPa, or from about 10 MPa to about 23 MPa, or from about 10 MPa to about 22 MPa, or from about 10 MPa to about 21 MPa, or from about 10 MPa to about 20 MPa, or from about 10 MPa to about 19 MPa, or from about 12 MPa to about 30 MPa, or from about 12 MPa to about 25 MPa, or from about 12 MPa to about 24 MPa, or from about 12 MPa to about 23 MPa, or from about 12 MPa to about 22 MPa, or from about 12 MPa to about 21 MPa, or from about 12 MPa to about 20 MPa, or from about 12 MPa to about 19 MPa, or from about 14 MPa to about 30 MPa, or from about 14 MPa to about 25 MPa, or from about 14 MPa to about 24 MPa, or from about 14 MPa to about 23 MPa, or from about 14 MPa to about 22 MPa, or from about 14 MPa to about 21 MPa, or from about 14 MPa to about 20 MPa, or from about 14 MPa to about 19 MPa, or from about 15 MPa to about 30 MPa, or from about 15 MPa to about 25 MPa, or from about 15 MPa to about 24 MPa, or from about 15 MPa to about 23 MPa, or from about 15 MPa to about 22 MPa, or from about 15 MPa to about 21 MPa, or from about 15 MPa to about 20 MPa, or from about 15 MPa to about 19 MPa, or from about 16 MPa to about 30 MPa, or from about 16 MPa to about 25 MPa, or from about 16 MPa to about 24 MPa, or from about 16 MPa to about 23 MPa, or from about 16 MPa to about 22 MPa, or from about 16 MPa to about 21 MPa, or from about 16 MPa to about 20 MPa, or from about 16 MPa to about 19 MPa, or from about 17 MPa to about 30 MPa, or from about 17 MPa to about 25 MPa, or from about 17 MPa to about 24 MPa, or from about 17 MPa to about 23 MPa, or from about 17 MPa to about 22 MPa, or from about 17 MPa to about 21 MPa, or from about 17 MPa to about 20 MPa, or from about 17 MPa to about 19 MPa, or from about 18 MPa to about 30 MPa, or from about 18 MPa to about 25 MPa, or from about 18 MPa to about 24 MPa, or from about 18 MPa to about 23 MPa, or from about 18 MPa to about 22 MPa, or from about 18 MPa to about 21 MPa, or from about 18 MPa to about 20 MPa, or from about 18 MPa to about 19 MPa, or from about 19 MPa to about 30 MPa, or from about 19 MPa to about 25 MPa, or from about 19 MPa to about 24 MPa, or from about 19 MPa to about 23 MPa, or from about 19 MPa to about 22 MPa, or from about 19 MPa to about 21 MPa, or from about 19 MPa to about 20 MPa.

The (e.g., cement-free) castable refractory composition or a refractory article made therefrom may have a cold crushing strength, CCS, measured according to DIN EN 1402-6 after heating to 110°C for 24 hours, of no less than about 20 MPa, for example, no less than about 30 MPa, or no less than about 35 MPa, or no less than about 38 MPa. The (e.g., cement-free) castable refractory composition or a refractory article made therefrom may have a cold crushing strength, CCS, measured according to DIN EN 1402-6 after heating to 110°C for 24 hours, of no greater than about 50 MPa, for example, no greater than about 45 M Pa, or no greater than about 40 M Pa, or no greater than about 38 MPa. The (e.g., cement-free) castable refractory composition or a refractory article made therefrom may have a cold crushing strength, CCS, measured according to DIN EN 1402-6 after heating to 110°C for 24 hours, of from about 20 MPa to about 50 MPa, for example, from about 20 MPa to about 45 MPa, or from about 20 MPa to about 40 MPa, or from about 20 MPa to about 38 MPa, or from about 30 MPa to about 50 MPa, or from about 30 MPa to about 45 MPa, or from about 30 MPa to about 40 MPa, or from about 30 MPa to about 38 MPa, or from about 35 MPa to about 50 MPa, or from about 35 MPa to about 45 MPa, or from about 35 MPa to about 40 MPa, or from about 35 MPa to about 38 MPa, or from about 38 MPa to about 50 MPa, or from about 38 M Pa to about 45 MPa, or from about 38 MPa to about 40 MPa.

The (e.g., cement-free) castable refractory composition or a refractory article made therefrom may have a cold crushing strength, CCS, measured according to DIN EN 1402-6 after heating to 800°C for 5 hours, of no less than about 120 MPa, for example, no less than about 130 MPa, or no less than about 140 MPa, or no less than about 145 MPa, or no less than about 146 MPa. The (e.g., cement-free) castable refractory composition or a refractory article made therefrom may have a cold crushing strength, CCS, measured according to DIN EN 1402-6 after heating to 800°C for 5 hours, of no greater than about 170 MPa, for example, no greater than about 160 MPa, or no greater than about 150 MPa, or no greater than about 146 MPa. The (e.g., cement-free) castable refractory composition or a refractory article made therefrom may have a cold crushing strength, CCS, measured according to DIN EN 1402-6 after heating to 800°C for 5 hours, of from about 120 MPa to about 170 MPa, for example, from about 120 MPa to about 160 MPa, or from about 120 MPa to about 150 MPa, or from about 120 MPa to about 146 MPa, or from about 130 MPa to about 170 MPa, or from about 130 MPa to about 160 MPa, or from about 130 MPa to about 150 MPa, or from about 130 MPa to about 146 MPa, or from about 140 MPa to about 170 MPa, or from about 140 MPa to about 160 MPa, or from about 140 MPa to about 150 MPa, or from about 140 MPa to about 146 MPa, or from about 145 MPa to about 170 MPa, or from about 145 MPa to about 160 MPa, or from about 145 MPa to about 150 MPa, or from about 145 MPa to about 146 MPa, or from about 146 MPa to about 170 MPa, or from about 146 MPa to about 160 MPa, or from about 146 MPa to about 150 MPa.

The (e.g., cement-free) castable refractory composition or a refractory article made therefrom may have a cold crushing strength, CCS, measured according to DIN EN 1402-6 after heating to 1200°C for 5 hours, of no less than about 130 MPa, for example, no less than about 140 MPa, or no less than about 150 MPa, or no less than about 155 MPa. The (e.g., cement-free) castable refractory composition or a refractory article made therefrom may have a cold crushing strength, CCS, measured according to DIN EN 1402-6 after heating to 1200°C for 5 hours, of no greater than about 180 MPa, for example, no greater than about 170 MPa, or no greater than about 160 MPa, or no greater than about 155 MPa. The (e.g., cement-free) castable refractory composition or a refractory article made therefrom may have a cold crushing strength, CCS, measured according to DIN EN 1402-6after heating to 1200°C for 5 hours, of from about 130 MPa to about 180 MPa, for example, from about 130 MPa to about 170 MPa, or from about 130 MPa to about 160 MPa, or from about 130 MPa to about 155 MPa, or from about 140 MPa to about 180 MPa, or from about 140 MPa to about 170 MPa, or from about 140 MPa to about 160 MPa, or from about 140 MPa to about 155 MPa, or from about 150 MPa to about 180 MPa, or from about 150 MPa to about 170 MPa, or from about 150 MPa to about 160 MPa, or from about 150 MPa to about 155 MPa, or from about 155 MPa to about 180 MPa, or from about 155 MPa to about 170 MPa, or from about 155 MPa to about 160 MPa.

The (e.g., cement-free) castable refractory composition or a refractory article made therefrom may have a bulk density, measured according to DIN EN 1402-6, after heating at 110°C for 24 hours, no less than about 2.80 g/cm³, for example, no less than about 2.90 g/cm³, or no less than about 2.93 g/cm³. The (e.g., cement-free) castable refractory composition or a refractory article made therefrom may have a bulk density, measured according to DIN EN 1402-6, after heating at 110°C for 24 hours, no more than about 3.10 g/cm³, for example, no more than about 3.00 g/cm³, for example, no more than about 2.94 g/cm³. The (e.g., cement-free) castable refractory composition or a refractory article made therefrom may have a bulk density, measured according to DIN EN 1402-6, after heating at 110°C for 24 hours, from about 2.80 g/cm³ to about 3.10 g/cm³, for example, from about 2.80 g/cm³ to about 3.00 g/cm³, or from about 2.80 g/cm³ to about 2.94 g/cm³, or from about 2.90 g/cm³ to about 3.10 g/cm³, or from about 2.90 g/cm³ to about 3.00 g/cm³, or from about 2.90 g/cm³ to about 2.94 g/cm³, or from about 2.93 g/cm³ to about 3.10 g/cm³, or from about 2.93 g/cm³ to about 3.00 g/cm³, or from about 2.93 g/cm³ to about 2.94 g/cm³.

The (e.g., cement-free) castable refractory composition or a refractory article made therefrom may have a bulk density, measured according to DIN EN 1402-6, after heating at 800°C for 5 hours, no less than about 2.80 g/cm³, for example, no less than about 2.90 g/cm³, or no less than about 2.93 g/cm³. The (e.g., cement-free) castable refractory composition or a refractory article made therefrom may have a bulk density, measured according to DIN EN 1402-6, after heating at 800°C for 5 hours, no more than about 3.10 g/cm³, for example, no more than about 3.00 g/cm³, for example, no more than about 2.94 g/cm³. The (e.g., cement-free) castable refractory composition or a refractory article made therefrom may have a bulk density, measured according to DIN EN 1402-6, after heating at 800°C for 5 hours, from about 2.80 g/cm³ to about 3.10 g/cm³, for example, from about 2.80 g/cm³ to about 3.00 g/cm³, or from about 2.80 g/cm³ to about 2.94 g/cm³, or from about 2.90 g/cm³ to about 3.10 g/cm³, or from about 2.90 g/cm³ to about 3.00 g/cm³, or from about 2.90 g/cm³ to about 2.94 g/cm³, or from about 2.93 g/cm³ to about 3.10 g/cm³, or from about 2.93 g/cm³ to about 3.00 g/cm³, or from about 2.93 g/cm³ to about 2.94 g/cm³.

The (e.g., cement-free) castable refractory composition or a refractory article made therefrom may have a bulk density, measured according to DIN EN 1402-6, after heating at 1200°C for 5 hours, no less than about 2.80 g/cm³, for example, no less than about 2.90 g/cm³, or no less than about 2.93 g/cm³. The (e.g., cement-free) castable refractory composition or a refractory article made therefrom may have a bulk density, measured according to DIN EN 1402-6, after heating at 1200°C for 5 hours, no more than about 3.10 g/cm³, for example, no more than about 3.00 g/cm³, for example, no more than about 2.94 g/cm³. The (e.g., cement-free) castable refractory composition or a refractory article made therefrom may have a bulk density, measured according to DIN EN 1402-6, after heating at 1200°C for 5 hours, from about 2.80 g/cm³ to about 3.10 g/cm³, for example, from about 2.80 g/cm³ to about 3.00 g/cm³, or from about 2.80 g/cm³ to about 2.94 g/cm³, or from about 2.90 g/cm³ to about 3.10 g/cm³, or from about 2.90 g/cm³ to about 3.00 g/cm³, or from about 2.90 g/cm³ to about 2.94 g/cm³, or from about 2.93 g/cm³ to about 3.10 g/cm³, or from about 2.93 g/cm³ to about 3.00 g/cm³, or from about 2.93 g/cm³ to about 2.94 g/cm³.

The (e.g., cement-free) castable refractory composition or a refractory article made therefrom may have a water absorption, measured according to DIN EN 1402-6, after heating at 110°C for 24 hours, no less than about 4 % (e.g., no less than about 4.0 %), for example, no less than about 5 % (e.g., no less than about 5.0 %), or no less than about 5.5 %, or no less than about 5.7 %, or no less than about 5.8 %. The (e.g., cement-free) castable refractory composition or a refractory article made therefrom may have a water absorption, measured according to DIN EN 1402-6, after heating at 110°C for 24 hours, no greater than about 7 % (e.g., no greater than about 7.0 %), for example, no greater than about 6 % (e.g., no greater than about 6.0 %), or no greater than about 5.9 %, or no greater than about 5.8 %. The (e.g., cement-free) castable refractory composition or a refractory article made therefrom may have a water absorption, measured according to DIN EN 1402-6, after heating at 110°C for 24 hours, from about 4 % to about 7 %, for example, from about 4 % to about 6 %, or from about 4 % to about 5.8 %, or from about 4 % to about 5.9 %, or from about 5 % to about 7 %, or from about 5 % to about 6 %, or from about 5 % to about 5.8 %, or from about 5 % to about 5.9 %, or from about 5.7 % to about 7 %, or from about 5.7 % to about 6 %, or from about 5.7 % to about 5.9 %, or from about 5.7 % to about 5.8 %, or from about 5.8 % to about 7 %, or from about 5.8 % to about 6 %, or from about 5.8 % to about 5.9 %.

The (e.g., cement-free) castable refractory composition or a refractory article made therefrom may have a water absorption, measured according to DIN EN 1402-6, after heating at 800°C for 5 hours, no less than about 3 % (e.g., no less than about 3.0 %), for example, no less than about 4 % (e.g., no less than about 4.0 %), or no less than about 4.5 %, or no less than about 4.9 %, or no less than about 5 % (e.g., no less than about 5.0 %). The (e.g., cement-free) castable refractory composition or a refractory article made therefrom may have a water absorption, measured according to DIN EN 1402-6, after heating at 800°C for 5 hours, no greater than about 7 % (e.g., no greater than about 7.0 %), for example, no greater than about 6 % (e.g., no greater than about 6.0 %), or no greater than about 5.5 %, or no greater than about 5.1 %, or no greater than about 5 % (e.g., no greater than about 5.0 %). The (e.g., cement-free) castable refractory composition or a refractory article made therefrom may have a water absorption, measured according to DIN EN 1402-6, after heating at 800°C for 5 hours, from about 3 % to about 7 %, for example, from about 3 % to about 6 %, or from about 3 % to about 5.5 %, or from about 3 % to about 5.1 %, or from about 3 % to about 5 %, from about 4 % to about 7 %, or from about 4 % to about 6 %, or from about 4 % to about 5.5 %, or from about 4 % to about 5.1 %, or from about 4 % to about 5 %, from about 4.5 % to about 7 %, or from about 4.5 % to about 6 %, or from about 4.5 % to about 5.5 %, or from about 4.5 % to about 5.1 %, or from about 4.5 % to about 5 %, from about 4.9 % to about 7 %, or from about 4.9 % to about 6 %, or from about 4.9 % to about 5.5 %, or from about 4.9 % to about 5.1 %, or from about 4.9 % to about 5 %, from about 5 % to about 7 %, or from about 5 % to about 6 %, or from about 5 % to about 5.5 %, or from about 5 % to about 5.1 %.

The (e.g., cement-free) castable refractory composition or a refractory article made therefrom may have a water absorption, measured according to DIN EN 1402-6, after heating at 1200°C for 5 hours, no less than about 3 % (e.g., no less than about 3.0 %), for example, no less than about 4 % (e.g., no less than about 4.0 %), or no less than about 4.5 %, or no less than about 4.9 %, or no less than about 5 % (e.g., no less than about 5.0 %). The (e.g., cement-free) castable refractory composition or a refractory article made therefrom may have a water absorption, measured according to DIN EN 1402-6, after heating at 1200°C for 5 hours, no greater than about 7 % (e.g., no greater than about 7.0 %), for example, no greater than about 6 % (e.g., no greater than about 6.0 %), or no greater than about 5.5 %, or no greater than about 5.1 %, or no greater than about 5 % (e.g., no greater than about 5.0 %). The (e.g., cement-free) castable refractory composition or a refractory article made therefrom may have a water absorption, measured according to DIN EN 1402-6, after heating at 1200°C for 5 hours, from about 3 % to about 7 %, for example, from about 3 % to about 6 %, or from about 3 % to about 5.5 %, or from about 3 % to about 5.1 %, or from about 3 % to about 5 %, from about 4 % to about 7 %, or from about 4 % to about 6 %, or from about 4 % to about 5.5 %, or from about 4 % to about 5.1 %, or from about 4 % to about 5 %, from about 4.5 % to about 7 %, or from about 4.5 % to about 6 %, or from about 4.5 % to about 5.5 %, or from about 4.5 % to about 5.1 %, or from about 4.5 % to about 5 %, from about 4.9 % to about 7 %, or from about 4.9 % to about 6 %, or from about 4.9 % to about 5.5 %, or from about 4.9 % to about 5.1 %, or from about 4.9 % to about 5 %, from about 5 % to about 7 %, or from about 5 % to about 6 %, or from about 5 % to about 5.5 %, or from about 5 % to about 5.1 %.

The (e.g., cement-free) castable refractory composition or a refractory article made therefrom may have an open porosity, measured according to DIN EN 1402-6, after heating at 110°C for 24 hours, of no less than about 10 %, for example, no less than about 12 %, or no less than about 15 %, or no less than about 16 %, or no less than about 17 %. The (e.g., cement-free) castable refractory composition or a refractory article made therefrom may have an open porosity, measured according to DIN EN 1402-6, after heating at 110°C for 24 hours, of no greater than about 25 %, for example, no greater than about 20 %, or no greater than about 19 %, or no greater than about 18 %, or no greater than about 17 %. The (e.g., cement-free) castable refractory composition or a refractory article made therefrom may have an open porosity, measured according to DIN EN 1402-6, after heating at 110°C for 24 hours, from about 10 % to about 25 %, for example, from about 10 % to about 20 %, or from about 10 % to about 19 %, or from about 10 % to about 18 %, or from about 10 % to about 17 %, or from about 12 % to about 25 %, or from about 12 % to about 20 %, or from about 12 % to about 19 %, or from about 12 % to about 18 %, or from about 12 % to about 17 %, or from about 15 % to about 25 %, or from about 15 % to about 20 %, or from about 15 % to about 19 %, or from about 15 % to about 18 %, or from about 15 % to about 17 %, or from about 16 % to about 25 %, or from about 16 % to about 20 %, or from about 16 % to about 19 %, or from about 16 % to about 18 %, or from about 16 % to about 17 %, or from about 17 % to about 25 %, or from about 17 % to about 20 %, or from about 17 % to about 19 %, or from about 17 % to about 18 %, or from about 17 % to about 17 %.

The (e.g., cement-free) castable refractory composition or a refractory article made therefrom may have an open porosity, measured according to DIN EN 1402-6, after heating at 800°C for 5 hours, of no less than about 10 %, for example, no less than about 12 %, or no less than about 13 %, or no less than about 14 %. The (e.g., cement-free) castable refractory composition or a refractory article made therefrom may have an open porosity, measured according to DIN EN 1402-6, after heating at 800°C for 5 hours, of no greater than about 20 %, for example, no greater than about 18 %, or no greater than about 17 %, or no greater than about 16 %, or no greater than about 15 %. The (e.g., cement-free) castable refractory composition or a refractory article made therefrom may have an open porosity, measured according to DIN EN 1402-6, after heating at 800°C for 5 hours, from about 10 % to about 20 %, for example, from about 10 % to about 18 %, or from about 10 % to about 17 %, or from about 10 % to about 16 %, or from about 10 % to about 15 %, or from about 12 % to about 20 %, or from about 12 % to about 18 %, or from about 12 % to about 17 %, or from about 12 % to about 16 %, or from about 12 % to about 15 %, or from about 13 % to about 20 %, or from about 13 % to about 18 %, or from about 13 % to about 17 %, or from about 13 % to about 16 %, or from about 13 % to about 15 %, or from about 14 % to about 20 %, or from about 14 % to about 18 %, or from about 14 % to about 17 %, or from about 14 % to about 16 %, or from about 14 % to about 15 %.

The (e.g., cement-free) castable refractory composition or a refractory article made therefrom may have an open porosity, measured according to DIN EN 1402-6, after heating at 1200°C for 5 hours, of no less than about 10 %, for example, no less than about 12 %, or no less than about 13 %, or no less than about 14 %. The (e.g., cement-free) castable refractory composition or a refractory article made therefrom may have an open porosity, measured according to DIN EN 1402-6, after heating at 1200°C for 5 hours, of no greater than about 20 %, for example, no greater than about 18 %, or no greater than about 17 %, or no greater than about 16 %, or no greater than about 15 %. The (e.g., cement-free) castable refractory composition or a refractory article made therefrom may have an open porosity, measured according to DIN EN 1402-6, after heating at 1200°C for 5 hours, from about 10 % to about 20 %, for example, from about 10 % to about 18 %, or from about 10 % to about 17 %, or from about 10 % to about 16 %, or from about 10 % to about 15 %, or from about 12 % to about 20 %, or from about 12 % to about 18 %, or from about 12 % to about 17 %, or from about 12 % to about 16 %, or from about 12 % to about 15 %, or from about 13 % to about 20 %, or from about 13 % to about 18 %, or from about 13 % to about 17 %, or from about 13 % to about 16 %, or from about 13 % to about 15 %, or from about 14 % to about 20 %, or from about 14 % to about 18 %, or from about 14 % to about 17 %, or from about 14 % to about 16 %, or from about 14 % to about 15 %.

The (e.g., cement-free) castable refractory composition may be heatable at a rate of no less than about 50°C/hour, for example, during initial heating up of the (e.g., cement-free) castable refractory composition when forming a refractory article therefrom (e.g., during installation of the refractory article). The (e.g., cement-free) castable refractory composition may be heatable at the rate of no less than about 50°C/hour without spalling occurring. The (e.g., cement-free) castable refractory composition may be heatable at the rate of no less than about 50°C/hour in a temperature range of about 20°C to about 850°C.

The (e.g., cement-free) castable refractory composition or a refractory article made therefrom may have a refractoriness under load, RUL, measured according to ISO 1893, of no less than about 1400°C, for example, no less than about 1500°C.

The (e.g., cement-free) castable refractory composition or a refractory article made therefrom may be resistant to metal infiltration, for example, aluminium infiltration, at temperatures of 1200°C or more, for example, at temperatures of 1300°C or more, or at temperatures of 1400°C or more. Resistance to metal infiltration may be determined by visual examination of a cross-section of a sample of a refractory article having been exposed directly to liquid metal (e.g., aluminium) at 1200°C or more, 1300°C or more, or 1400°C or more. The refractory article may be a test crucible formed from the (e.g., cement-free) castable refractory composition and pre-fired at 1200°C. The test crucible may be used as a mold for the molten metal (e.g., aluminium). Metal infiltration can be identified in the cross-section as a change in colour or contrast of the refractory material in an area adjacent a metal/refractory article interface, for example, as illustrated in Figure 2. A refractory article which is resistant to metal infiltration at a given temperature exhibits negligible metal infiltration (i.e., change in colour or contrast) beyond a distance of 5 mm measured perpendicular to the metal/refractory article interface.

The (e.g., cement-free) castable refractory composition (i.e., prior to drying) may have an initial flow of no less than about 100 %, for example, no less than about 120 %, or no less than about 130 %, or no less than about 140 %, or no less than about 150 %. The (e.g., cement-free) castable refractory composition (i.e., prior to drying) may have an initial flow no greater than about 200 %, for example, no greater than about 180 %, or no greater than about 160 %. The (e.g., cement-free) castable refractory composition (i.e., prior to drying) may have an initial flow from about 100 % to about 200 %, for example, from about 100 % to about 180 %, or from about 100 % to about 160 %, or from about 120 % to about 200 %, or from about 120 % to about 180 %, or from about 120 % to about 160 %, or from about 130 % to about 200 %, or from about 130 % to about 180 %, or from about 130 % to about 160 %, or from about 140 % to about 200 %, or from about 140 % to about 180 %, or from about 140 % to about 160 %, or from about 150 % to about 200 %, or from about 150 % to about 180 %, or from about 150 % to about 160 %.

Initial flow is measured according DIN EN ISO 1927-4 using a big cone having a height of 80 mm and a diameter from 70 mm to 100 mm. The initial flow value is measured directly after finishing wet mixing of the (e.g., cement-free) castable refractory composition. Initial flow provides an indication of the ease of installation for the (e.g., cement-free) castable refractory composition; the higher the initial flow, the easier it will be cast an article from the (e.g., cement-free) castable refractory composition.

### Uses

Use of the metaphosphate-providing component and/or the orthophosphate-providing component in the (e.g., cement-free) castable refractory composition may improve the resistance to metal infiltration at elevated temperatures of a refractory article formed from the (e.g., cement-free) castable refractory composition, for example, in comparison to a refractory article formed under the same conditions from a reference castable refractory composition which is identical to the (e.g., cement-free) castable refractory composition except that the reference castable refractory composition does not contain a metaphosphate-providing component and/or an orthophosphate-providing component and optionally may contain a phosphate-providing component other than a metaphosphate-providing component and/or an orthophosphate-providing component. For example, use of the metaphosphate-providing component and/or the orthophosphate-providing component in the (e.g., cement-free) castable refractory composition may improve the resistance to metal infiltration at elevated temperatures of the refractory article formed from the (e.g., cement-free) castable refractory composition when the refractory article is exposed to molten metal. For example, use of the metaphosphate-providing component and/or the orthophosphate-providing component in the (e.g., cement-free) castable refractory composition may improve the resistance to aluminium infiltration at elevated temperatures of a refractory article formed from the (e.g., cement-free) castable refractory composition, for example, when the refractory article is exposed to molten aluminium.

For example, use of the metaphosphate-providing component and/or the orthophosphate-providing component in the (e.g., cement-free) castable refractory composition may increase the temperature at which a refractory article formed from the (e.g., cement-free) castable refractory composition can be exposed to molten metal (e.g., aluminium) without (i.e., significant levels of) metal (e.g., aluminium) infiltration taking place. Use of the metaphosphate-providing component and/or the orthophosphate-providing component in the (e.g., cement-free) castable refractory composition may increase the temperature at which a refractory article formed from the (e.g., cement-free) castable refractory composition can be exposed to molten metal (e.g., aluminium) without (i.e., significant levels of) metal (e.g., aluminium) infiltration taking place by no less than about 100°C. Use of the metaphosphate-providing component and/or the orthophosphate-providing component in the (e.g., cement-free) castable refractory composition may increase the maximum temperature at which a refractory article formed from the (e.g., cement-free) castable refractory composition can be exposed to molten metal (e.g., aluminium) without (i.e., significant levels of) metal (e.g., aluminium) infiltration taking place to no less than about 1200°C.

Use of the metaphosphate-providing component and/or the orthophosphate-providing component in the (e.g., cement-free) castable refractory composition may improve a mechanical property of a refractory article formed from the (e.g., cement-free) castable refractory composition, for example, in comparison to a refractory article formed under the same conditions from a reference castable refractory composition which is identical to the (e.g., cement-free) castable refractory composition except that the reference castable refractory composition does not contain a metaphosphate-providing component and/or an orthophosphate-providing component and optionally may contain a phosphate-providing component other than a metaphosphate-providing component and/or an orthophosphate-providing component. For example, use of the metaphosphate-providing component and/or the orthophosphate-providing component in the (e.g., cement-free) castable refractory composition may improve the cold crushing strength, CCS, measured according to EN 993-5, of the refractory article formed from the (e.g., cement-free) castable refractory composition. Use of the metaphosphate-providing component and/or the orthophosphate-providing component in the (e.g., cement-free) castable refractory composition may improve the cold crushing strength, CCS, measured according to EN 993-5 after heating at 800°C for 5 hours, of the refractory article formed from the (e.g., cement-free) castable refractory composition.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

For the avoidance of doubt, the present application extends to a cement-free castable refractory composition comprising (e.g., consisting essentially of, or consisting of):
from about 85 wt. % to about 95 wt. %, for example, about 91 wt. %, of a refractory particulate comprising (e.g., consisting essentially of, or consisting of):
   from about 15 wt. % to about 25 wt. %, for example, about 20 wt. %, bauxite having a particle size from about 3 mm to about 6 mm, for example, a d₅₀ from about 3 mm to about 6 mm;
   from about 20 wt. % to about 30 wt. %, for example, about 25 wt. %, bauxite having a particle size from about 1 mm to about 3 mm, for example, a d₅₀ from about 1 mm to about 3 mm;
   from about 10 wt. % to about 20 wt. %, for example, about 16 wt. %, bauxite having a particle size from about 0 mm to about 1 mm, for example, a d₅₀ no greater than about 1 mm;
   from about 8 wt. % to about 16 wt. %, for example, about 12 wt. %, brown fused alumina having a particle size from about 0 mm to about 0.5 mm, for example, a d₅₀ no greater than about 0.5 mm;
   from about 15 wt. % to about 25 wt. %, for example, about 20 wt. %, of calcined alumina having a d₅₀ from about 4 µm to about 6 µm;
   from about 0.5 wt. % to about 1.5 wt. %, for example, about 1.0 wt. %, microsilica;
   from about 0.01 wt. % to about 0.10 wt. %, for example, about 0.05 wt. %, deflocculant;
   from about 3 wt. % to about 9 wt. %, for example, about 6 wt. %, aluminium metaphosphate and/or aluminium orthophosphate; and from about 0.05 wt. % to about 0.15 wt. %, for example, about 0.10 wt. % magnesium oxide; and
from about 5 wt. % to about 15 wt. %, for example, about 9 wt. %, of a sol binder being an aqueous dispersion of colloidal silica in water, having an apparent viscosity at 25°C and at a shear rate of 50 s⁻¹, prior to drying, of no greater than about 15 mPa·s, for example, no greater than about 10 mPa·s, and optionally comprising from about 4.5 wt. % to about 5.5 wt. % of an antifreeze agent such as monoethylene glycol.

For the avoidance of doubt, the present application is directed to the subject-matter described in the following numbered paragraphs:
1. A castable refractory composition comprising: a cement-free refractory particulate composition; and a sol binder; wherein the castable refractory composition comprises a metaphosphate-providing component and/or an orthophosphate-providing component.
2. The castable refractory composition according to paragraph 1, wherein the metaphosphate-providing component is a metaphosphate salt such as aluminium metaphosphate and/or the orthophosphate-providing component is an orthophosphate salt such as aluminium orthophosphate.
3. The castable refractory composition according to paragraph 1 or paragraph 2, wherein the sol binder comprises colloidal silica, optionally wherein the colloidal silica has a specific surface area no greater than about 200 m²/g, for example, no greater than about 150 m²/g.
4. The castable refractory composition according to paragraph 3, wherein the sol binder, prior to drying, comprises: from about 20 wt. % to about 50 wt. %, for example, from about 30 w. % to about 50 wt. %, or from about 35 wt. % to about 45 wt. %, colloidal silica; and from about 50 wt. % to about 80 wt. %, for example, from about 50 wt. % to about 70 wt. %, or from about 55 wt. % to about 65 wt. %, water.
5. The castable refractory composition according to any preceding paragraph, wherein the sol binder has an apparent viscosity at 25°C and at a shear rate of 50 s⁻¹, prior to drying of the sol binder, of no greater than about 35 mPa·s, for example, no greater than about 20 mPa·s, or no greater than about 15 mPa·s, or no greater than about 10 mPa·s.
6. The castable refractory composition according to any preceding paragraph, wherein the metaphosphate-providing component and/or the orthophosphate-providing component is present in the castable refractory composition in an amount from about 1 wt. % to about 10 wt. %, for example, from about 3 wt. % to about 9 wt. %, based on the total weight of the castable refractory composition prior to drying.
7. The castable refractory composition according to any preceding paragraph, wherein the cement-free refractory particulate composition comprises the metaphosphate-providing component and/or the orthophosphate-providing component.
8. The castable refractory composition according to any preceding paragraph, wherein the cement-free refractory particulate composition comprises refractory aggregate material such as bauxite and/or alumina, for example, calcined, sintered and/or fused alumina.
9. The castable refractory composition according to any preceding paragraph, wherein the cement-free refractory particulate composition is substantially free of silicon carbide.
10. The castable refractory composition according to any preceding paragraph, wherein the cement-free refractory particulate composition is substantially free of zirconium silicate.
11. The castable refractory composition according to any preceding paragraph, wherein the cement-free refractory particulate composition comprises: from about 50 wt. % to about 70 wt. % of bauxite; and from about 20 wt. % to about 40 wt. % of alumina, for example, calcined, sintered and/or fused alumina.
12. The castable refractory composition according to paragraph 11, wherein the cement-free refractory particulate composition comprises: from about 10 wt. % to about 30 wt. % of bauxite having particle size from about 3 mm to about 6 mm, for example, a d₅₀ from about 3 mm to about 6 mm; from about 15 wt. % to about 35 wt. % of bauxite having a particle size from about 1 mm to about 3 mm, for example, a d₅₀ from about 1 mm to about 3 mm; from about 5 wt. % to about 25 wt. % of bauxite having a particle size from about 0 mm to about 1 mm, for example, a d₅₀ no greater than about 1 mm; from about 5 wt. % to about 25 wt. % of fused alumina, for example, brown fused alumina, for example, having a particle size no greater than about 0.5 mm, for example, a d₅₀ no greater than about 0.5 mm; and from about 10 wt. % to about 30 wt. % of calcined alumina, for example, having a d₅₀ from about 4 µm to about 6 µm.
13. The castable refractory composition according to paragraph 11 or paragraph 12, wherein the cement-free refractory particulate composition comprises microsilica, for example, from about 0.1 wt. % to about 2 wt. % microsilica.
14. The castable refractory composition according to any of paragraphs 11 to 13, wherein the cement-free refractory particulate composition comprises a deflocculant, for example, from about 0.01 wt. % to about 1 wt. % of a deflocculant.
15. The castable refractory composition according to any of paragraphs 11 to 14, wherein the cement-free refractory particulate composition comprises a colloidal silica activator, for example, from about 0.01 wt. % to about 1 wt. % of the colloidal silica activator, optionally wherein the colloidal silica activator is magnesium oxide.
16. The castable refractory composition according to any of paragraphs 11 to 15, wherein the cement-free refractory particulate composition comprises from about 1 wt. % to about 20 wt. %, for example, from about 2 wt. % to about 10 wt. %, of the metaphosphate-providing component and/or the orthophosphate-providing component.
17. The castable refractory composition according to any preceding paragraph, wherein, prior to drying of the castable refractory composition, the castable refractory composition comprises: from about 70 wt. % to about 93 wt. % of the cement-free refractory particulate composition; and from about 5 wt. % to about 15 wt. % of the sol binder; optionally wherein the castable refractory composition comprises from about 1 wt. % to about 10 wt. %, for example, from about 3 wt. % to about 9 wt. %, of the metaphosphate-providing component and/or the orthophosphate-providing component.
18. The castable refractory composition according to any preceding paragraph, wherein the sol binder: (a) comprises the metaphosphate-providing component and/or the orthophosphate-providing component; (b) comprises colloidal silica, optionally wherein the colloidal silica has a specific surface area no greater than about 200 m²/g, for example, no greater than about 150 m²/g; (c) is substantially free of silicon carbide; (d) is substantially free of zirconium silicate; and/or (e) prior to drying, comprises: from about 20 wt. % to about 50 wt. %, for example, from about 30 w. % to about 50 wt. %, or from about 35 wt. % to about 45 wt. %, colloidal silica; and from about 50 wt. % to about 80 wt. %, for example, from about 50 wt. % to about 70 wt. %, or from about 55 wt. % to about 65 wt. %, water; and/or the sol binder has an apparent viscosity at 25°C and at a shear rate of 50 s⁻¹, prior to drying, of no greater than about 35 mPa·s, for example, no greater than about 20 mPa·s, or no greater than about 15 mPa·s, or no greater than about 10 mPa·s.
19. A method of making a castable refractory composition, the method comprising combining: a cement-free refractory particulate composition; and a sol binder; wherein the method comprises including a metaphosphate-providing component and/or an orthophosphate-providing component in the castable refractory composition.
20. The method according to paragraph 19, wherein the metaphosphate-providing component is a metaphosphate salt such as aluminium metaphosphate and/or the orthophosphate-providing component is an orthophosphate salt such as aluminium orthophosphate.
21. The method according to paragraph 19 or paragraph 20, wherein the sol binder comprises colloidal silica, optionally wherein the colloidal silica has a specific surface area no greater than about 200 m²/g, for example, no greater than about 150 m²/g.
22. The method according to paragraph 21, wherein the sol binder, prior to drying, comprises: from about 20 wt. % to about 50 wt. %, for example, from about 30 w. % to about 50 wt. %, or from about 35 wt. % to about 45 wt. %, colloidal silica; and from about 50 wt. % to about 80 wt. %, for example, from about 50 wt. % to about 70 wt. %, or from about 55 wt. % to about 65 wt. %, water.
23. The method according to any of paragraphs 19 to 22, wherein the sol binder has an apparent viscosity at 25°C and at a shear rate of 50 s⁻¹, prior to drying of the sol binder, of no greater than about 35 mPa·s, for example, no greater than about 20 mPa·s, or no greater than about 15 mPa·s, or no greater than about 10 mPa·s.
24. The method according to any of paragraphs 19 to 23, wherein the metaphosphate-providing component and/or the orthophosphate-providing component is present in the castable refractory composition in an amount from about 1 wt. % to about 10 wt. %, for example, from about 3 wt. % to about 9 wt. %, based on the total weight of the castable refractory composition prior to drying.
25. The method according to any of paragraphs 19 to 24, wherein the cement-free refractory particulate composition comprises the metaphosphate-providing component and/or the orthophosphate-providing component.
26. The method according to any of paragraphs 19 to 25, wherein the cement-free refractory particulate composition comprises refractory aggregate material such as bauxite and/or alumina, for example, calcined, sintered and/or fused alumina.
27. The method according to any of paragraphs 19 to 26, wherein the cement-free refractory particulate composition is substantially free of silicon carbide.
28. The method according to any of paragraphs 19 to 27, wherein the cement-free refractory particulate composition is substantially free of zirconium silicate.
29. The method according to any of paragraphs 18 to 28, wherein the cement-free refractory particulate composition comprises: from about 50 wt. % to about 70 wt. % of bauxite; and from about 20 wt. % to about 40 wt. % of alumina, for example, calcined, sintered and/or fused alumina.
30. The method according to paragraph 29, wherein the cement-free refractory particulate composition comprises: from about 10 wt. % to about 30 wt. % of bauxite having a particle size from about 3 mm to about 6 mm, for example, a d₅₀ from about 3 mm to about 6 mm; from about 15 wt. % to about 35 wt. % of bauxite having a particle size from about 1 mm to about 3 mm, for example, a d₅₀ from about 1 mm to about 3 mm; from about 5 wt. % to about 25 wt. % of bauxite having a particle size from about 0 mm to about 1 mm, for example, a d₅₀ no greater than about 1 mm; from about 5 wt. % to about 25 wt. % of fused alumina, for example, brown fused alumina, for example, having a particle size no greater than about 0.5 mm; and from about 10 wt. % to about 30 wt. % of calcined alumina, for example, having a d₅₀ from about 4 µm to about 6 µm.
31. The method according to paragraph 29 or paragraph 30, wherein the cement-free refractory particulate composition comprises microsilica, for example, from about 0.1 wt. % to about 2 wt. % microsilica.
32. The method according to any of paragraphs 29 to 31, wherein the cement-free refractory particulate composition comprises a deflocculant, for example, from about 0.01 wt. % to about 1 wt. % of a deflocculant.
33. The method according to any of paragraphs 29 to 32, wherein the cement-free refractory particulate composition comprises a colloidal silica activator, for example, from about 0.01 wt. % to about 1 wt. % of the colloidal silica activator, optionally wherein the colloidal silica activator is magnesium oxide.
34. The method according to any of paragraphs 29 to 33, wherein the cement-free refractory particulate composition comprises from about 1 wt. % to about 20 wt. %, for example, from about 2 wt. % to about 10 wt. %, or from about 4 wt. % to about 8 wt. %, of the metaphosphate-providing component and/or the orthophosphate-providing component.
35. The method according to any of paragraphs 19 to 34, wherein the method comprises mixing: from about 70 wt. % to about 93 wt. % of the cement-free refractory particulate composition; and from about 5 wt. % to about 15 wt. % of the sol binder; optionally wherein the castable refractory composition comprises from about 1 wt. % to about 10 wt. %, for example, from about 3 wt. % to about 9 wt. %, of the metaphosphate-providing component and/or the orthophosphate-providing component.
36. Sol binder for use in making the castable refractory composition according to any of paragraphs 1 to 18, the sol binder comprising a metaphosphate-providing component and/or an orthophosphate-providing component.
37. The sol binder according to paragraph 36, wherein the metaphosphate-providing component is a metaphosphate salt such as aluminium metaphosphate and/or the orthophosphate-providing component is an orthophosphate salt such as aluminium orthophosphate.
38. The sol binder according to paragraph 36 or paragraph 37, wherein the sol binder comprises colloidal silica, optionally wherein the colloidal silica has a specific surface area no greater than about 200 m²/g, for example, no greater than about 150 m²/g.
39. The sol binder according to paragraph 38, wherein the sol binder, prior to drying, comprises: from about 20 wt. % to about 50 wt. %, for example, from about 30 w. % to about 50 wt. %, or from about 35 wt. % to about 45 wt. %, colloidal silica; and from about 50 wt. % to about 80 wt. %, for example, from about 50 wt. % to about 70 wt. %, or from about 55 wt. % to about 65 wt. %, water.
40. The sol binder according to paragraph 38 or paragraph 39, wherein the sol binder has an apparent viscosity at 25°C and at a shear rate of 50 s⁻¹, prior to drying, of no greater than about 35 mPa·s, for example, no greater than about 20 mPa·s, or no greater than about 15 mPa·s, or no greater than about 10 mPa·s.
41. The sol binder according to any of paragraphs 36 to 40, wherein the sol binder is substantially free of silicon and/or substantially free of zirconium carbide.
42. A dry sol binder composition for use in making the sol binder according to any of paragraphs 36 to 31, the dry sol binder composition comprising: a cement-free binder; and
   a metaphosphate-providing component and/or an orthophosphate-providing component.
43. The dry sol binder composition according to paragraph 42, wherein the metaphosphate-providing component is a metaphosphate salt such as aluminium metaphosphate and/or the orthophosphate-providing component is an orthophosphate salt such as aluminium orthophosphate.
44. The dry sol binder composition according to paragraph 42 or paragraph 43, wherein the cement-free binder is colloidal silica, for example, colloidal silica having a specific surface area no greater than about 200 m²/g, for example, no greater than about 150 m²/g.
45. A method of making a sol binder, the method comprising mixing the dry sol binder composition according to paragraph 42 or paragraph 44 with water to form a sol.
46. A cement-free refractory particulate composition for use in making the castable refractory composition according to any of paragraphs 1 to 18, the cement-free refractory particulate composition comprising: refractory aggregate material such as bauxite and/or alumina, for example calcined, sintered and/or fused alumina; and a metaphosphate-providing component and/or an orthophosphate-providing component.
47. The cement-free refractory particulate composition according to paragraph 46, wherein the metaphosphate-providing component is a metaphosphate salt such as aluminium metaphosphate and/or the orthophosphate-providing component is an orthophosphate salt such as aluminium orthophosphate.
48. The cement-free refractory particulate composition according to paragraph 46 or paragraph 47, wherein the cement-free refractory particulate composition is substantially free of silicon carbide.
49. The cement-free refractory particulate composition according to any of paragraphs 46 to 48, wherein the cement-free refractory particulate composition is substantially free of zirconium silicate.
50. The cement-free refractory particulate composition according to any of paragraphs 46 to 49, wherein the cement-free refractory particulate composition comprises: from about 50 wt. % to about 70 wt. % of bauxite; and from about 20 wt. % to about 40 wt. % of alumina, for example, calcined, sintered and/or fused alumina.
51. The cement-free refractory particulate composition according to any of paragraphs 46 to 50, wherein the refractory particulate composition comprises: from about 10 wt. % to about 30 wt. % of bauxite having a particle size from about 3 mm to about 6 mm, for example, a d₅₀ from about 3 mm to about 6 mm; from about 15 wt. % to about 35 wt. % of bauxite having a particle size from about 1 mm to about 3 mm, for example, a d₅₀ from about 1 mm to about 3 mm; from about 5 wt. % to about 25 wt. % of bauxite having a particle size from about 0 mm to about 1 mm, for example, a d₅₀ no greater than about 1 mm; from about 5 wt. % to about 25 wt. % of fused alumina, for example, brown fused alumina, for example, having a particle size no greater than about 0.5 mm, for example, a d₅₀ no greater than about 0.5 mm; and from about 10 wt. % to about 30 wt. % of calcined alumina, for example, having a d₅₀ from about 4 µm to about 6 µm.
52. The cement-free refractory particulate composition according to any of paragraphs 46 to 51, wherein the cement-free refractory particulate composition comprises microsilica, for example, from about 0.1 wt. % to about 2 wt. % microsilica.
53. The cement-free refractory particulate composition according to any of paragraphs 46 to 52, wherein the cement-free refractory particulate composition comprises a deflocculant, for example, from about 0.01 wt. % to about 1 wt. % of a deflocculant.
54. The cement-free refractory particulate composition according to any of paragraphs 46 to 53, wherein the cement-free refractory particulate composition comprises a colloidal silica activator, for example, from about 0.01 wt. % to about 1 wt. % of the colloidal silica activator, optionally wherein the colloidal silica activator is magnesium oxide.
55. The cement-free refractory particulate composition according to any of paragraphs 46 to 54, wherein the cement-free refractory particulate composition comprises from about 1 wt. % to about 20 wt. %, for example, from about 2 wt. % to about 10 wt. %, or from about 4 wt. % to about 8 wt. %, of the metaphosphate-providing component and/or the orthophosphate-providing component.
56. A method of making a refractory article, the method comprising: forming an article from the castable refractory composition according to any of paragraphs 1 to 18 or made by the method according to any of paragraphs 19 to 35; drying the article; and, optionally, firing the article.
57. The method according to paragraph 56, wherein forming the article from the castable refractory composition comprises using one or more techniques selected from casting, vibration casting, wet gunning, dry gunning, self-flowing, ramming, rodding, or patching.
58. The method according to paragraph 56 or paragraph 57, wherein the refractory article is a monolithic refractory lining.
59. A refractory article, such as a monolithic refractory lining, obtained or obtainable by the method of any of paragraphs 56 to 58.
60. The refractory article according to paragraph 59, wherein the refractory article: has a modulus of rupture, MOR, measured according to DIN EN 1402-6 after heating at 800°C for 5 hours, of no less than about 10 MPa; has a cold crushing strength, CCS, measured according to DIN EN 1402-6 after heating at 800°C for 5 hours, of no less than about 140 MPa; is heatable at a rate no less than about 50°C/hour during initial heating up of the refractory article after installation; has a refractoriness under load, RUL, measured according to ISO 1893, of no less than about 1400°C, for example, no less than about 1500°C; is resistant to metal infiltration, such as aluminium infiltration, at temperatures of 1200°C or more; has a bulk density, measured according to DIN EN 1402-6, from about 2.80 g/cm³ to about 3.00 g/cm³; has a water absorption, measured according to DIN EN 1402-6, from about 4.5 % to about 7.0 %; and/or has an open porosity, measured according to DIN EN 1402-6, from about 10 % to about 20 %.
61. Use of a metaphosphate-providing component and/or an orthophosphate-providing component in a cement-free sol-based castable refractory composition to improve resistance to metal infiltration at elevated temperatures of a refractory article formed from the cement-free sol-based castable refractory composition.
62. The use according to paragraph 61, wherein the metaphosphate-providing component is a metaphosphate salt such as aluminium metaphosphate and/or the orthophosphate-providing component is an orthophosphate salt such as aluminium orthophosphate.
63. The use according to paragraph 61 or paragraph 62, wherein the cement-free sol-based castable refractory composition comprises a binder sol comprising colloidal silica.
64. The use according to any of paragraphs 61 to 63, wherein the metal is aluminium or an aluminium alloy.

### EXAMPLES

### Example 1

Nine cement-free refractory particulate compositions R1 to R9 were prepared having the compositions, measured in parts by weight (out of a total of 1000 parts), set out in Table 1.

Nine corresponding castable refractory compositions C1 to C9 were prepared by combining the refractory particulate compositions R1 to R9 with a sol binder selected from Binder 1 or Binder 2 according to the compositions set out in Table 2.

Binder 1 was KÖSTROSOL^{®} 1040 P-FS and Binder 2 was KÖSTROSOL^{®} 2040 FS, both available from CWK Chemiewerk Bad Köstritz GmbH, Germany. Both Binder 1 and Binder 2 were opalescent aqueous colloidal dispersions of amorphous silicon dioxide nanoparticles including from 4.5 to 5.5 wt. % monoethylene glycol antifreeze agent. Binder 1 and Binder 2 differed primarily in terms of the specific surface area of the silicon dioxide nanoparticles (233 m²/g for Binder 1 and 140 m²/g for Binder 2), the free alkalinity as Na₂O (0.43 wt. % for Binder 1 and 0.26 wt. % for Binder 2), the density at 20°C (1.293 g/cm³ for Binder 1 and 1.288 g/cm³ for Binder 2) and the apparent viscosity measured at 25°C and at a strain rate of 50 s⁻¹ (22 mPa·.s for Binder 1 and 9 mPa·.s for Binder 2). Both Binder 1 and Binder 2 had a pH at 25°C of 9.6 and a residue of 40 wt. %.

Various properties of the nine castable refractory compositions C1 to C9 were measured and are provided in Table 3. The initial flow was measured for the as-prepared (i.e., wet) castable refractory compositions. Test pieces were then prepared by shaping, setting and drying the castable refractory compositions. Properties of the test pieces were measured following heating at 110°C for 24 hours, heating at 800°C for 5 hours and heating at 1200°C for 5 hours.

Oxidation of silicon carbide was observed when castable refractory compositions C2, C3 and C4 were heated to 800°C, as shown in Figure 1. Use of Binder 2 led to improved initial flow properties. Castable refractory composition C7 was able to achieve a cold crushing strength greater than 140 MPa after heating to 800°C. Castable refractory composition C9 was able to achieve an initial flow of 159 % and a cold crushing strength of 98 MPa after heating to 800°C.

**Table 1.**

| | **R1** | **R2** | **R3** | **R4** | **R5** | **R6** | **R7** | **R8** | **R9** |
|---|---|---|---|---|---|---|---|---|---|
| **Bauxite (3-6 mm)** | 200 | 200 | 200 | 200 | 200 | - | 200 | 200 | 200 |
| **Bauxite (1-3mm)** | 250 | 250 | 250 | 250 | 250 | - | 250 | 250 | 250 |
| **Bauxite (0-1 mm)** | 158.5 | 159 | 159 | 159 | 158.5 | - | 158.5 | 158.5 | 158.5 |
| **High-density bauxite** (3-6 mm) | - | - | - | - | - | 200 | - | - | - |
| **High-density bauxite (1-3 mm)** | - | - | - | - | - | 250 | - | - | - |
| **High density bauxite (0-1 mm)** | - | - | - | - | - | 158.5 | - | - | - |
| **Brown fused alumina (0-0.5 mm)** | 135 | 135 | 135 | 135 | 120 | 120 | 120 | 135 | 120 |
| **Calcined alumina** | 200 | 135 | 155 | 175 | 200 | 200 | 200 | 135 | 200 |
| **Silicon carbide (95%, 0-0.35 mm)** | 30 | 30 | 30 | 30 | - | - | - | 30 | - |
| **Microsilica (maximum 0.5 % coarse particles > 45 µm) ^{†††}** | 10 | 10 | 10 | 10 | 10 | 10 | 10 | 10 | 10 |
| **Calcium fluoride** | 15 | - | - | - | - | - | - | - | - |
| **Deflocculant*** | 0.5 | 0.5 | 0.5 | 0.5 | 0.5 | 0.5 | 0.5 | 0.5 | 0.5 |
| **Aluminium metaphosphate**** | - | 80 | 60 | 40 | 60 | 60 | 60 | 80 | - |
| **Aluminium orthophosphate**^{†} | - | - | - | - | - | - | - | - | 60 |
| **Magnesium oxide^{††}** | 1 | 1 | 1 | 1 | 1 | 1 | 1 | 1 | 1 |
| **Total weight** | 1000 | 1000 | 1000 | 1000 | 1000 | 1000 | 1000 | 1000 | 1000 |

| | | | | | | | | | |
|---|---|---|---|---|---|---|---|---|---|
| * Castament^{®} FS 20 available from BASF Constructions Solutions GmbH, Germany. ** M 16-04 aluminium metaphosphate available from Chemische Fabrik Budenheim KG, Germany.† Aluminium orthophosphate available from Tatichem, Shanghai MintChem Development Co.,Ltd, China. †† nedMag^{®} 99 dead burned magnesium oxide available from Nedmag B.V., the Netherlands. ††† Elkem^{®} 971 U microsilica, available from Elkem Silicon Products, Norway. | | | | | | | | | |

**Table 2.**

| | **C1** | **C2** | **C3** | **C4** | **C5** | **C6** | **C7** | **C8** | **C9** |
|---|---|---|---|---|---|---|---|---|---|
| **Refractory particulate** | R1 | R2 | R3 | R4 | R5 | R6 | R7 | R8 | R9 |
| **Binder sol** | Binder 1 | Binder 1 | Binder 1 | Binder 1 | Binder 1 | Binder 1 | Binder 2 | Binder 2 | Binder 2 |
| **Amount of binder sol added (in wt. %, in addition to 100 wt. % of dry products)** | 9.0 | 10.3 | 9.4 | 8.8 | 10.0 | 10.0 | 9.4 | 9.3 | 9.4 |

**Table 3.**

| | **C1** | **C2** | **C3** | **C4** | **C5** | **C6** | **C7** | **C8** | **C9** |
|---|---|---|---|---|---|---|---|---|---|
| **Initial flow (%)** | 138 | 118 | 118 | 105 | 121 | 123 | 159 | 139 | 159 |

| **After heating at 110°C for 24 hours** | | | | | | | | | |
|---|---|---|---|---|---|---|---|---|---|
| **Modulus of rupture (MPa)** | 4.7 | 3.1 | 3.6 | 4.0 | 2.8 | 3.0 | 4.5 | - | 4.1 |
| **Cold crushing strength (MPa)** | 49 | 33 | 36 | 41 | 29 | 27 | 38 | - | 31 |
| **Bulk density (g/cm³)** | 2.95 | 2.82 | 2.85 | 2.90 | 2.88 | 2.86 | 2.94 | - | 2.94 |
| **Water absorption (%)** | 6.2 | 6.6 | 6.5 | 6.0 | 6.5 | 6.4 | 5.8 | - | 5.9 |
| **Open porosity (%)** | 18.1 | 18.6 | 18.4 | 17.4 | 18.6 | 18.3 | 17.0 | - | 17.3 |

| **After heating at 800°C for 5 hours** | | | | | | | | | |
|---|---|---|---|---|---|---|---|---|---|
| **Modulus of rupture (MPa)** | 10.8 | 10.9 | 12.0 | 11.8 | 12.1 | 13.8 | 16.5 | 15.0 | 12.8 |
| **Cold crushing strength (MPa)** | 106 | 89 | 99 | 101 | 101 | 97 | 146 | 120 | 98 |
| **Bulk density (g/cm³)** | 2.94 | 2.79 | 2.84 | 2.88 | 2.87 | 2.86 | 2.94 | - | 2.91 |
| **Water absorption (%)** | 6.4 | 6.2 | 6.2 | 6.2 | 6.0 | 5.8 | 5.0 | - | 6.1 |
| **Open porosity (%)** | 18.8 | 17.4 | 17.6 | 17.9 | 17.2 | 16.6 | 14.7 | - | 17.8 |

| **After heating at 1200°C for 5 hours** | | | | | | | | | |
|---|---|---|---|---|---|---|---|---|---|
| **Modulus of rupture (MPa)** | 28.5 | 13.7 | 16.3 | 16.5 | 16.1 | 19.2 | 19.0 | 16.3 | 18.8 |
| **Cold crushing strength (MPa)** | 180 | 103 | 112 | 128 | 120 | 133 | 155 | 142 | 137 |
| **Bulk density (g/cm³)** | 2.94 | 2.80 | 2.84 | 2.88 | 2.87 | 2.89 | 2.93 | - | 2.92 |
| **Water absorption (%)** | 6.0 | 6.1 | 6.2 | 6.1 | 6.0 | 5.2 | 5.0 | - | 6.0 |
| **Open porosity (%)** | 17.6 | 17.0 | 17.6 | 17.6 | 17.1 | 15.0 | 14.7 | - | 17.5 |

Test crucibles were formed from castable refractory compositions C1 and C7. Another test crucible was formed from a castable refractory composition C1' prepared in the same way as castable refractory composition C1, except with Binder 1 replaced by Binder 2. The test crucibles were pre-fired at 1200°C and then used as molds for molten aluminium. After cooling to room temperature, cross-sections were cut through the filled test crucibles and the sections photographed. As shown in Figure 2, crucibles formed from C1 (Figure 2(a)) and C1' (Figure 2(b)) exhibited extensive aluminium infiltration into the refractory materials, whereas no aluminium infiltration was observed for the crucible formed from C7 (Figure 2(c)).

The chemical composition of castable refractory composition C7 is provided in Table 4.

**Table 4.**

| **Component** | **Amount (wt. %)** |
|---|---|
| Al₂O₃ | 83 |
| SiO₂ | 8.3 |
| Fe₂O₃ | 1 |
| CaO | 0.2 |
| MgO | 0.3 |
| Na₂O | 0.1 |
| K₂O | 0.1 |
| P₂O₅ | 4.7 |
| TiO₂ | 2.4 |

## Claims

1. A castable refractory composition comprising:
a cement-free refractory particulate composition; and
a sol binder;
wherein the castable refractory composition comprises a metaphosphate-providing component and/or an orthophosphate-providing component.

2. A method of making a castable refractory composition, the method comprising combining:
a cement-free refractory particulate composition; and
a sol binder;
wherein the method comprises including a metaphosphate-providing component and/or an orthophosphate-providing component in the castable refractory composition.

3. The castable refractory composition according to claim 1 or the method according to claim 2, wherein:
(a) the metaphosphate-providing component is a metaphosphate salt such as aluminium metaphosphate;
(b) the orthophosphate-providing component is an orthophosphate salt such as aluminium orthophosphate; and/or
(c) the metaphosphate-providing component and/or the orthophosphate-providing component is present in the castable refractory composition in an amount from about 1 wt. % to about 10 wt. %, for example, from about 3 wt. % to about 9 wt. %, based on the total weight of the castable refractory composition prior to drying.

4. The castable refractory composition or method according to any preceding claim, wherein the sol binder:
(a) comprises colloidal silica, optionally wherein the colloidal silica has a specific surface area no greater than about 200 m²/g, for example, no greater than about 150 m²/g;
(b) comprises, prior to drying of the sol binder: from about 20 wt. % to about 50 wt. %, for example, from about 30 wt. % to about 50 wt. %, or from about 35 wt. % to about 45 wt. %, colloidal silica; and
from about 50 wt. % to about 80 wt. %, for example, from about 50 wt. % to about 70 wt. %, or from about 55 wt. % to about 65 wt. %, water; and/or
(c) has an apparent viscosity at 25°C and at a shear rate of 50 s⁻¹, prior to drying of the sol binder, of no greater than about 35 mPa·s, for example, no greater than about 20 mPa·s, or no greater than about 15 mPa·s, or no greater than about 10 mPa·s.

5. The castable refractory composition or method according to any preceding claim, wherein the cement-free refractory particulate composition:
(a) comprises the metaphosphate-providing component and/or the orthophosphate-providing component;
(b) comprises refractory aggregate material such as bauxite and/or alumina, for example, calcined, sintered and/or fused alumina;
(c) is substantially free of silicon carbide; and/or
(d) is substantially free of zirconium silicate; and/or
wherein the sol binder:
(a) comprises the metaphosphate-providing component and/or the orthophosphate-providing component;
(b) comprises colloidal silica, optionally wherein the colloidal silica has a specific surface area no greater than about 200 m²/g, for example, no greater than about 150 m²/g;
(c) is substantially free of silicon carbide;
(d) is substantially free of zirconium silicate; and/or
(e) prior to drying, comprises: from about 20 wt. % to about 50 wt. %, for example, from about 30 w. % to about 50 wt. %, or from about 35 wt. % to about 45 wt. %, colloidal silica; and from about 50 wt. % to about 80 wt. %, for example, from about 50 wt. % to about 70 wt. %, or from about 55 wt. % to about 65 wt. %, water; and/or the sol binder has an apparent viscosity at 25°C and at a shear rate of 50 s⁻¹, prior to drying, of no greater than about 35 mPa·s, for example, no greater than about 20 mPa·s, or no greater than about 15 mPa·s, or no greater than about 10 mPa·s.

6. The castable refractory composition or method according to any preceding claim, wherein the cement-free refractory particulate composition comprises:
from about 50 wt. % to about 70 wt. % of bauxite; and
from about 20 wt. % to about 40 wt. % of alumina, for example, calcined,
sintered and/or fused alumina;
for example, wherein the cement-free refractory particulate composition comprises:
from about 10 wt. % to about 30 wt. % of bauxite having a particle size from about 3 mm to about 6 mm;
from about 15 wt. % to about 35 wt. % of bauxite having a particle size from about 1 mm to about 3 mm;
from about 5 wt. % to about 25 wt. % of bauxite having a particle size from about 0 mm to about 1 mm;
from about 5 wt. % to about 25 wt. % of fused alumina, for example, brown fused alumina, for example, having a particle size no greater than about 0.5 mm; and
from about 10 wt. % to about 30 wt. % of calcined alumina, for example, having a d₅₀ from about 4 µm to about 6 µm.

7. The castable refractory composition or method according to claim 6, wherein the cement-free refractory particulate composition comprises:
(a) microsilica, for example, from about 0.1 wt. % to about 2 wt. % microsilica;
(b) a deflocculant, for example, from about 0.01 wt. % to about 1 wt. % of a deflocculant; and/or
(c) a colloidal silica activator, for example, from about 0.01 wt. % to about 1 wt. % of the colloidal silica activator, optionally wherein the colloidal silica activator is magnesium oxide.

8. The castable refractory composition or method according to claim 6 or claim 7, wherein the cement-free refractory particulate composition comprises from about 1 wt. % to about 20 wt. %, for example, from about 2 wt. % to about 10 wt. %, or from about 4 wt. % to about 8 wt. %, of the metaphosphate-providing component and/or the orthophosphate-providing component.

9. The castable refractory composition or method according to any preceding claim, wherein, prior to drying of the castable refractory composition, the castable refractory composition comprises:
from about 70 wt. % to about 93 wt. % of the cement-free refractory particulate composition; and
from about 5 wt. % to about 15 wt. % of the sol binder;
optionally wherein the castable refractory composition comprises from about 1 wt. % to about 10 wt. %, for example, from about 3 wt. % to about 9 wt. %, of the metaphosphate-providing component and/or the orthophosphate-providing component.

10. A cement-free refractory particulate composition for use in making the castable refractory composition or in the method according to any of claims 1 to 9, the cement-free refractory particulate composition comprising:
refractory aggregate material such as bauxite and/or alumina, for example calcined, sintered and/or fused alumina; and
the metaphosphate-providing component and/or the orthophosphate-providing component;
optionally wherein:
(a) the metaphosphate-providing component is a metaphosphate salt such as aluminium metaphosphate and/or the orthophosphate-providing component is an orthophosphate salt such as aluminium orthophosphate;
(b) the cement-free refractory particulate composition is substantially free of silicon carbide;
(c) the cement-free refractory particulate composition is substantially free of zirconium silicate;
(d) the cement-free refractory particulate composition comprises:
from about 50 wt. % to about 70 wt. % of bauxite; and
from about 20 wt. % to about 40 wt. % of alumina, for example, calcined,
sintered and/or fused alumina;
(e) the refractory particulate composition comprises:
from about 10 wt. % to about 30 wt. % of bauxite having a particle size from about 3 mm to about 6 mm;
from about 15 wt. % to about 35 wt. % of bauxite having a particle size from about 1 mm to about 3 mm;
from about 5 wt. % to about 25 wt. % of bauxite having a particle size from about 0 mm to about 1 mm;
from about 5 wt. % to about 25 wt. % of fused alumina, for example, brown fused alumina, for example, having a particle size no greater than about 0.5 mm; and
from about 10 wt. % to about 30 wt. % of calcined alumina, for example,
having a d₅₀ from about 4 µm to about 6 µm;
(f) the cement-free refractory particulate composition comprises microsilica, for example, from about 0.1 wt. % to about 2 wt. % microsilica;
(g) the cement-free refractory particulate composition comprises a deflocculant, for example, from about 0.01 wt. % to about 1 wt. % of a deflocculant;
(h) the cement-free refractory particulate composition comprises a colloidal silica activator, for example, from about 0.01 wt. % to about 1 wt. % of the colloidal silica activator, optionally wherein the colloidal silica activator is magnesium oxide; and/or
(i) the cement-free refractory particulate composition comprises from about 1 wt. % to about 20 wt. %, for example, from about 2 wt. % to about 10 wt. %, or from about 4 wt. % to about 8 wt. %, of the metaphosphate-providing component and/or the orthophosphate-providing component.

11. Sol binder for use in making the castable refractory composition or in the method according to any of claims 1 to 9, the sol binder comprising the metaphosphate-providing component and/or the orthophosphate-providing component,
optionally wherein:
(a) the metaphosphate-providing component is a metaphosphate salt such as aluminium metaphosphate and/or the orthophosphate-providing component is an orthophosphate salt such as aluminium orthophosphate;
(b) the sol binder comprises colloidal silica, optionally wherein the colloidal silica has a specific surface area no greater than about 200 m²/g, for example, no greater than about 150 m²/g;
(c) the sol binder is substantially free of silicon carbide;
(d) the sol binder is substantially free of zirconium silicate;
(e) the sol binder, prior to drying, comprises:
from about 20 wt. % to about 50 wt. %, for example, from about 30 w. % to about 50 wt. %, or from about 35 wt. % to about 45 wt. %, colloidal silica; and
from about 50 wt. % to about 80 wt. %, for example, from about 50 wt. % to about 70 wt. %, or from about 55 wt. % to about 65 wt. %, water; and/or
(f) the sol binder has an apparent viscosity at 25°C and at a shear rate of 50 s⁻¹, prior to drying, of no greater than about 35 mPa·s, for example, or no greater than about 20 mPa·s, or no greater than about 15 mPa·s, or no greater than about 10 mPa·s.

12. A dry sol binder composition for use in making the sol binder according to claim 10, the dry sol binder composition comprising:
a cement-free binder; and
the metaphosphate-providing component and/or the orthophosphate-providing component;
optionally wherein:
(a) the metaphosphate-providing component is a metaphosphate salt such as aluminium metaphosphate and/or the orthophosphate-providing component is an orthophosphate salt such as aluminium orthophosphate; and/or
(b) the cement-free binder is colloidal silica, for example, colloidal silica having a specific surface area no greater than about 200 m²/g, for example, no greater than about 150 m²/g.

13. A method of making a refractory article, such as a monolithic refractory lining, the method comprising:
forming an article from the castable refractory composition, or made by the method according to, any of claims 1 to 9;
drying the article; and, optionally,
firing the article;
further optionally wherein forming the article from the castable refractory composition comprises using one or more techniques selected from casting, vibration casting, wet gunning, dry gunning, self-flowing, ramming, rodding, or patching.

14. A refractory article, such as a monolithic refractory lining, obtained or obtainable by the method of 13, optionally wherein the refractory article:
(a) has a modulus of rupture, MOR, measured according to DIN EN 1402-6 after heating at 800°C for 5 hours, of no less than about 10 MPa;
(b) has a cold crushing strength, CCS, measured according to DIN EN 1402-6after heating at 800°C for 5 hours, of no less than about 140 MPa;
(c) is heatable at a rate no less than about 50°C/hour during initial heating up of the refractory article after installation;
(d) has a refractoriness under load, RUL, measured according to ISO 1893, of no less than about 1400°C, for example, no less than about 1500°C;
(e) is resistant to metal infiltration, such as aluminium infiltration, at temperatures of 1200°C or more;
(f) has a bulk density, measured according to DIN EN 1402-6, from about 2.80 g/cm³ to about 3.00 g/cm³;
(g) has a water absorption, measured according to DIN EN 1402-6, from about 4.5 % to about 7.0 %; and/or
(h) has an open porosity, measured according to DIN EN 1402-6, from about 10 % to about 20 %.

15. Use of a metaphosphate-providing component and/or an orthophosphate-providing component in a cement-free sol-based castable refractory composition to improve resistance to metal infiltration at elevated temperatures of a refractory article formed from the cement-free sol-based castable refractory composition,
optionally wherein:
(a) the metaphosphate-providing component is a metaphosphate salt such as aluminium metaphosphate and/or the orthophosphate-providing component is an orthophosphate salt such as aluminium orthophosphate;
(b) the cement-free sol-based castable refractory composition comprises a binder sol comprising colloidal silica; and/or
(c) the metal is aluminium or an aluminium alloy.
